(19) Europäisches Patentamt
European Patent Office
Office européen des brevets

(11) **EP 4 455 779 A1**

(12) **EUROPEAN PATENT APPLICATION**

(43) Date of publication:
**30.10.2024 Bulletin 2024/44**

(21) Application number: **24156326.1**

(22) Date of filing: **07.02.2024**

(51) International Patent Classification (IPC):
**G03B 9/02** *(2021.01)*     **G02B 5/00** *(2006.01)*
**G03B 9/06** *(2021.01)*

(52) Cooperative Patent Classification (CPC):
**G03B 9/06; G02B 5/005; G03B 9/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.04.2023 US 202363462481 P**

(71) Applicant: **LARGAN Precision Co., Ltd.
Taichung City (TW)**

(72) Inventors:
• **CHANG, Yu-Tzu
  Taichung City, (R.O.C.) (TW)**
• **HSIAO, Hsiu-Yi
  Taichung City, (R.O.C.) (TW)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **OPTICAL LENS MODULE AND ELECTRONIC DEVICE**

(57)    An optical lens module (1) includes a lens element and an adjustable aperture module (30) disposed at object side of the lens element, and the adjustable aperture module (30) includes a blade assembly (320) and a driving component (330). The blade assembly (320) includes rotatable blades (321) disposed around an optical axis (OA) of the lens element to form a light passing aperture (OP). Each rotatable blade (321) includes a rotatable portion (321a) and a light blocking portion (321b). The light blocking portion (321b) extends and tapers away from the rotatable portion (321a). The rotatable portion (321a) has a positioning hole (3211) and a dynamic hole (3212). The positioning hole (3211) enables rotation of the rotatable blade (321), and the dynamic hole (3212) is disposed close to the positioning hole (3211). The driving component (330) includes a rotatable element (331) corresponding to the dynamic holes (3212) to rotate the rotatable blades (321), to thereby vary aperture size. The light blocking portion (321b) includes a protruding segment (3213) which extends and tapers toward the light passing aperture (OP).

FIG. 6

# Description

## BACKGROUND

Technical Field

The present disclosure relates to an optical lens module, more particularly to an optical lens module applicable to an electronic device.

Description of Related Art

With the development of semiconductor manufacturing technology, the performance of image sensors has been improved, and the pixel size thereof has been scaled down. Therefore, featuring high image quality becomes one of the indispensable features of an optical system nowadays. Furthermore, due to the rapid changes in technology, electronic devices equipped with optical systems are trending towards multi-functionality for various applications, and therefore the functionality requirements for the optical systems have been increasing.

In recent years, compact camera modules have been applied in various fields, such as portable devices (e.g., smartphones, action cameras), augmented reality and virtual reality head-mounted devices or aerial cameras. Moreover, the hardware of the compact camera modules has been continuously upgraded, such as larger image sensors and imaging lenses with higher image quality. However, using larger image sensors can provide users with better image quality but may result in background blurring. A conventional adjustable aperture module can be used to adjust the degree of background blurring and control the amount of light entering the imaging lens.

Generally, the aperture module includes multiple rotatable blades which form a light passing aperture. However, the light passing aperture, formed by the blades, does not have substantially the same shape as an aperture for an optical system, resulting in a difference between the actual optical performance of the imaging lens and the theoretical optical performance of the same. Accordingly, how to improve the adjustable aperture to meet the requirement of high-end-specification electronic devices is an important topic in this field nowadays.

## SUMMARY

According to one aspect of the present disclosure, an optical lens module includes at least one lens element and an adjustable aperture module. The lens element has an optical axis. The adjustable aperture module is disposed at an object side of the at least one lens element, and the adjustable aperture module includes a blade assembly and a driving component. The blade assembly includes a plurality of rotatable blades. The rotatable blades are rotatably disposed around the optical axis so as to form a light passing aperture. Each of the rotatable blades includes a rotatable portion and a light blocking portion. The rotatable portion is adjacent to the light blocking portion, and the light blocking portion extends and tapers in a direction away from the rotatable portion. The rotatable portion has a positioning hole and a dynamic hole. The positioning hole enables rotation of the corresponding rotatable blade with respect to the positioning hole, and the dynamic hole is disposed close to the positioning hole. The driving component includes a rotatable element. The rotatable element is disposed corresponding to the dynamic holes of the rotatable blades so as to rotate the rotatable blades, to thereby vary a size of the light passing aperture.

The light blocking portion of each rotatable blade includes a protruding segment, and the protruding segment extends and tapers toward the light passing aperture. When a maximum height of the protruding segment is h0, the following condition is satisfied:

$$0.08 \text{ mm} < h0 \leq 0.50 \text{ mm}.$$

According to another aspect of the present disclosure, an optical lens module includes at least one lens element and an adjustable aperture module. The lens element has an optical axis. The adjustable aperture module is disposed at an object side of the at least one lens element, and the adjustable aperture module includes a blade assembly, a driving component and a fixed aperture element. The blade assembly includes a plurality of rotatable blades. The rotatable blades are rotatably disposed around the optical axis so as to form a light passing aperture. Each of the rotatable blades includes a rotatable portion and a light blocking portion. The rotatable portion is adjacent to the light blocking portion, and the light blocking portion extends and tapers in a direction away from the rotatable portion. The rotatable portion has a positioning hole and a dynamic hole. The positioning hole enables rotation of the corresponding rotatable blade with respect to the positioning hole, and the dynamic hole is disposed close to the positioning hole. The driving component includes a rotatable element. The rotatable element is disposed corresponding to the dynamic holes of the rotatable blades so as to rotate the rotatable blades, to thereby vary a size of the light passing aperture. The fixed aperture element has a fixed aperture. The fixed aperture element is disposed corresponding to the rotatable blades, and the fixed aperture element is disposed close to the blade assembly and coaxial with the blade assembly. The light blocking portion of each rotatable blade includes a protruding segment, and the protruding segment extends and tapers toward the light passing aperture. When a maximum height of the protruding segment is h0, the following condition is satisfied:

$$0.08 \text{ mm} < h0 \leq 0.50 \text{ mm}.$$

According to still another aspect of the present disclosure, an optical lens module includes at least one lens element and an adjustable aperture module. The lens element has an optical axis. The adjustable aperture module is disposed at an object side of the at least one lens element, and the adjustable aperture module includes a blade assembly, a driving component and a fixed aperture element. The blade assembly includes a plurality of rotatable blades. The rotatable blades are rotatably disposed around the optical axis so as to form a light passing aperture. Each of the rotatable blades includes a rotatable portion and a light blocking portion. The rotatable portion is adjacent to the light blocking portion, and the light blocking portion extends and tapers in a direction away from the rotatable portion. The rotatable portion has a positioning hole and a dynamic hole. The positioning hole enables rotation of the corresponding rotatable blade with respect to the positioning hole, and the dynamic hole is disposed close to the positioning hole. The driving component includes a rotatable element. The rotatable element is disposed corresponding to the dynamic holes of the rotatable blades so as to rotate the rotatable blades, to thereby vary a size of the light passing aperture. The fixed aperture element has a fixed aperture. The fixed aperture element is disposed corresponding to the rotatable blades, and the fixed aperture element is disposed close to the blade assembly and coaxial with the blade assembly. The light blocking portion of each rotatable blade includes at least three protruding segments, and each of the protruding segments extends and tapers toward the light passing aperture. When an average maximum height of the protruding segments of each rotatable blade is h0, the following condition is satisfied:

$$0.08 \text{ mm} < h0 \leq 0.50 \text{ mm}.$$

According to yet another aspect of the present disclosure, an optical lens module includes at least one lens element and an adjustable aperture module. The lens element has an optical axis. The adjustable aperture module is disposed at an object side of the at least one lens element, and the adjustable aperture module includes a blade assembly and a driving component. The blade assembly includes a plurality of rotatable blades. The rotatable blades are rotatably disposed around the optical axis so as to form a light passing aperture. Each of the rotatable blades includes a rotatable portion and a light blocking portion. The rotatable portion is adjacent to the light blocking portion, and the light blocking portion extends and tapers in a direction away from the rotatable portion. The rotatable portion has a positioning hole and a dynamic hole. The positioning hole enables rotation of the corresponding rotatable blade with respect to the positioning hole, and the dynamic hole is disposed close to the positioning hole. The driving component includes a rotatable element. The rotatable element is disposed corresponding to the dynamic holes of the rotatable blades so as to rotate the rotatable blades, to thereby vary a size of the light passing aperture. The light blocking portion of each rotatable blade includes at least three protruding segments, and each of the protruding segments extends and tapers toward the light passing aperture. When an average maximum height of the protruding segments of each rotatable blade is h0, the following condition is satisfied:

$$0.08 \text{ mm} < h0 \leq 0.50 \text{ mm}.$$

According to one aspect of the present disclosure, an electronic device includes the aforementioned optical lens module.

**BRIEF DESCRIPTION OF THE DRAWINGS**

The disclosure can be better understood by reading the following detailed description of the embodiments, with reference made to the accompanying drawings as follows:

Fig. 1 is a perspective view of an optical lens module according to the 1st embodiment of the present disclosure;
Fig. 2 is an exploded view of the optical lens module in Fig. 1;
Fig. 3 is a perspective cross-sectional view of the optical lens module in Fig. 1;
Fig. 4 is a cross-sectional view of the optical lens module along line 4-4 in Fig. 1;
Fig. 5 is a cross-sectional view of the optical lens module along line 5-5 in Fig. 1;
Fig. 6 and Fig. 7 are schematic views of a rotatable blade of the optical lens module in Fig. 1;
Fig. 8 is an enlarged view of a region AA on the rotatable blade in Fig. 6;
Fig. 9 is a schematic view of a blade assembly including the rotatable blades in Fig. 6 forming a small light passing aperture;
Fig. 10 is a schematic view of the blade assembly including the rotatable blades in Fig. 6 forming a middle light passing aperture;
Fig.11 is a schematic view of the blade assembly including the rotatable blades in Fig. 6 forming a large light passing aperture;
Fig. 12 is a schematic view of rotation of the blade assembly of the optical lens module in Fig. 1;
Fig. 13 is a schematic view of another implementation of the rotatable blade in Fig. 12;
Fig. 14 and Fig. 15 are schematic views of a rotatable blade of an optical lens module according to the 2nd embodiment of the present disclosure;
Fig. 16 is an enlarged view of a region BB on the rotatable blade in Fig. 14;
Fig. 17 is a schematic view of a blade assembly including the rotatable blades in Fig. 14 forming a small light passing aperture;

Fig. 18 is a schematic view of the blade assembly including the rotatable blades in Fig. 14 forming a middle light passing aperture;

Fig. 19 is a schematic view of the blade assembly including the rotatable blades in Fig. 14 forming a large light passing aperture;

Fig. 20 and Fig. 21 are schematic views of a rotatable blade of an optical lens module according to the 3rd embodiment of the present disclosure;

Fig. 22 is an enlarged view of a region CC on the rotatable blade in Fig. 20;

Fig. 23 is a schematic view of a blade assembly including the rotatable blades in Fig. 20 forming a small light passing aperture;

Fig. 24 is a schematic view of the blade assembly including the rotatable blades in Fig. 20 forming a middle light passing aperture;

Fig. 25 is a schematic view of the blade assembly including the rotatable blades in Fig. 20 forming a large light passing aperture;

Fig. 26 and Fig. 27 are schematic views of a rotatable blade of an optical lens module according to the 4th embodiment of the present disclosure;

Fig. 28 is an enlarged view of a region DD on the rotatable blade in Fig. 26;

Fig. 29 is a schematic view of a blade assembly including the rotatable blades in Fig. 26 forming a small light passing aperture;

Fig. 30 is a schematic view of the blade assembly including the rotatable blades in Fig. 26 forming a middle light passing aperture;

Fig. 31 is a schematic view of the blade assembly including the rotatable blades in Fig. 26 forming a large light passing aperture;

Fig. 32 and Fig. 33 are schematic views of a rotatable blade of an optical lens module according to the 5th embodiment of the present disclosure;

Fig. 34 is an enlarged view of a region EE on the rotatable blade in Fig. 32;

Fig. 35 is a schematic view of a blade assembly including the rotatable blades in Fig. 32 forming a small light passing aperture;

Fig. 36 is a schematic view of the blade assembly including the rotatable blades in Fig. 32 forming a middle light passing aperture;

Fig. 37 is a schematic view of the blade assembly including the rotatable blades in Fig. 32 forming a large light passing aperture;

Fig. 38 and Fig. 39 are schematic views of a rotatable blade of an optical lens module according to the 6th embodiment of the present disclosure;

Fig. 40 is an enlarged view of a region FF on the rotatable blade in Fig. 38;

Fig. 41 is a schematic view of a blade assembly including the rotatable blades in Fig. 38 forming a small light passing aperture;

Fig. 42 is a schematic view of the blade assembly including the rotatable blades in Fig. 38 forming a middle light passing aperture;

Fig. 43 is a schematic view of the blade assembly including the rotatable blades in Fig. 38 forming a large light passing aperture;

Fig. 44 and Fig. 45 are schematic views of a rotatable blade of an optical lens module according to the 7th embodiment of the present disclosure;

Fig. 46 is an enlarged view of a region GG on the rotatable blade in Fig. 44;

Fig. 47 is a schematic view of a blade assembly including the rotatable blades in Fig. 44 forming a small light passing aperture;

Fig. 48 is a schematic view of the blade assembly including the rotatable blades in Fig. 44 forming a middle light passing aperture;

Fig. 49 is a schematic view of the blade assembly including the rotatable blades in Fig. 44 forming a large light passing aperture;

Fig. 50 and Fig. 51 are schematic views of a rotatable blade of an optical lens module according to the 8th embodiment of the present disclosure;

Fig. 52 is an enlarged view of a region HH on the rotatable blade in Fig. 50;

Fig. 53 is a schematic view of a blade assembly including the rotatable blades in Fig. 50 forming a small light passing aperture;

Fig. 54 is a schematic view of the blade assembly including the rotatable blades in Fig. 50 forming a middle light passing aperture;

Fig. 55 is a schematic view of the blade assembly including the rotatable blades in Fig. 50 forming a large light passing aperture;

Fig. 56 and Fig. 57 are schematic views of a rotatable blade of an optical lens module according to the 9th embodiment of the present disclosure;

Fig. 58 is an enlarged view of a region II on the rotatable blade in Fig. 56;

Fig. 59 is a schematic view of a blade assembly including the rotatable blades in Fig. 56 forming a small light passing aperture;

Fig. 60 is a schematic view of the blade assembly including the rotatable blades in Fig. 56 forming a middle light passing aperture;

Fig. 61 is a schematic view of the blade assembly including the rotatable blades in Fig. 56 forming a large light passing aperture;

Fig. 62 is a schematic view of rotation of a blade assembly of an optical lens module according to the 10th embodiment of the present disclosure;

Fig. 63 is a schematic view of a rotatable blade in Fig. 62;

Fig. 64 is a schematic view of another implementation of the rotatable blade in Fig. 62;

Fig. 65 is a schematic view of rotation of a blade assembly of an optical lens module according to the 11th embodiment of the present disclosure;

Fig. 66 is a schematic view of a rotatable blade in Fig. 65;

Fig. 67 is a schematic view of another implementation of the rotatable blade in Fig. 65;

Fig. 68 is a schematic view of rotation of a blade assembly of an optical lens module according to the 12th embodiment of the present disclosure;

Fig. 69 is a schematic view of a rotatable blade in Fig. 68;

Fig. 70 is a schematic view of another implementation of the rotatable blade in Fig. 68;

Fig. 71 is a schematic view of rotation of a blade assembly of an optical lens module according to the 13th embodiment of the present disclosure;

Fig. 72 is a schematic view of a rotatable blade in Fig. 71;

Fig. 73 is a schematic view of another implementation of the rotatable blade in Fig. 71;

Fig. 74 is a schematic view of rotation of a blade assembly of an optical lens module according to the 14th embodiment of the present disclosure;

Fig. 75 is a schematic view of a rotatable blade in Fig. 74;

Fig. 76 is a schematic view of another implementation of the rotatable blade in Fig. 74;

Fig. 77 is a schematic view of rotation of a blade assembly of an optical lens module according to the 15th embodiment of the present disclosure;

Fig. 78 is a schematic view of a rotatable blade in Fig. 77;

Fig. 79 is a schematic view of another implementation of the rotatable blade in Fig. 77;

Fig. 80 is one perspective view of an electronic device according to the 16th embodiment of the present disclosure;

Fig. 81 is another perspective view of the electronic device in Fig. 80;

Fig. 82 is a schematic view of capturing an image in an ultra-wide-angle mode;

Fig. 83 is a schematic view of capturing an image in a high-resolution mode;

Fig. 84 is a schematic view of capturing an image in a telephoto mode;

Fig. 85 is one perspective view of an electronic device according to the 17th embodiment of the present disclosure;

Fig. 86 is a perspective view of an electronic device according to the 18th embodiment of the present disclosure;

Fig. 87 is a side view of the electronic device in Fig. 86; and

Fig. 88 is a top view of the electronic device in Fig. 86.

## DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The present disclosure provides an optical lens module. The optical lens module includes at least one lens element and an adjustable aperture module. The lens element has an optical axis. The adjustable aperture module is disposed at an object side of the at least one lens element, and the adjustable aperture module includes a blade assembly and a driving component.

The blade assembly includes a plurality of rotatable blades. The rotatable blades are rotatably disposed around the optical axis so as to form a light passing aperture. The light passing aperture surrounded by the rotatable blades can be approximately circular, while the present disclosure is not limited thereto. Each of the rotatable blades includes a rotatable portion and a light blocking portion. The rotatable portion is adjacent to the light blocking portion. The light blocking portion extends and tapers in a direction away from the rotatable portion. Therefore, it is favorable for reducing mechanical interference. The rotatable portion has a positioning hole and a dynamic hole. The positioning hole enables rotation of the corresponding rotatable blade with respect to the positioning hole, and the dynamic hole is disposed close to the positioning hole.

The driving component includes a rotatable element. The rotatable element is disposed corresponding to the dynamic holes of the rotatable blades so as to rotate the rotatable blades, to thereby vary a size of the light passing aperture.

The light blocking portion of each of the rotatable blades includes a protruding segment, and the protruding segment extends and tapers toward the light passing aperture. Therefore, it is favorable for reducing mechanical interference. The light blocking portion of each of the rotatable blades can include at least three protruding segments. When a number of the protruding segments is N, the following condition can be satisfied: $3 \leq N \leq 25$. Moreover, the following condition can also be satisfied: $3 \leq N \leq 15$.

When each rotatable blade includes single protruding segment, and a maximum height of the protruding segment is h0, the following condition is satisfied: 0.08 millimeter (mm) < h0 $\leq$ 0.50 mm. When each rotatable blade includes multiple protruding segments, and an average maximum height of the protruding segments of each rotatable blade is h0, the following condition is satisfied: 0.08 mm < h0 $\leq$ 0.50 mm. Therefore, the light passing aperture formed by the rotatable blades can approximate a theoretical aperture for an optical system, such that it is favorable for eliminating a difference of optical performance between an actual mechanical structure and a theoretical mathematical model.

Each of the rotatable blades can include an outer peripheral portion and an inner peripheral portion. The outer peripheral portion includes a part of the rotatable portion and a part of the light blocking portion. The inner peripheral portion includes another part of the rotatable portion and another part of the light blocking portion. The inner peripheral portion is closer to the optical axis than the outer peripheral portion, and the inner peripheral portion includes the protruding segment of the light blocking portion.

The inner peripheral portion can include a light blocking structure, and the light blocking structure can include a plurality of protrusions. The protrusion can be petaloid or serrated, while the present disclosure is not limited thereto. When an average maximum height of the light blocking structure is h1, the following condition can be satisfied: 0.001 mm ≤ h1 ≤ 0.050 mm. Therefore, the light blocking structure can reduce the generation of non-imaging light without affecting the present optical system. Moreover, the light blocking structure can be located at any region of the inner peripheral portion. Moreover, each rotatable blade can have an overall wavy shape, and the blade assembly including these rotatable blades can be applicable to large aperture stop, while the present disclosure is not limited thereto.

The protruding segment can include the light blocking structure, therefore, the light blocking structure can provide an effect of blocking stray light.

The light blocking structure can be integrally included in the corresponding rotatable blade. Therefore, it is favorable for simplifying assembly process so as to increase manufacturing yield rate. Moreover, the light blocking structure can be integrally formed with the light blocking portion of the rotatable blade. Moreover, the light blocking structure can be integrally formed with the inner peripheral portion of the rotatable blade.

According to the present disclosure, the optical lens module can further include a fixed aperture element. The fixed aperture element has a fixed aperture. The fixed aperture element is disposed corresponding to the rotatable blades, and the fixed aperture element is disposed close to the blade assembly and coaxial with the blade assembly. Moreover, the fixed aperture element can be disposed in parallel to the optical axis, and the fixed aperture element can be located above or below the blade assembly.

When a distance between the fixed aperture element and the blade assembly is h, the following condition can be satisfied: 0.002 mm ≤ h ≤ 0.600 mm. Therefore, the fixed aperture element can define a constant f-number, and the fixed aperture element as well as the blade assembly are spaced apart by a constant distance so as to be favorable for enhancing a margin for optical design. Moreover, the following condition can also be satisfied: 0.002 mm ≤ h ≤ 0.060 mm.

The rotatable element of the driving component can include a plurality of rotatable structures. The rotatable structures are respectively disposed corresponding to the rotatable blades. Each of the rotatable structures is movable in the dynamic hole of the corresponding rotatable blade so as to vary the size of the light passing aperture. Therefore, it is favorable for accurately controlling the size of the light passing aperture.

The adjustable aperture module can further include a positioning element, and the positioning element includes a plurality of positioning structures. The positioning structures are respectively disposed corresponding to the positioning holes of the rotatable blades so as to position the rotatable blades. Therefore, it is favorable for maintaining a rotational stability of the rotatable blades.

The driving component of the adjustable aperture module can further include a magnet and a coil. The coil is disposed corresponding to the magnet, and one of the magnet and the coil is disposed on the positioning element. Therefore, the magnet as well as the coil can drive the rotatable element to move with respect to the positioning element.

The driving component of the adjustable aperture module can further include at least two bearing elements. The bearing elements are disposed between the rotatable element and the positioning element in a direction parallel to the optical axis. Therefore, the bearing element is favorable for enhancing the rotational stability of the rotatable element. Moreover, the bearing element can be a spherical element, and the bearing element can be aligned with the optical axis.

When a maximum field of view of the optical lens module is FOV, the following condition can be satisfied: 50 degrees ≤ FOV ≤ 105 degrees. Therefore, it is favorable for controlling the light passing aperture to have a proper size.

When an f-number of the optical lens module is FNO, the following condition can be satisfied: 0.9 ≤ FNO ≤ 5.6. Therefore, it is favorable for adjusting the f-number of the optical lens module for various photographic environments by changing the size of the light passing aperture.

According to the present disclosure, the rotatable blades of the optical lens module are driven by the driving component so as to form a light passing aperture with adjustable size. The position as well as the shape of the dynamic hole on the rotatable blade can determine a rotational speed of the rotatable blade, such that a rotational speed of the rotatable blades for moving outward to form a large light passing aperture can be different from that for moving inward to form a small light passing aperture.

According to the present disclosure, a camera module is provided. The camera module includes the aforementioned optical lens module and an image sensor. The image sensor is disposed on an image surface of the imaging lens module.

According to the present disclosure, an electronic device is provided. The electronic device includes the aforementioned camera module.

According to the present disclosure, the aforementioned features and conditions can be utilized in numerous combinations so as to achieve corresponding effects.

According to the above description of the present disclosure, the following specific embodiments are provided for further explanation.

**1st Embodiment**

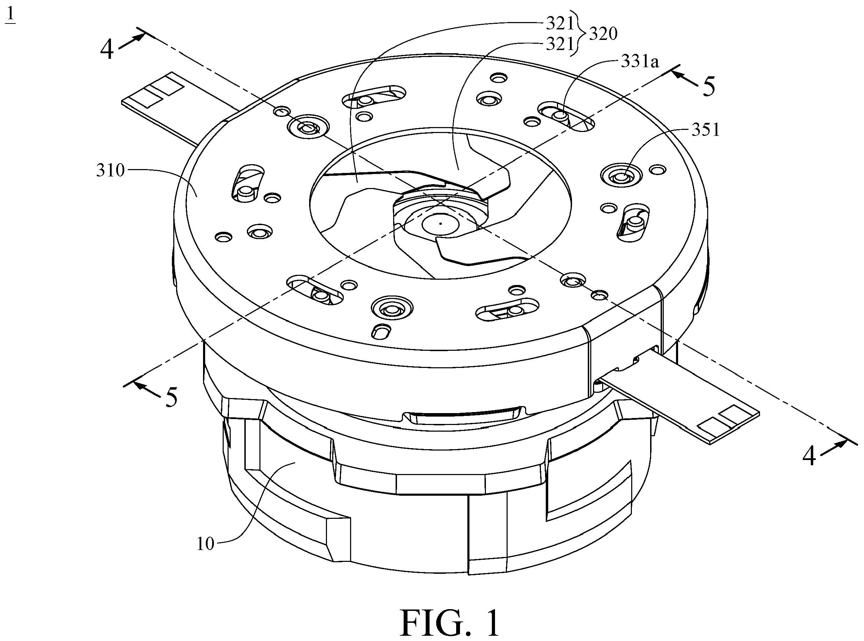

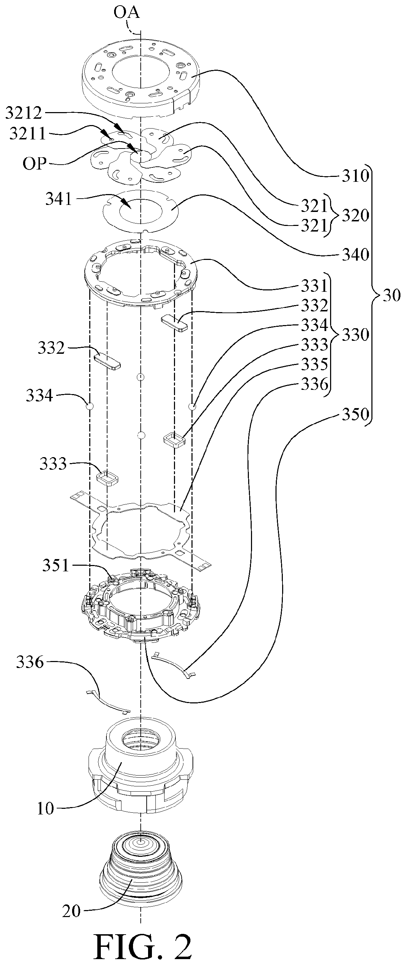

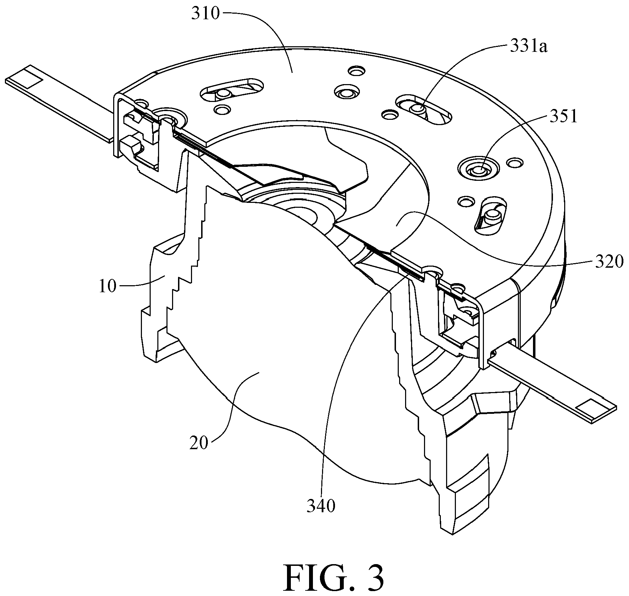

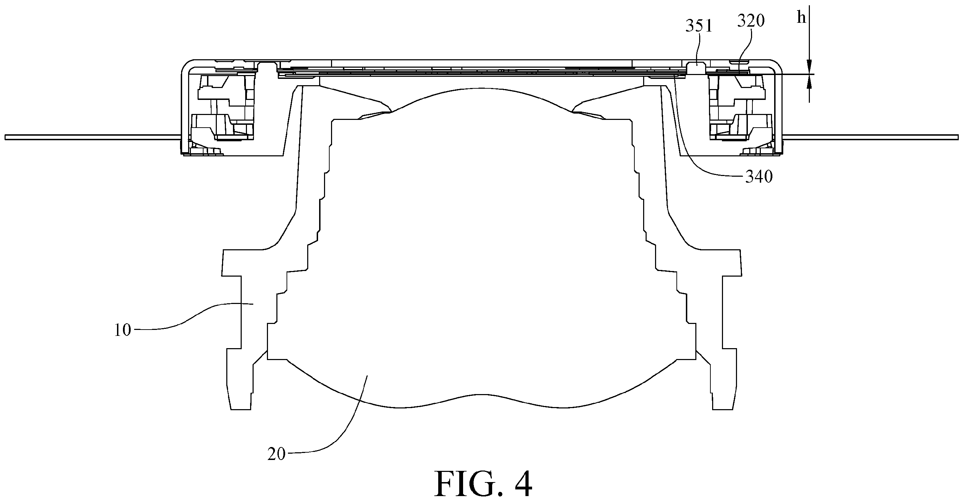

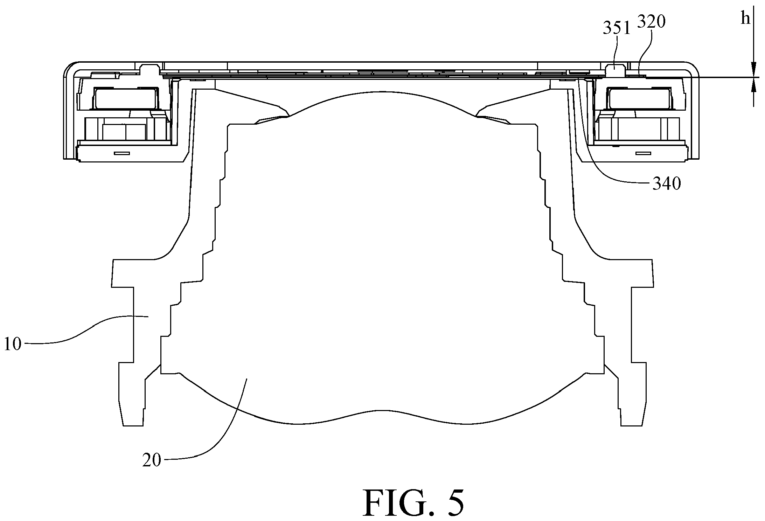

Fig. 1 is a perspective view of an optical lens module according to the 1st embodiment of the present disclosure. Fig. 2 is an exploded view of the optical lens module in Fig. 1. Fig. 3 is a perspective cross-sectional view of the optical lens module in Fig. 1. Fig. 4 is a cross-sectional view of the optical lens module along line 4-4 in Fig. 1. Fig. 5 is a cross-sectional view of the optical lens module along line 5-5 in Fig. 1.

In this embodiment, an optical lens module 1 is provided. The optical lens module 1 includes a lens carrier 10, a lens element 20 and an adjustable aperture module 30. The lens carrier 10 is configured to accommodate the lens element 20. The lens element 20 has an optical axis OA. The present disclosure is not limited by the number and the shape of the lens element 20, and therefore a specific outline of the lens element 20 (or lens assembly) is omitted in the drawings.

The adjustable aperture module 30 is disposed at an object side of the lens element 20. The adjustable aperture module 30 includes an upper cover 310, a blade assembly 320, a driving component 330, a fixed aperture element 340 and a positioning element 350. The upper cover 310 exposes the blade assembly 320. The blade assembly 320 includes a plurality of rotatable blades 321. The rotatable blades 321 are rotatably disposed around the optical axis OA so as to form a light passing aperture OP.

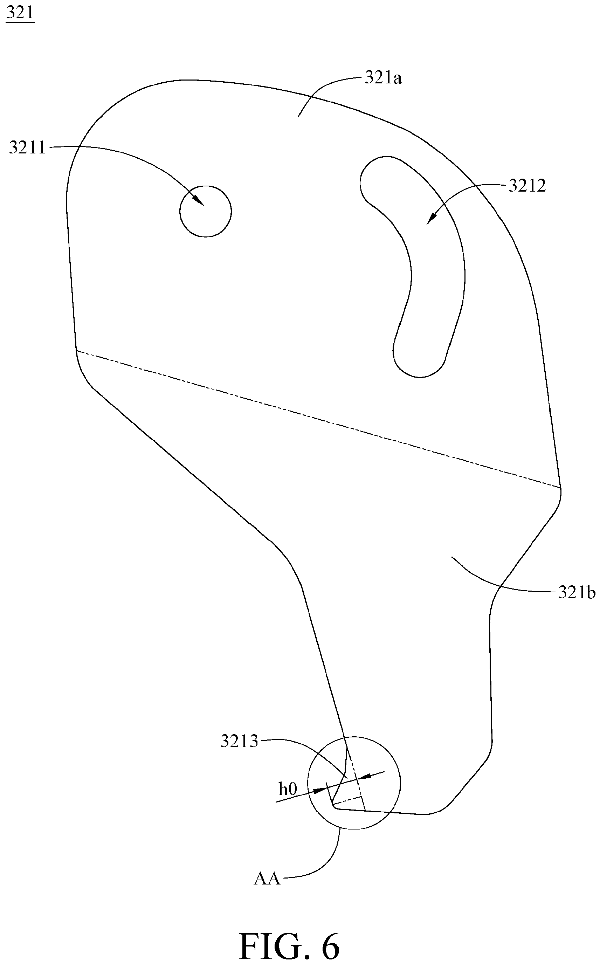

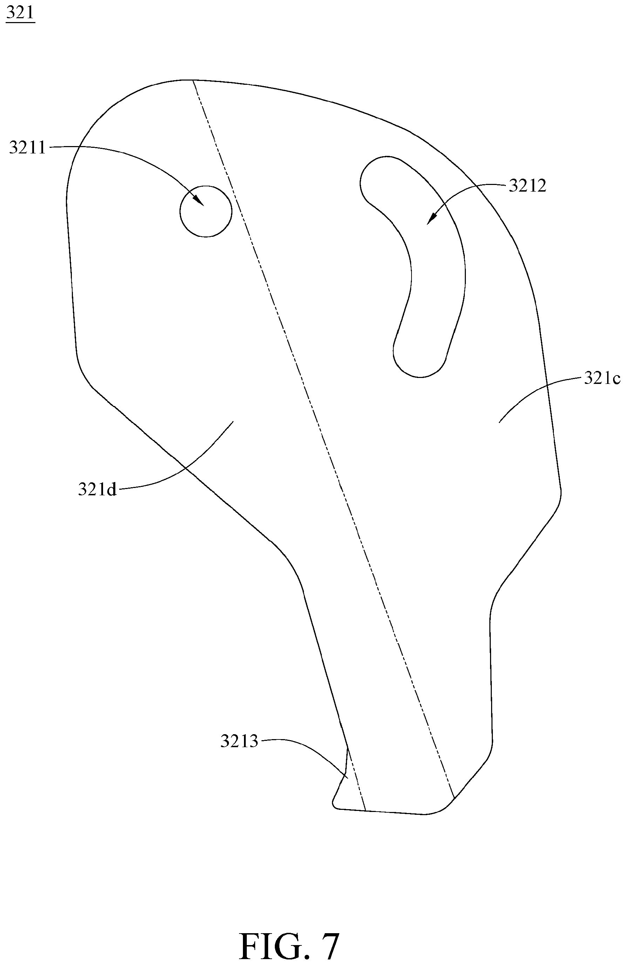

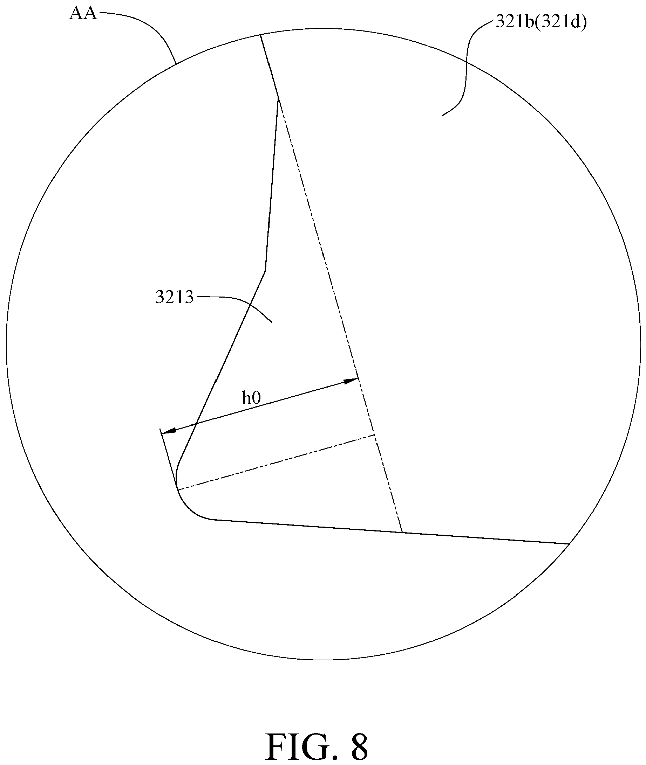

Fig. 6 and Fig. 7 are schematic views of a rotatable blade of the optical lens module in Fig. 1. Fig. 8 is an enlarged view of a region AA on the rotatable blade in Fig. 6. Each of the rotatable blades 321 includes a rotatable portion 321a and a light blocking portion 321b. The rotatable portion 321a is adjacent to the light blocking portion 321b, and the light blocking portion 321b extends and tapers in a direction away from the rotatable portion 321a. The rotatable portion 321a has a positioning hole 3211 and a dynamic hole 3212. The positioning hole 3211 enables the rotation of the corresponding rotatable blade 321 with respect to the positioning hole 3211, and the dynamic hole 3212 is dispose close to the positioning hole 3211. The light blocking portion 321b of each rotatable blade 321 includes a protruding segment 3213, and the protruding segment 3213 extends and tapers toward the light passing aperture OP.

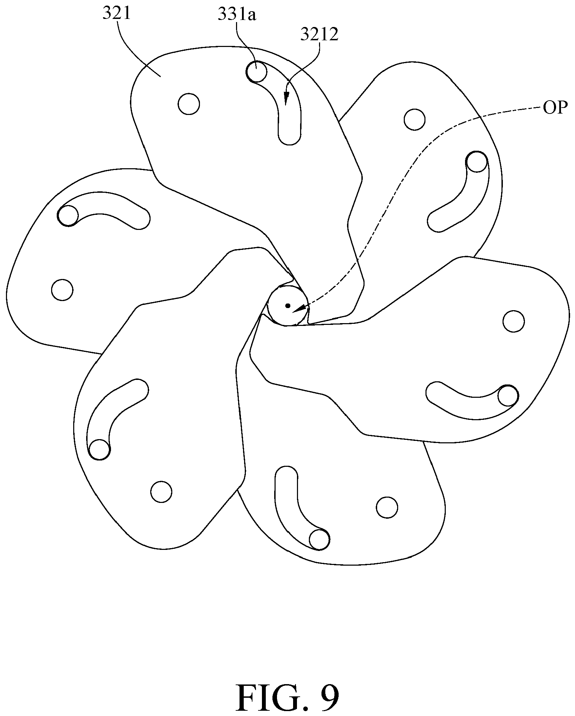

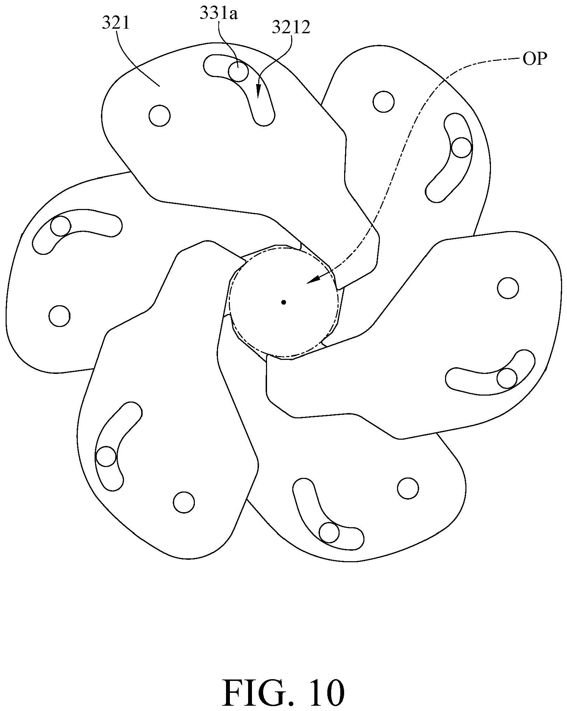

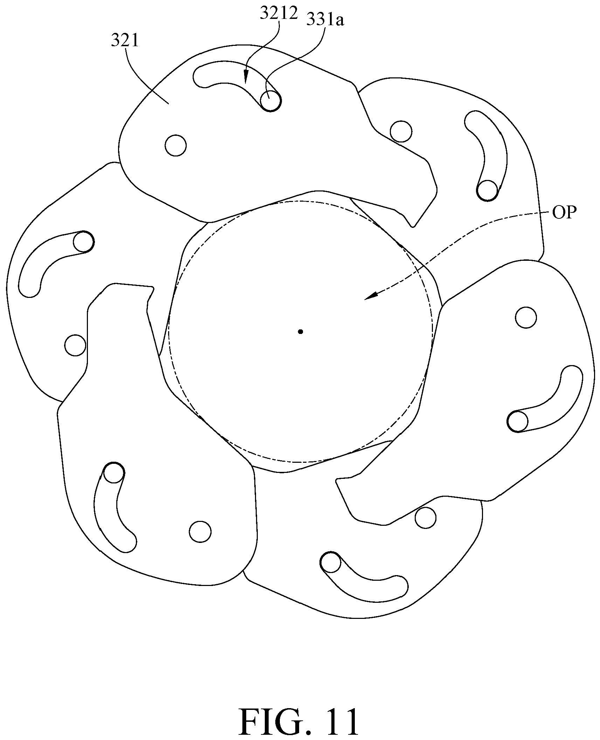

The driving component 330 includes a rotatable element 331, one or more magnets 332, one or more coils 333, one or more bearing elements 334, a flexible printed circuit board 335 and one or more magnetic elements 336. The rotatable element 331 is disposed corresponding to the dynamic holes 3212 of the rotatable blades 321 of the blade assembly 320 so as to rotate the rotatable blades 321 to thereby vary the size of the light passing aperture OP. More specifically, the rotatable element 331 includes a plurality of rotatable structures 331a. The rotatable structures 331a are respectively disposed corresponding to the rotatable blades 321 of the blade assembly 320. Each of the rotatable structures 331a is movable in the dynamic hole 3212 of the corresponding rotatable blade 321 so as to vary the size of the light passing aperture OP. Fig. 9 is a schematic view of a blade assembly including the rotatable blades in Fig. 6 forming a small light passing aperture. Fig. 10 is a schematic view of the blade assembly including the rotatable blades in Fig. 6 forming a middle light passing aperture. Fig.11 is a schematic view of the blade assembly including the rotatable blades in Fig. 6 forming a large light passing aperture.

The coil 333 is disposed corresponding to the magnet 332. The magnet 332 is disposed on the rotatable element 331, and the coil 333 is disposed on the flexible printed circuit board335. The number of the bearing elements 334 in four. The flexible printed circuit board 335 transmits electrical current to the coil 333, and the magnetic element 336 provides a magnetic field which interacts with the magnet 332.

The fixed aperture element 340 has a fixed aperture 341. The fixed aperture element 340 is disposed corresponding to the rotatable blades 321. The fixed aperture element 340 is disposed close to the blade assembly 320 and coaxial with the blade assembly 320.

The positioning element 350 includes a plurality of positioning structures 351. The positioning structures 351 are respectively disposed corresponding to the positioning holes 3211 of the rotatable blades 321 of the blade assembly 320 so as to position the rotatable blades 321. The bearing elements 334 of the driving component 330 are disposed between the rotatable element 331 and the positioning element 350 in a direction parallel to the optical axis OA. The flexible printed circuit board 335 and the magnetic element 336 are disposed on the positioning element 350. The coil 333 is indirectly disposed on the positioning element 350 through the flexible printed circuit board 335.

As shown in Fig. 7, each of the rotatable blades 321 includes an outer peripheral portion 321c and an inner peripheral portion 321d. The outer peripheral portion 321c includes a part of the rotatable portion 321a and a part of the light blocking portion 321b, and the inner peripheral portion 321d includes another part of the rotatable portion 321a and another part of the light blocking portion 321b. The inner peripheral portion 321d is closer to the optical axis OA than the outer peripheral portion 321c, and the inner peripheral portion 321d includes the protruding segment 3213 of the light blocking portion 321b.

When a maximum height of the protruding segment 3213 is h0, the following condition is satisfied: h0 = 0.245 mm.

When a distance between the fixed aperture element 340 and the blade assembly 320 is h, the following condition is satisfied: h =0.01 mm.

When a maximum field of view of the optical lens module 1 is FOV, the following condition is satisfied: FOV = 50 degrees to 105 degrees.

When an f-number of the optical lens module 1 is FNO, the following condition is satisfied: FNO = 0.9 to 5.6.

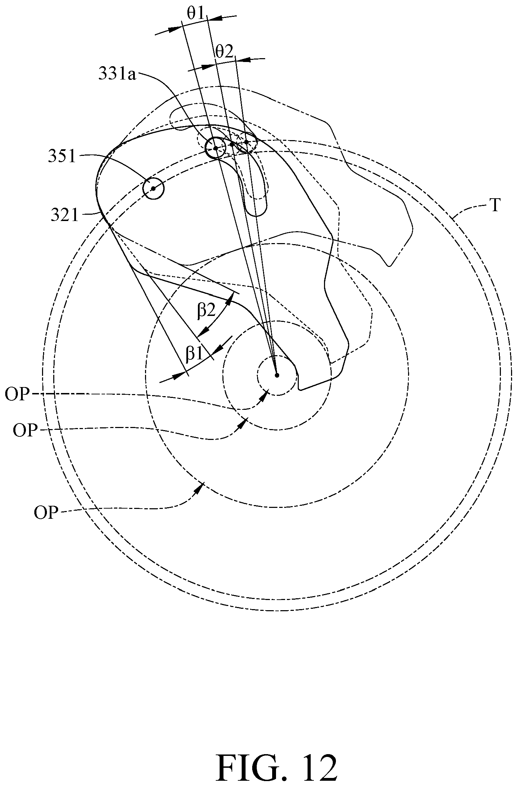

Fig. 12 is a schematic view of rotation of the blade assembly of the optical lens module in Fig. 1. In this embodiment, the rotatable blades 321 can be rotated by the rotatable element 331 of the driving component 330 with respective positioning structures 351 of the positioning element 350 as a rotation axis. The rotatable element 331 rotates to change the position of the rotatable structure 331a in the corresponding dynamic hole 3212. Based on different positions of the rotatable structure 331a in the corresponding dynamic hole 3212, the light passing aperture OP formed by the rotatable blades 321 can have different sizes. The rotatable structures 331a can rotate clockwise, such that the rotatable blades 321 can encircle to form a light passing aperture OP with the maximum size. The rotatable structures 331a can rotate counterclockwise along a track T, such that the rotatable blades 321 can encircle to form a light passing aperture OP with the minimum size.

When the light passing aperture OP has the minimum size, the rotatable blade 321 is at a first position. When the light passing aperture OP has the maximum size, the rotatable blade 321 is at a second position. When the light passing aperture OP has a middle size, the rotatable blade 321 is at a third position.

Since the rotatable element 331 rotates by an angle $\theta1$ with a center of the light passing aperture OP as a rotation axis, the rotatable blade 321 moves from the first position to the third position, and the rotatable blade 321 rotates by an angle $\beta1$ with respect to the positioning structure 351. Herein, the angle $\theta1$ is 4.1 degrees, and the angle $\beta1$ is 9.6 degrees.

Since the rotatable element 331 rotates by an angle $\theta2$ with the center of the light passing aperture OP as the rotation axis, the rotatable blade 321 moves from the third position to the second positon, and the rotatable blade 321 rotates by an angle $\beta2$ with respect to the positioning structure 351. Herein, the angle $\theta2$ is 3.6 degrees, and the angle $\beta2$ is 26.1 degrees.

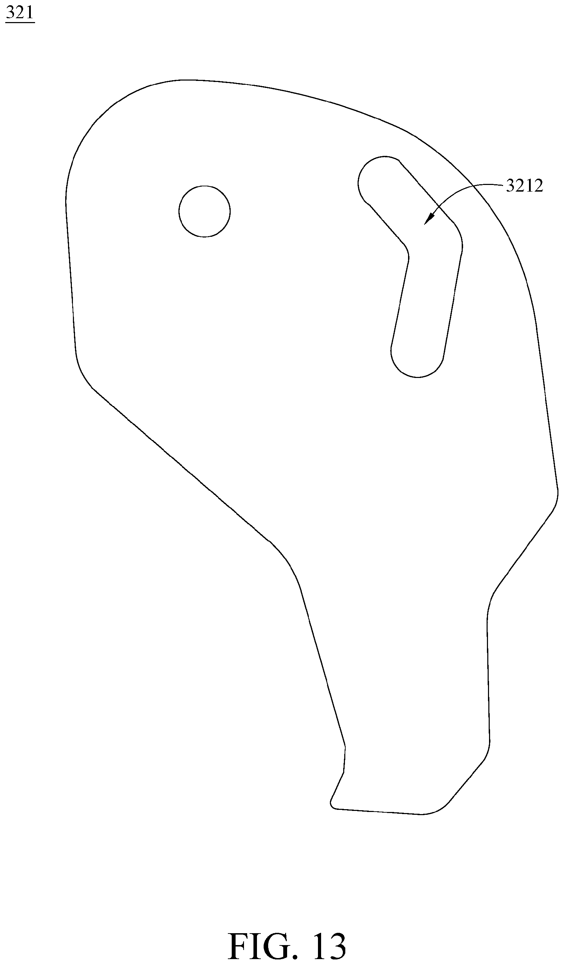

Fig. 6 and Fig. 12 exemplarily depict that the dynamic hole 3212 of the rotatable blade 321 has an edge including variable speed rail design consisting of arc lines, while the dynamic hole 3212 of the rotatable blade 321 can have a different shape. Fig. 13 is a schematic view of another implementation of the rotatable blade in Fig. 12. In Fig. 13, the dynamic hole 3212 has an edge including variable speed rail design consisting of arc lines and straight lines. Therefore, the rotation of the rotatable structure 331a can be controlled by determining the shape of the dynamic hole 3212 so as to change the rotational speed of the rotatable blade. In this embodiment, the dynamic hole 3212 results in a slower counterclockwise rotation of the rotatable structure 331a than the clockwise rotation thereof, such that a speed for forming a small light passing aperture OP is smaller than that for forming a large light passing aperture OP.

**2nd Embodiment**

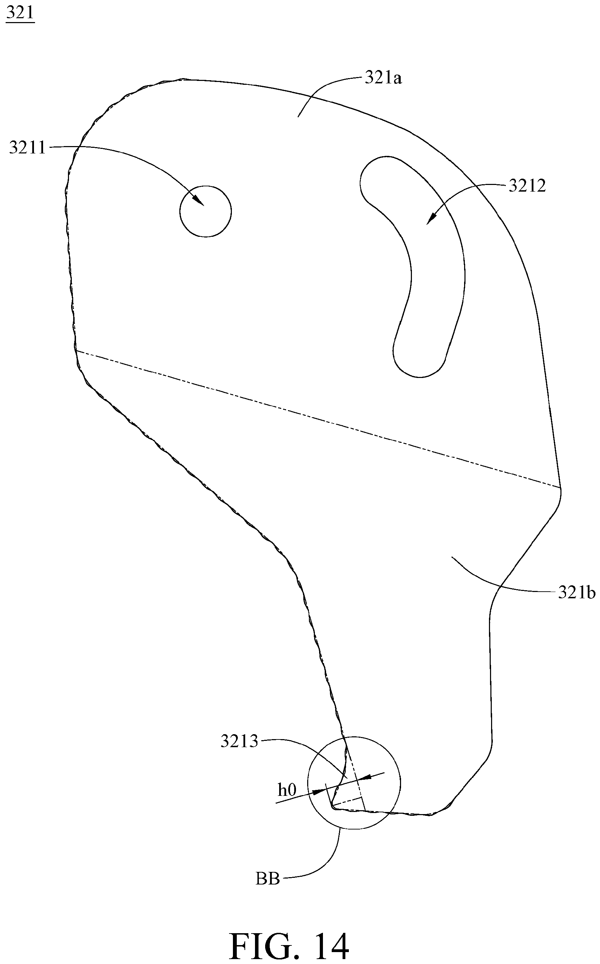

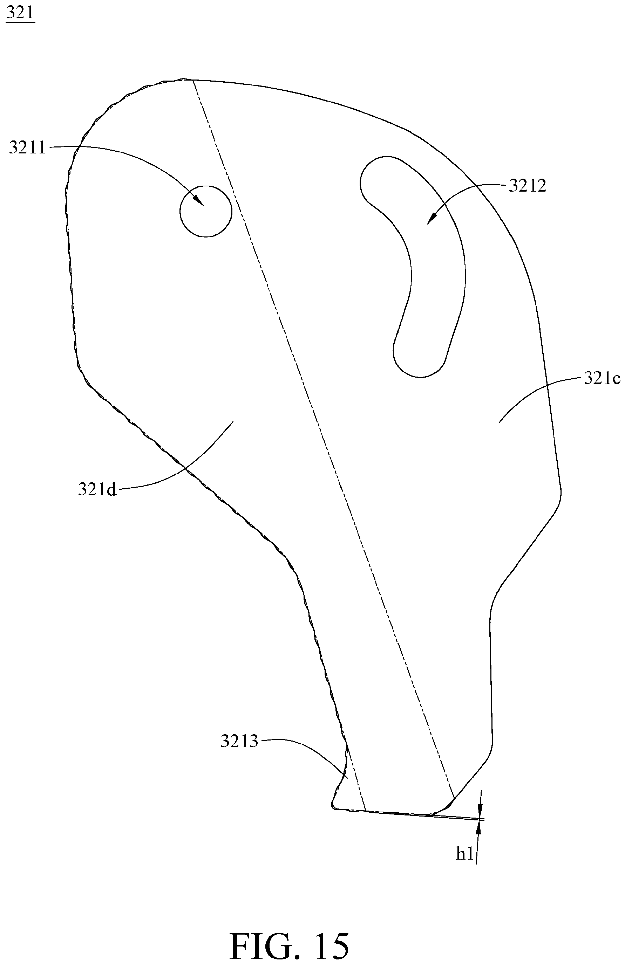

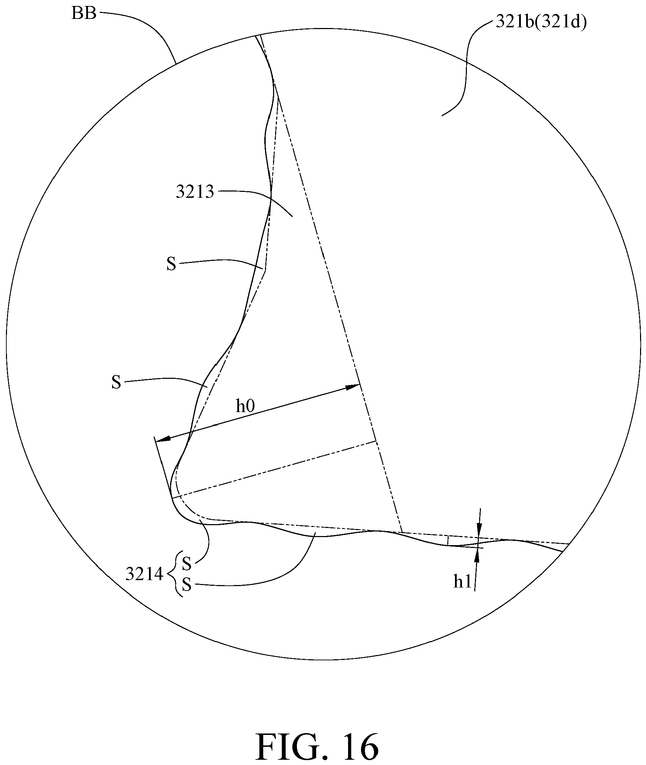

Fig. 14 and Fig. 15 are schematic views of a rotatable blade of an optical lens module according to the 2nd embodiment of the present disclosure. Fig. 16 is an enlarged view of a region BB on the rotatable blade in Fig. 14. In the 2nd embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

In this embodiment, the rotatable blade 321 includes a rotatable portion 321a and a light blocking portion 321b. The rotatable blade 321 includes an outer peripheral portion 321c and an inner peripheral portion 321d. The outer peripheral portion 321c includes a part of the rotatable portion 321a and a part of the light blocking portion 321b, and the inner peripheral portion 321d includes another part of the rotatable portion 321a and another part of the light blocking portion 321b. The inner peripheral portion 321d includes a protruding segment 3213 of the light blocking portion 321b.

The inner peripheral portion 321d includes a light blocking structure 3214, and the light blocking structure 3214 includes a plurality of petaloid projections S. The light blocking structure 3214 is distributed on the rotatable portion 321a and the light blocking portion 321b. As shown in Fig. 16, the light blocking structure 3214 is formed on the protruding segment 3213, such that it can be interpreted that the protruding segment 3213 includes the light blocking structure 3214. The light blocking structure 3214 is integrally included in the rotatable blade 321.

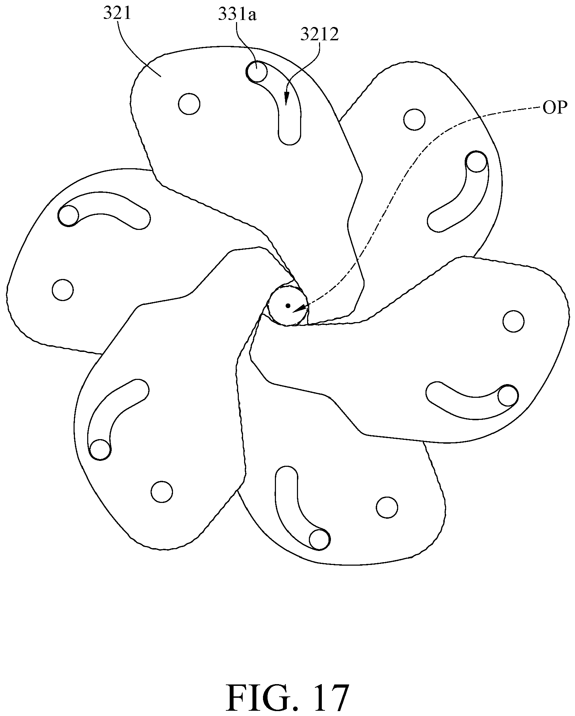

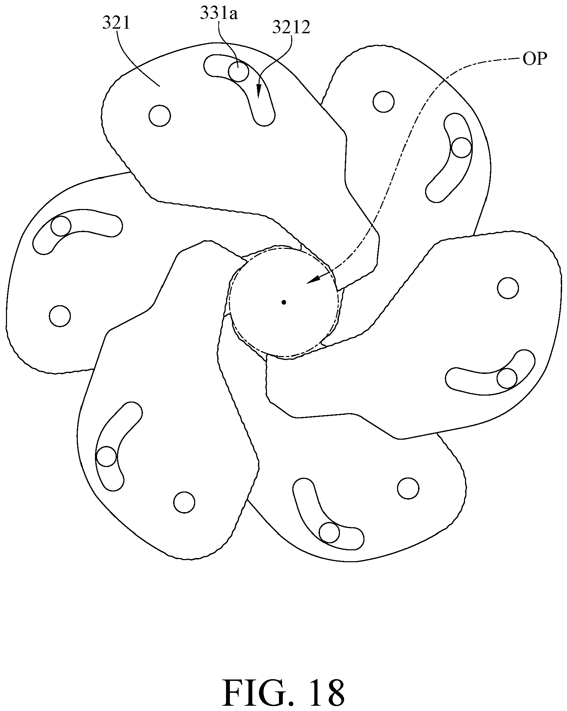

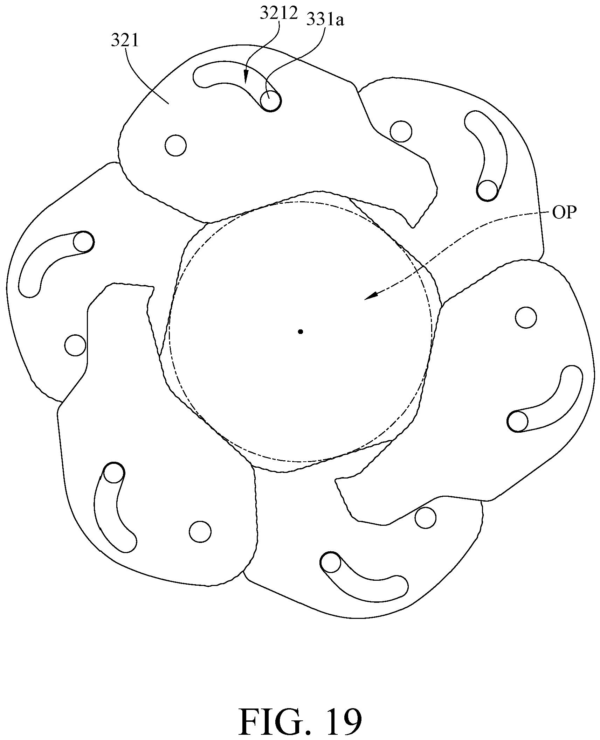

The rotatable structure 331a of the rotatable element of the optical lens module is disposed corresponding to the dynamic hole 3212 of the rotatable blade 321 so as to rotate the rotatable blade 321 to thereby vary the size of the light passing aperture OP. Fig. 17 is a schematic view of a blade assembly including the rotatable blades in Fig. 14 forming a small light passing aperture. Fig. 18 is a schematic view of the blade assembly including the rotatable blades in Fig. 14 forming a middle light passing aperture. Fig. 19 is a schematic view of the blade assembly including the rotatable blades in Fig. 14 forming a large light passing aperture.

When a maximum height of the protruding segment 3213 is h0, the following condition is satisfied: h0 = 0.254 mm.

When an average maximum height of the light blocking structure 3214 is h1, the following condition is satisfied: h1 = 0.012 mm. In this embodiment, as to any one of the rotatable blades 321, h1 is equal to an average of the maximum heights of all projections S.

## 3rd Embodiment

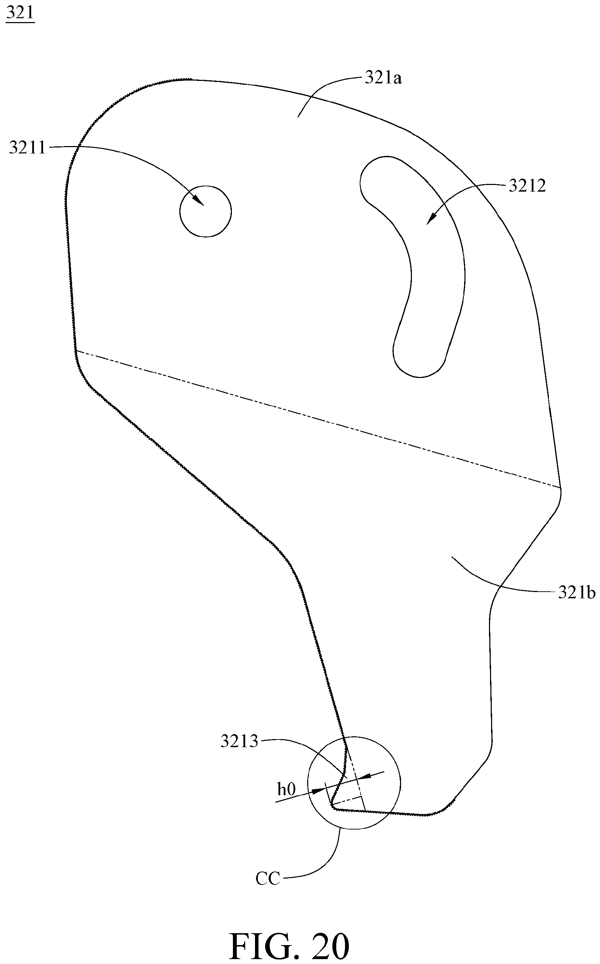

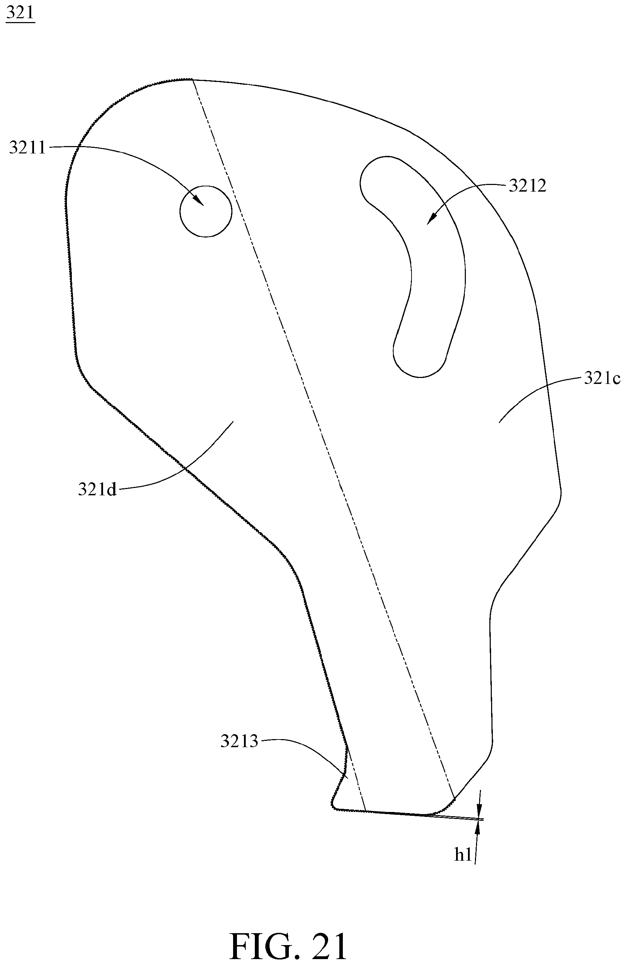

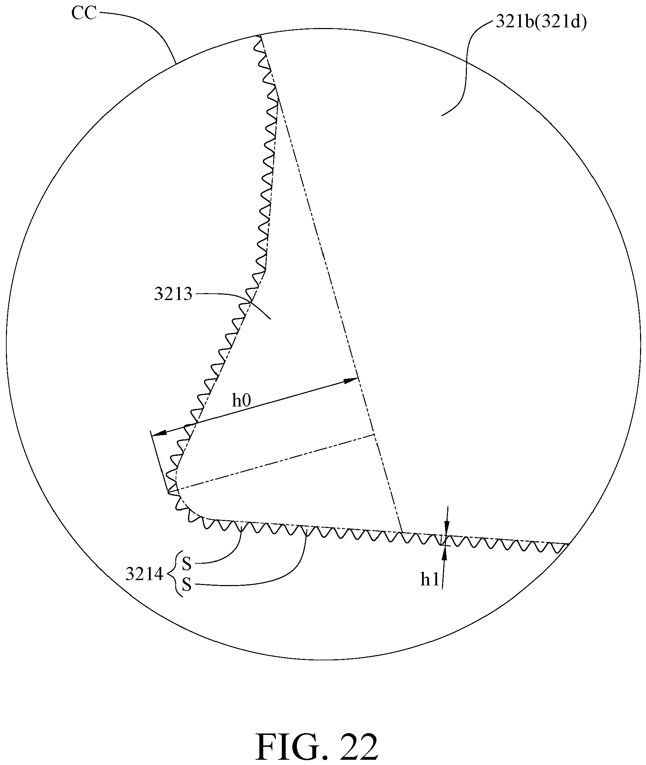

Fig. 20 and Fig. 21 are schematic views of a rotatable blade of an optical lens module according to the 3rd embodiment of the present disclosure. Fig. 22 is an enlarged view of a region CC on the rotatable blade in Fig. 20. In the 3rd embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

In this embodiment, the rotatable blade 321 includes a rotatable portion 321a and a light blocking portion 321b. The rotatable blade 321 includes an outer peripheral portion 321c and an inner peripheral portion 321d. The outer peripheral portion 321c includes a part of the rotatable portion 321a and a part of the light blocking portion 321b, and the inner peripheral portion 321d includes another part of the rotatable portion 321a and another part of the light blocking portion 321b. The inner peripheral portion 321d includes a protruding segment 3213 of the light blocking portion 321b.

The inner peripheral portion 321d includes a light blocking structure 3214, and the light blocking structure 3214 includes a plurality of serrated projections S. The light blocking structure 3214 is distributed on the rotatable portion 321a and the light blocking portion 321b. As shown Fig. 22, the light blocking structure 3214 is formed on the protruding segment 3213, such that it can be interpreted that the protruding segment 3213 includes the light blocking structure 3214. The light blocking structure 3214 is integrally included in the rotatable blade 321.

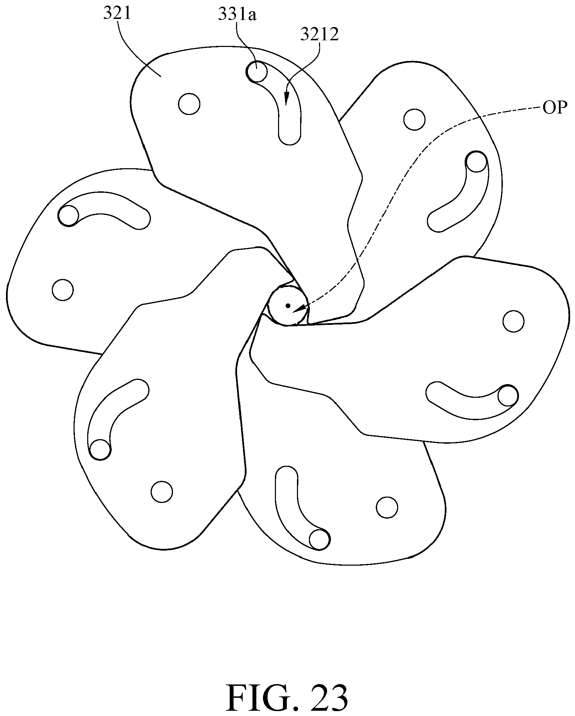

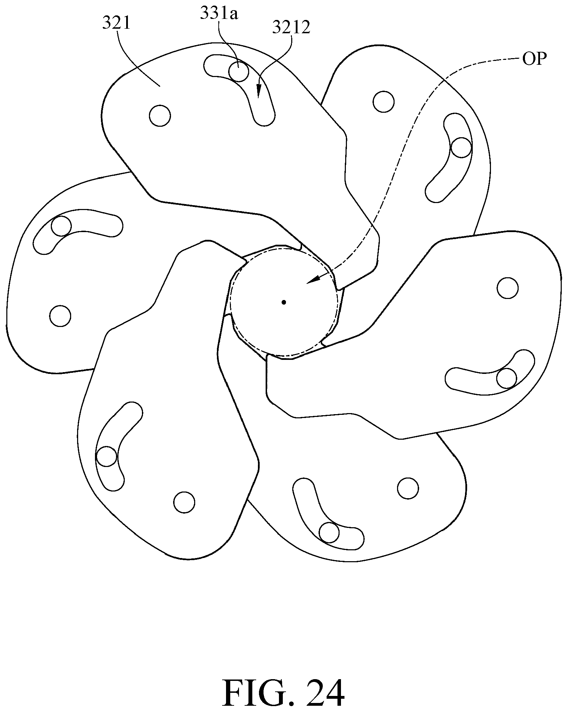

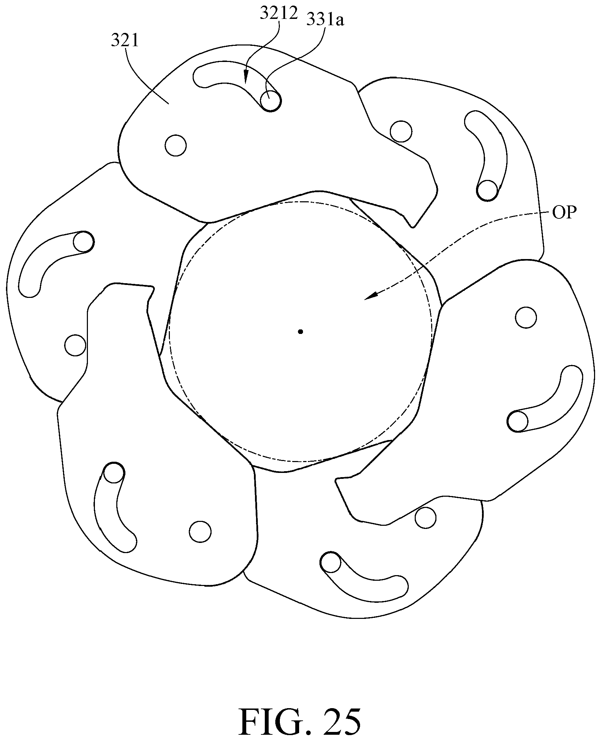

The rotatable structure 331a of the rotatable element of the optical lens module is disposed corresponding to the dynamic hole 3212 of the rotatable blade 321 so as to rotate the rotatable blade 321 to thereby vary the size of the light passing aperture OP. Fig. 23 is a schematic view of a blade assembly including the rotatable blades in Fig. 20 forming a small light passing aperture. Fig. 24 is a schematic view of the blade assembly including the rotatable blades in Fig. 20 forming a middle light passing aperture. Fig. 25 is a schematic view of the blade assembly including the rotatable blades in Fig. 20 forming a large light passing aperture.

When a maximum height of the protruding segment 3213 is h0, the following condition is satisfied: h0 = 0.257 mm.

When an average maximum height of the light blocking structure 3214 is h1, the following condition is satisfied: h1 = 0.012 mm. In this embodiment, as to any one of the rotatable blades 321, h1 is equal to an average of the maximum heights of all projections S.

## 4th Embodiment

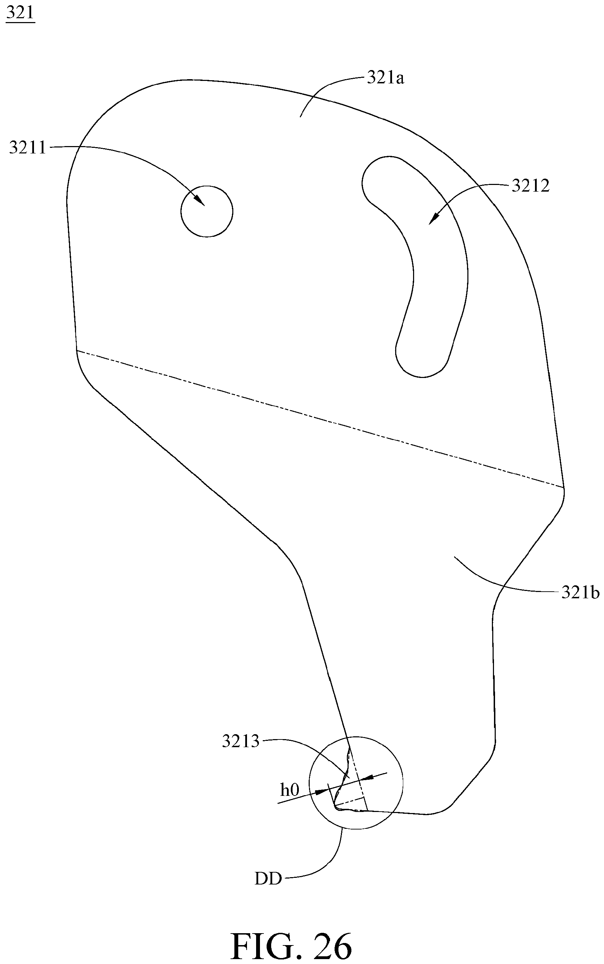

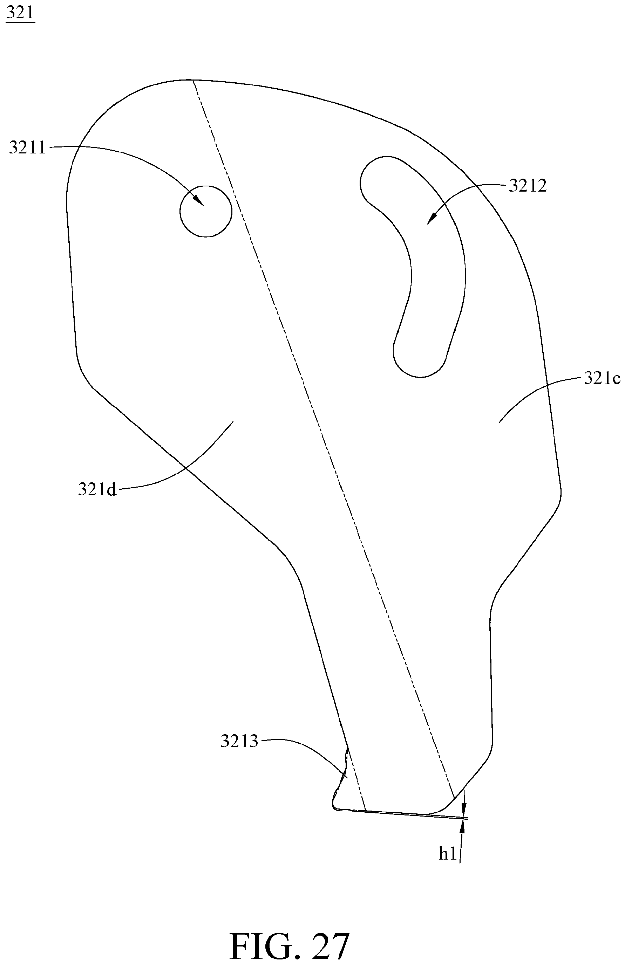

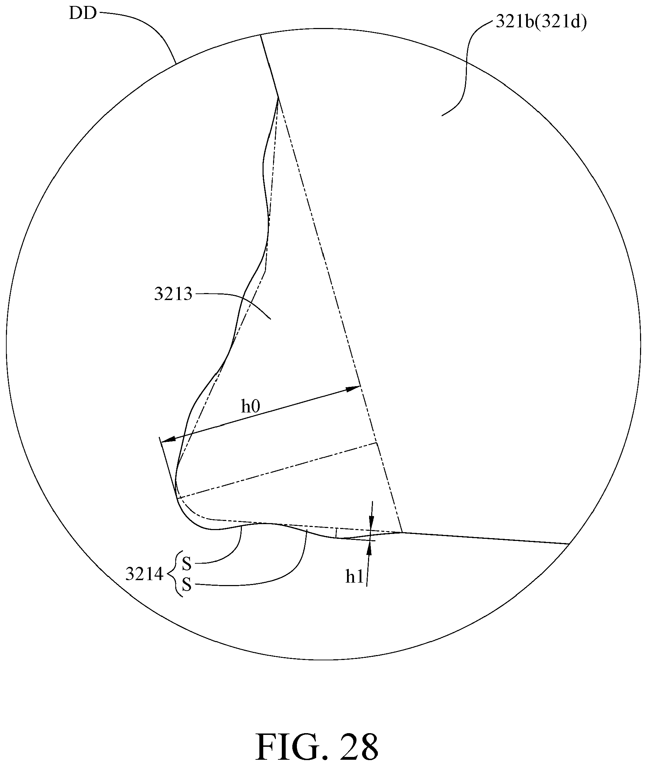

Fig. 26 and Fig. 27 are schematic views of a rotatable blade of an optical lens module according to the 4th embodiment of the present disclosure. Fig. 28 is an enlarged view of a region DD on the rotatable blade in Fig. 26. In the 4th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

In this embodiment, the rotatable blade 321 includes a rotatable portion 321a and a light blocking portion 321b. The rotatable blade 321 includes an outer peripheral portion 321c and an inner peripheral portion 321d. The outer peripheral portion 321c includes a part of the rotatable portion 321a and a part of the light blocking portion 321b, and the inner peripheral portion 321d includes another part of the rotatable portion 321a and another part of the light blocking portion 321b. The inner peripheral portion 321d includes a protruding segment 3213 of the light blocking portion 321b.

The inner peripheral portion 321d includes a light blocking structure 3214, and the light blocking structure 3214 includes a plurality of petaloid projections S. The light blocking structure 3214 is distributed only on the light blocking portion 321b. As shown in Fig. 28, the light blocking structure 3214 is formed on the protruding segment 3213, such that it can be interpreted that the protruding segment 3213 includes the light blocking structure 3214. The light blocking structure 3214 is integrally included in the rotatable blade 321.

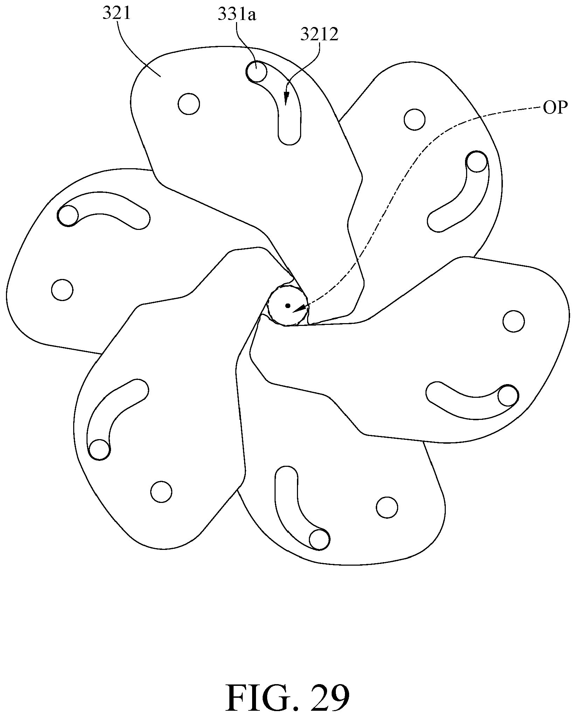

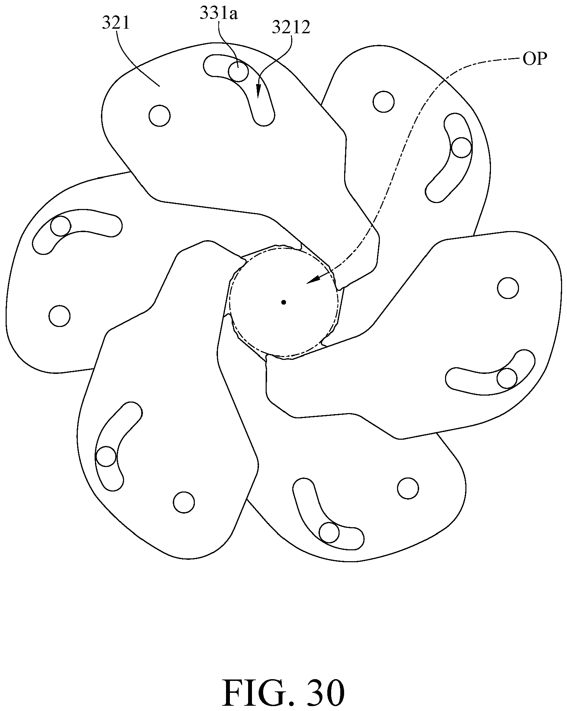

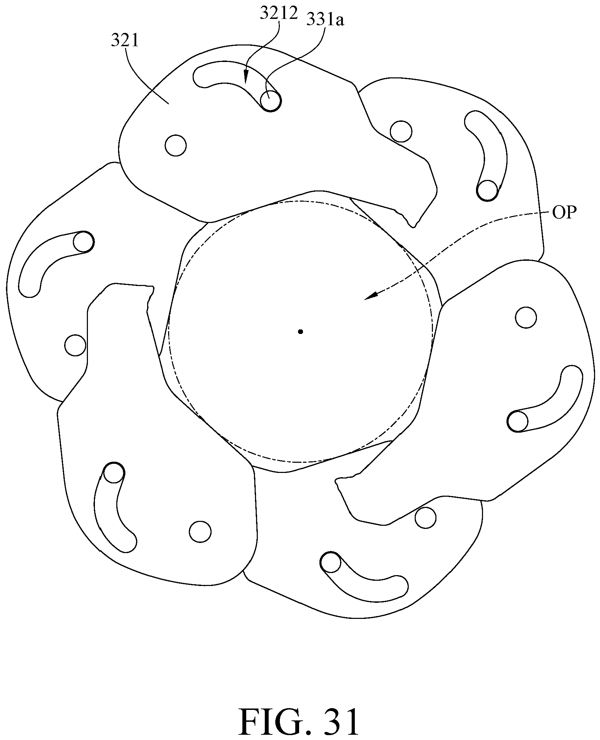

The rotatable structure 331a of the rotatable element of the optical lens module is disposed corresponding to the dynamic hole 3212 of the rotatable blade 321 so as to rotate the rotatable blade 321 to thereby vary the size of the light passing aperture OP. Fig. 29 is a schematic view of a blade assembly including the rotatable blades in Fig. 26 forming a small light passing aperture. Fig. 30 is a schematic view of the blade assembly including the rotatable blades in Fig. 26 forming a middle light passing aperture. Fig. 31 is a schematic view of the blade assembly including the rotatable blades in Fig. 26 forming a large light passing aperture.

When a maximum height of the protruding segment 3213 is h0, the following condition is satisfied: h0 = 0.249 mm.

When an average maximum height of the light blocking structure 3214 is h1, the following condition is satisfied: h1 = 0.012 mm. In this embodiment, as to any one of the rotatable blades 321, h1 is equal to an average of the maximum heights of all projections S.

## 5th Embodiment

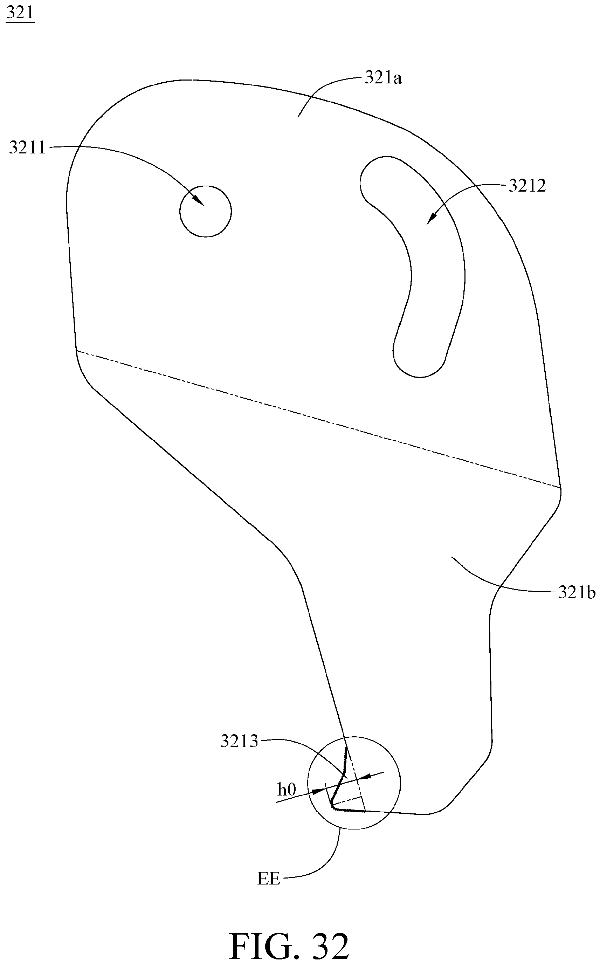

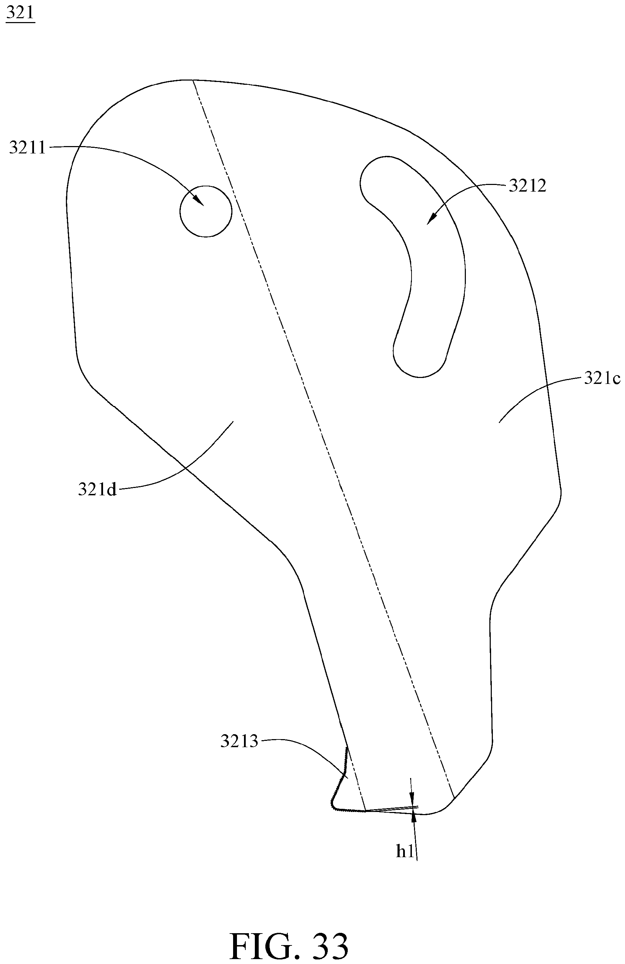

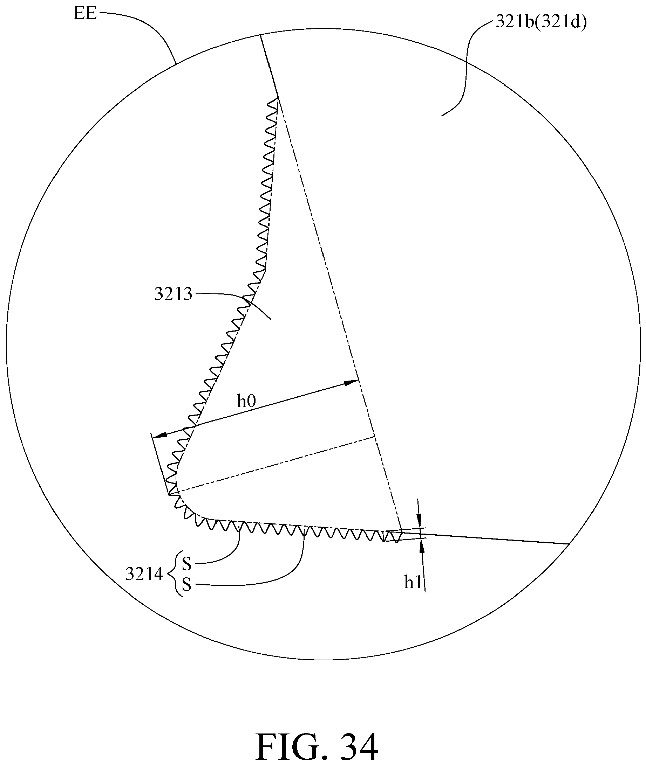

Fig. 32 and Fig. 33 are schematic views of a rotatable blade of an optical lens module according to the 5th embodiment of the present disclosure. Fig. 34 is an enlarged view of a region EE on the rotatable blade in Fig. 32. In the 5th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

In this embodiment, the rotatable blade 321 includes a rotatable portion 321a and a light blocking portion 321b. The rotatable blade 321 includes an outer peripheral portion 321c and an inner peripheral portion 321d. The outer peripheral portion 321c includes a part of the rotatable portion 321a and a part of the light blocking portion 321b, and the inner peripheral portion 321d includes another part of the rotatable portion 321a and another part of the light blocking portion 321b. The inner peripheral portion 321d includes a protruding segment 3213 of the light blocking portion 321b.

The inner peripheral portion 321d includes a light blocking structure 3214, and the light blocking structure 3214 includes a plurality of serrated projections S. The light blocking structure 3214 is distributed only on the light blocking portion 321b. As shown Fig. 34, the light blocking structure 3214 is formed on the protruding segment 3213, such that it can be interpreted that the protruding segment 3213 includes the light blocking structure 3214. The light blocking structure 3214 is integrally included in the rotatable blade 321.

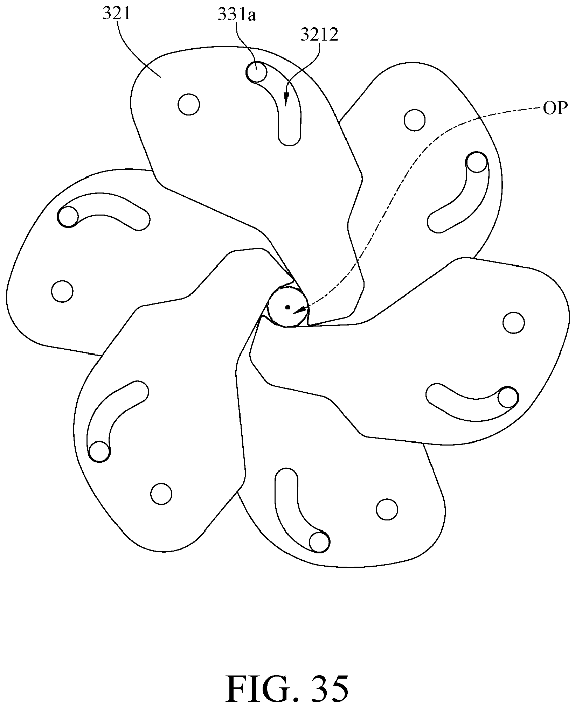

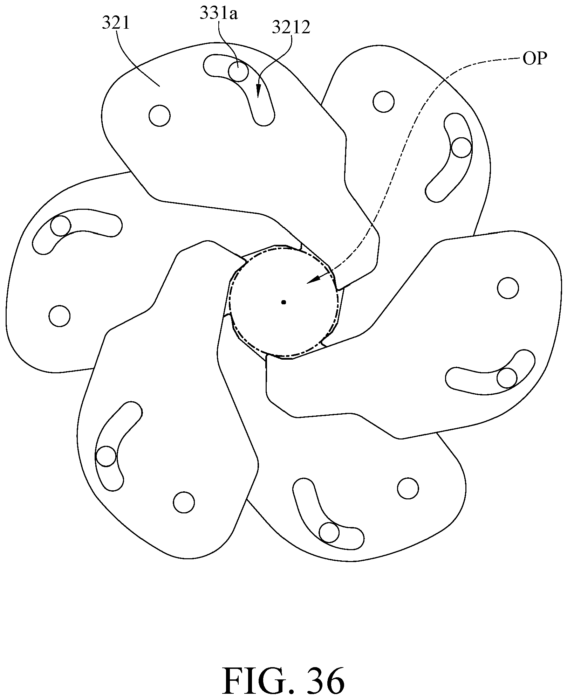

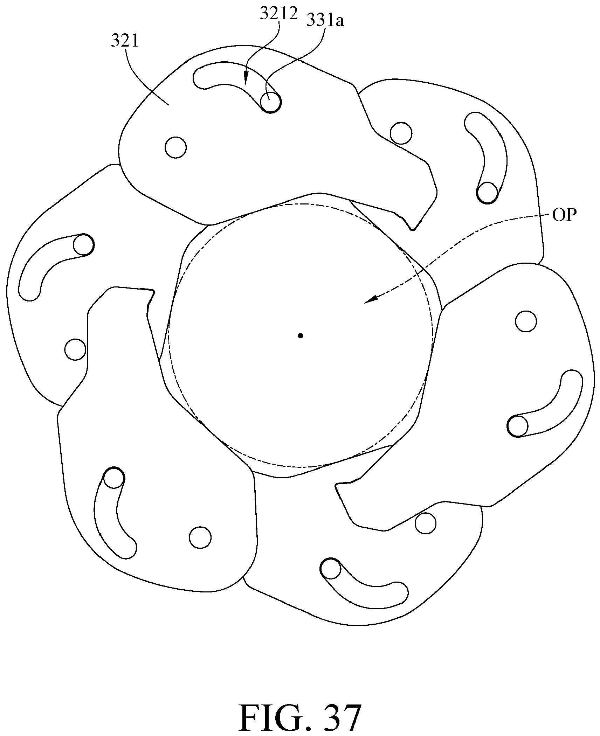

The rotatable structure 331a of the rotatable element of the optical lens module is disposed corresponding to the dynamic hole 3212 of the rotatable blade 321 so as to rotate the rotatable blade 321 to thereby vary the size of the light passing aperture OP. Fig. 35 is a schematic view of a blade assembly including the rotatable blades in Fig. 32 forming a small light passing aperture. Fig. 36 is a schematic view of the blade assembly including the rotatable blades in Fig. 32 forming a middle light passing aperture. Fig. 37 is a schematic view of the blade assembly including the rotatable blades in Fig. 32 forming a large light passing aperture.

When a maximum height of the protruding segment 3213 is h0, the following condition is satisfied: h0 = 0.257 mm.

When an average maximum height of the light blocking structure 3214 is h1, the following condition is satisfied: h1 = 0.012 mm. In this embodiment, as to any one of the rotatable blades 321, h1 is equal to an average of the maximum heights of all projections S.

## 6th Embodiment

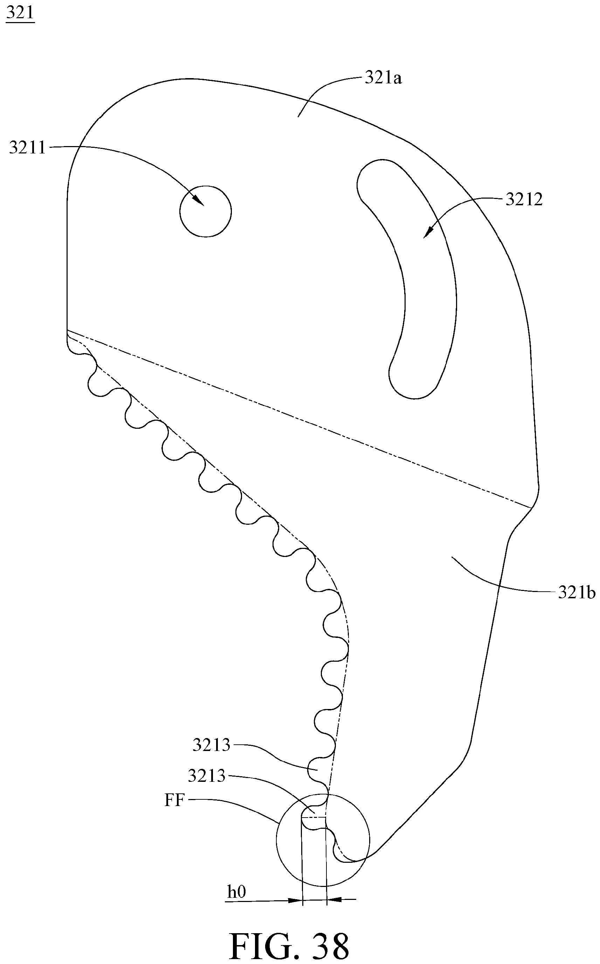

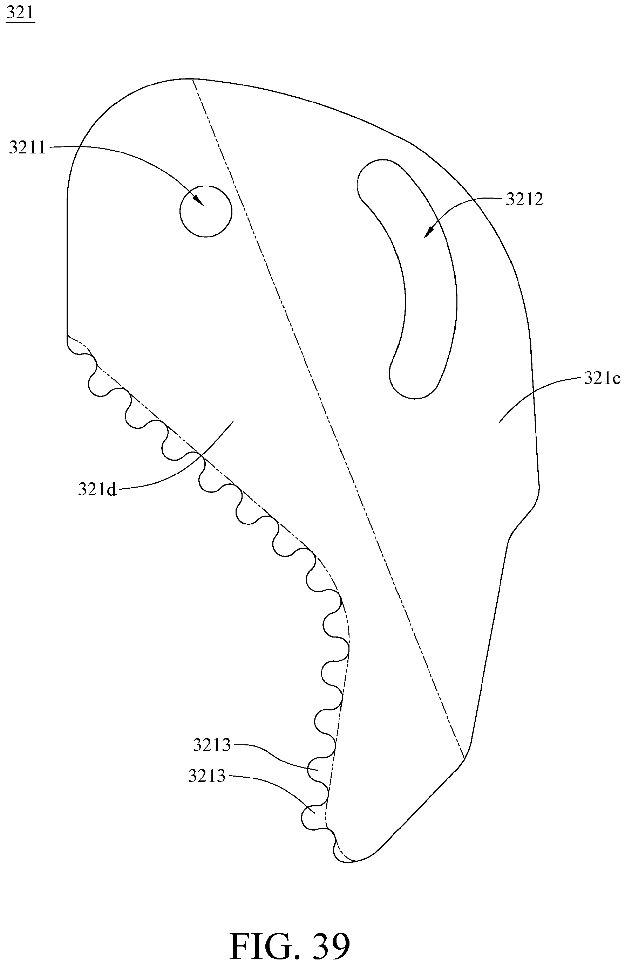

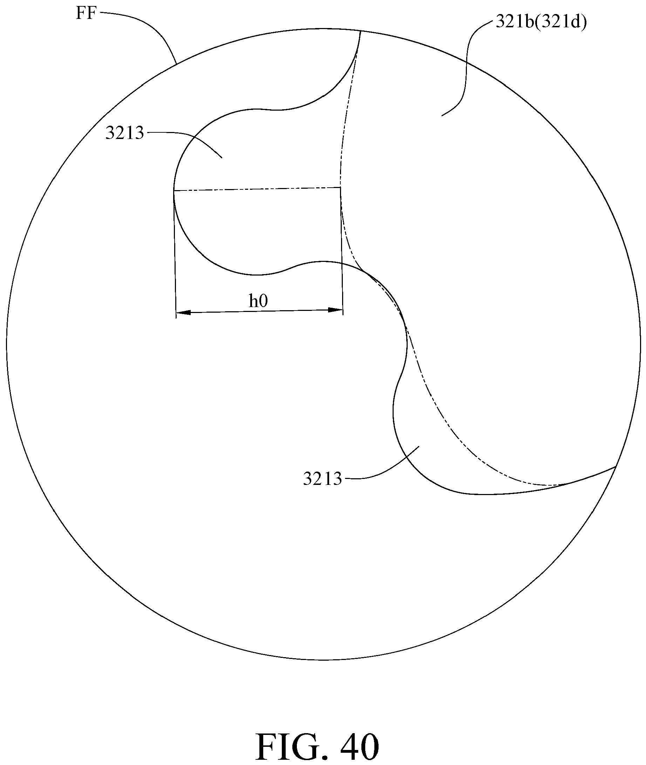

Fig. 38 and Fig. 39 are schematic views of a rotatable blade of an optical lens module according to the 6th embodiment of the present disclosure. Fig. 40 is an enlarged view of a region FF on the rotatable blade in Fig. 38. In the 6th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

In this embodiment, each rotatable blade 321 includes a plurality of protruding segments 3213, and each of the protruding segments 3213 extends and tapers toward the light passing aperture OP. The rotatable blade 321 includes a rotatable portion 321a and a light blocking portion 321b. The rotatable blade 321 includes an outer peripheral portion 321c and an inner peripheral portion 321d. The outer peripheral portion 321c includes a part of the rotatable portion 321a and a part of the light blocking portion 321b, and the inner peripheral portion 321d includes another part of the rotatable portion 321a and another part of the light blocking portion 321b. The inner peripheral portion 321d includes the protruding segments 3213 of the rotatable blade 321. Some of the protruding segments 3213 are formed on the rotatable portion 321a, and the other protruding segments 3213 are formed on the light blocking portion 321b. In this embodiment, each rotatable blade 321 includes a total of fourteen protruding segments 3213.

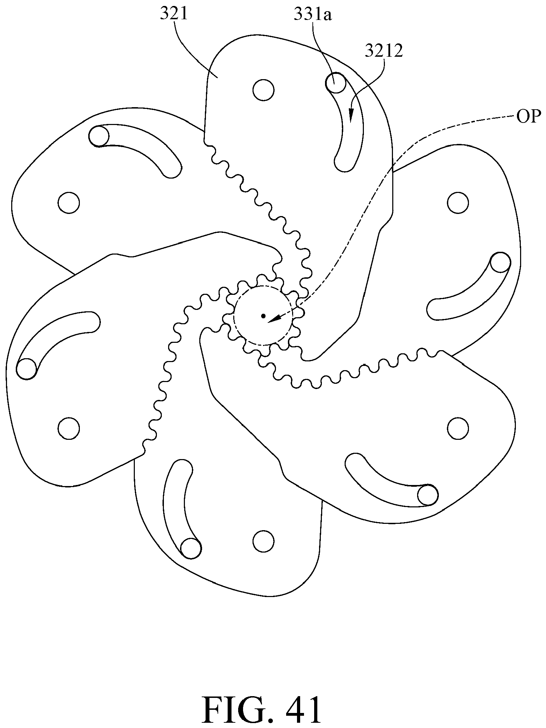

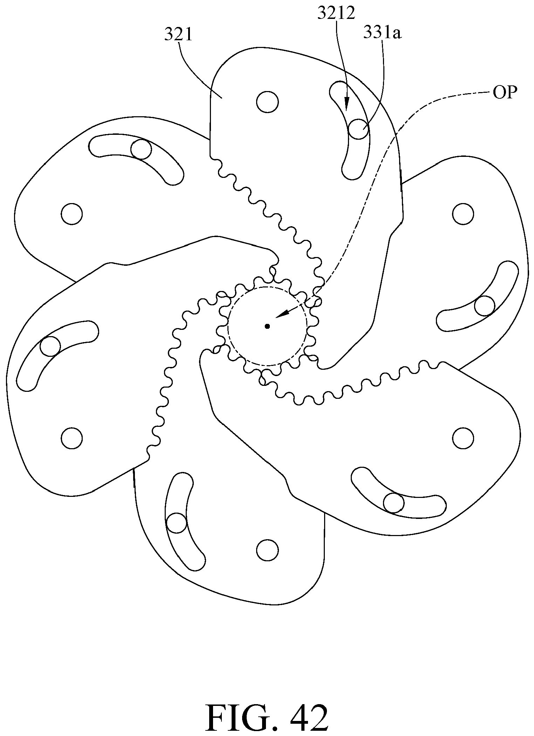

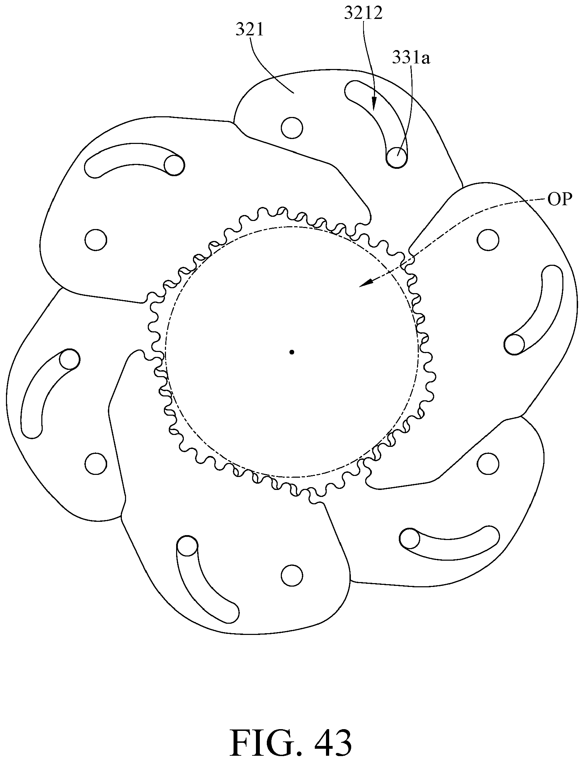

The rotatable structure 331a of the rotatable element of the optical lens module is disposed corresponding to the dynamic hole 3212 of the rotatable blade 321 so as to rotate the rotatable blade 321 to thereby vary the size of the light passing aperture OP. Fig. 41 is a schematic view of a blade assembly including the rotatable blades in Fig. 38 forming a small light passing aperture. Fig. 42 is a schematic view of the blade assembly including the rotatable blades in Fig. 38 forming a middle light passing aperture. Fig. 43 is a schematic view of the blade assembly including the rotatable blades in Fig. 38 forming a large light passing aperture.

When an average maximum height of the protruding segments 3213 of each rotatable blade 321 is h0, the following condition is satisfied: h0 = 0.2 mm.

## 7th Embodiment

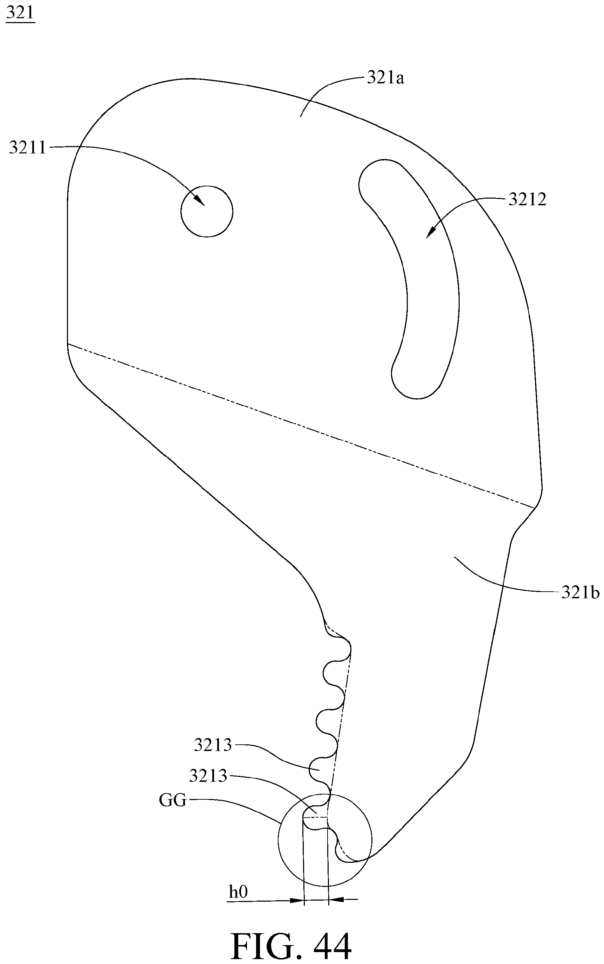

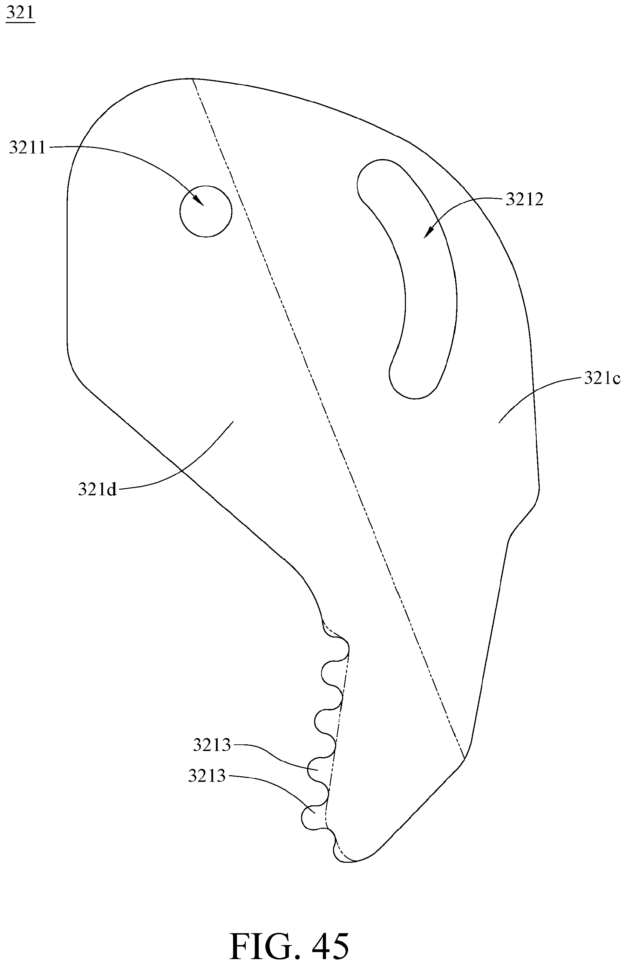

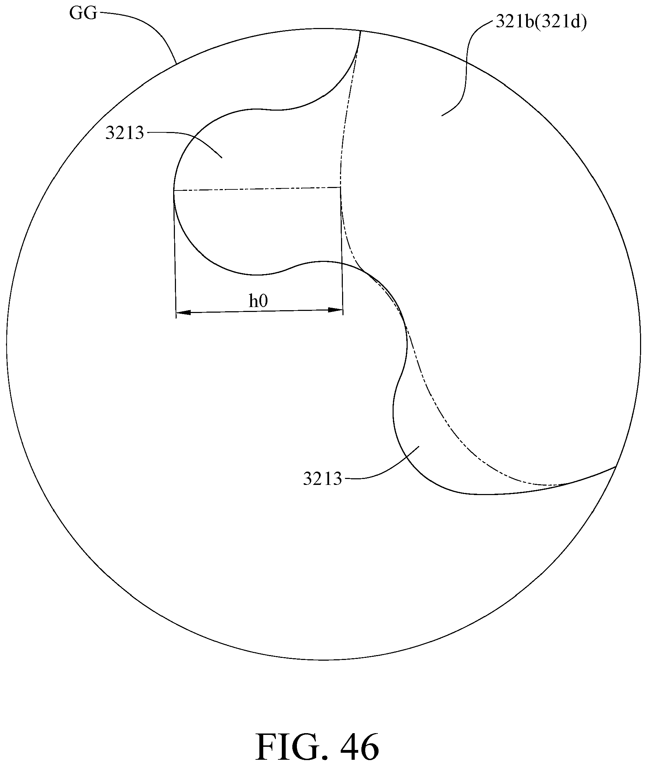

Fig. 44 and Fig. 45 are schematic views of a rotatable blade of an optical lens module according to the 7th embodiment of the present disclosure. Fig. 46 is an enlarged view of a region GG on the rotatable blade in Fig. 44. In the 7th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

In this embodiment, each rotatable blade 321 includes a plurality of protruding segments 3213, and each of the protruding segments 3213 extends and tapers toward the light passing aperture OP. The rotatable blade 321 includes a rotatable portion 321a and a light blocking portion 321b. The rotatable blade 321 includes an outer peripheral portion 321c and an inner peripheral portion 321d. The outer peripheral portion 321c includes a part of the rotatable portion 321a and a part of the light blocking portion 321b, and the inner peripheral portion 321d includes another part of the rotatable portion 321a and another part of the light blocking portion 321b. The inner peripheral portion 321d includes the protruding segments 3213 of the rotatable blade 321. All of the protruding segments 3213 are formed on the light blocking portion 321b. In this embodiment, each rotatable blade 321 includes a total of six protruding segments 3213.

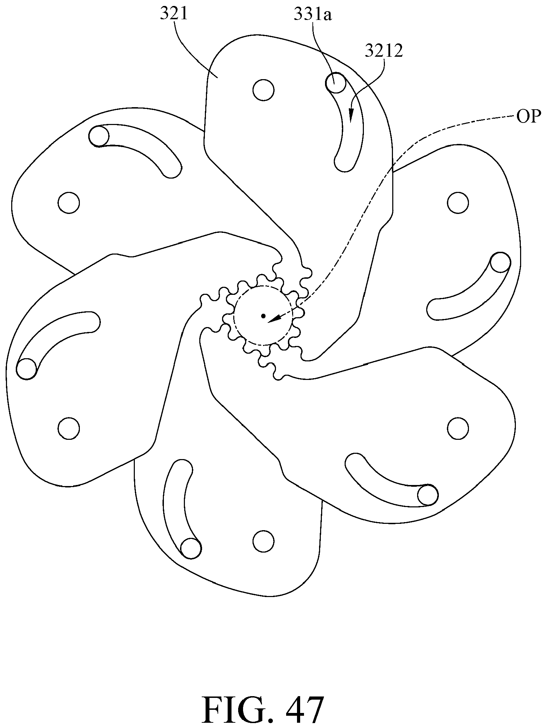

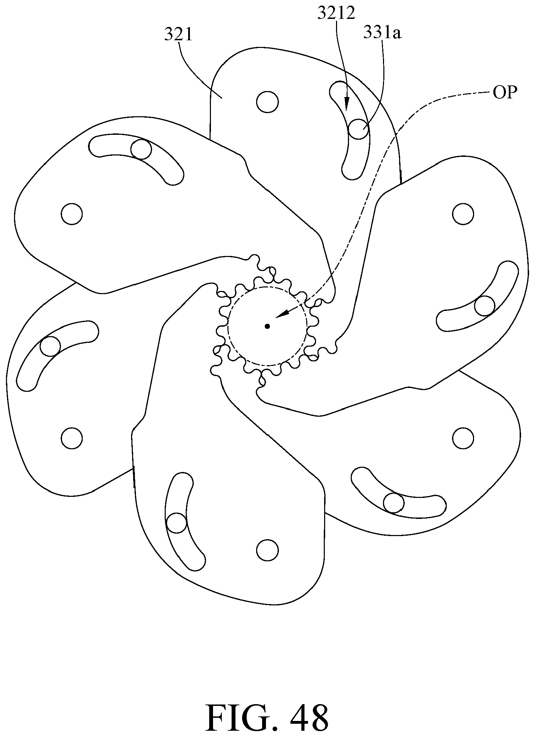

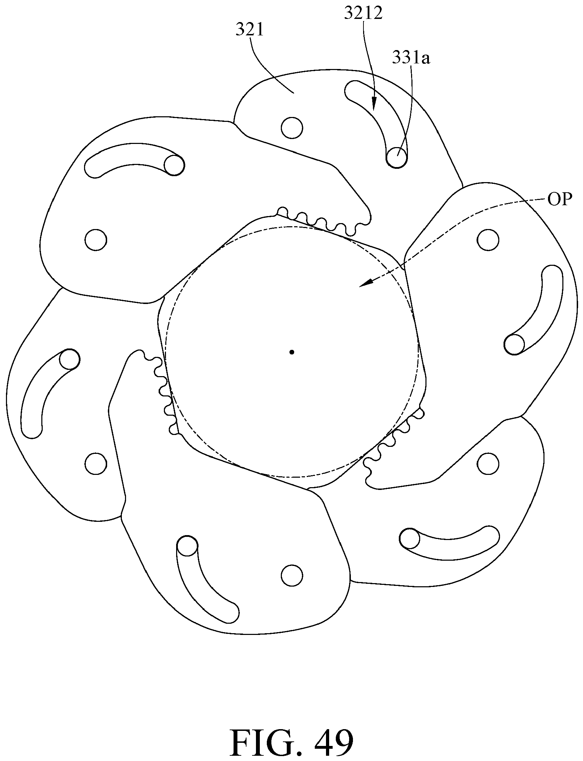

The rotatable structure 331a of the rotatable element of the optical lens module is disposed corresponding to the dynamic hole 3212 of the rotatable blade 321 so as to rotate the rotatable blade 321 to thereby vary the size of the light passing aperture OP. Fig. 47 is a schematic view of a blade assembly including the rotatable blades in Fig. 44 forming a small light passing aperture. Fig. 48 is a schematic view of the blade assembly including the rotatable blades in Fig. 44 forming a middle light passing aperture. Fig. 49 is a schematic view of the blade assembly including the rotatable blades in Fig. 44 forming a large light passing aperture.

When an average maximum height of the protruding segments 3213 of each rotatable blade 321 is h0, the following condition is satisfied: h0 = 0.2 mm.

### 8th Embodiment

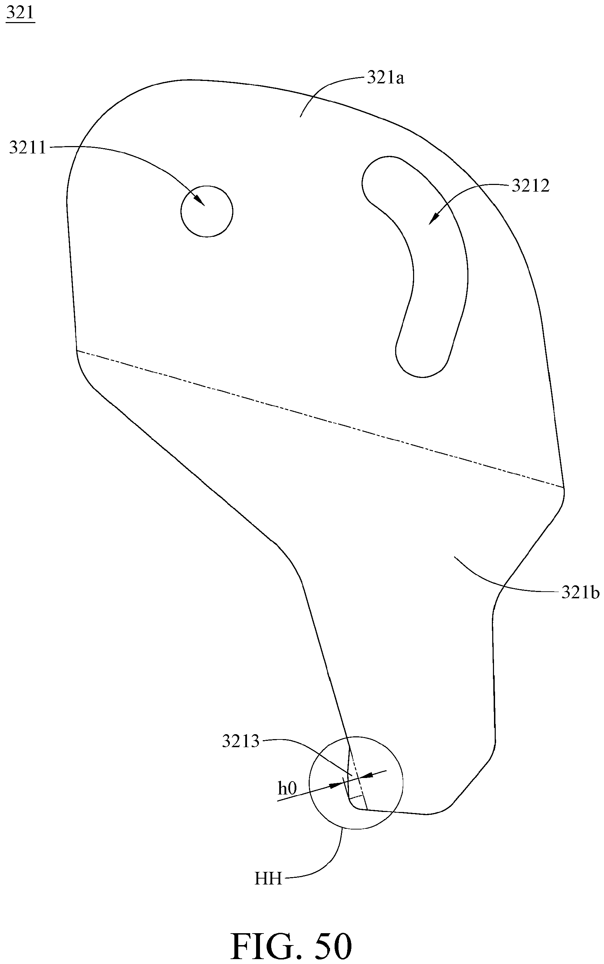

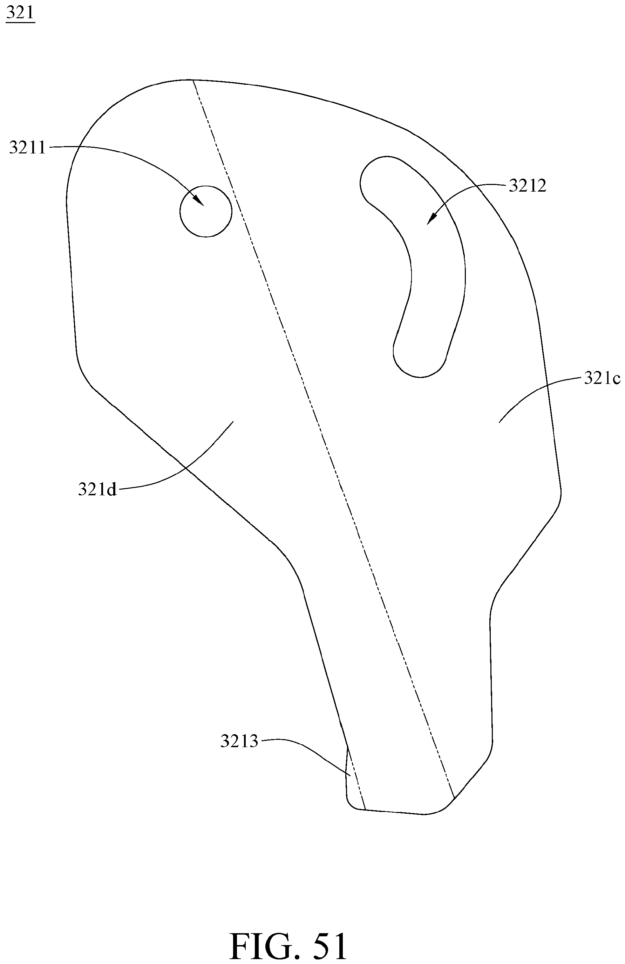

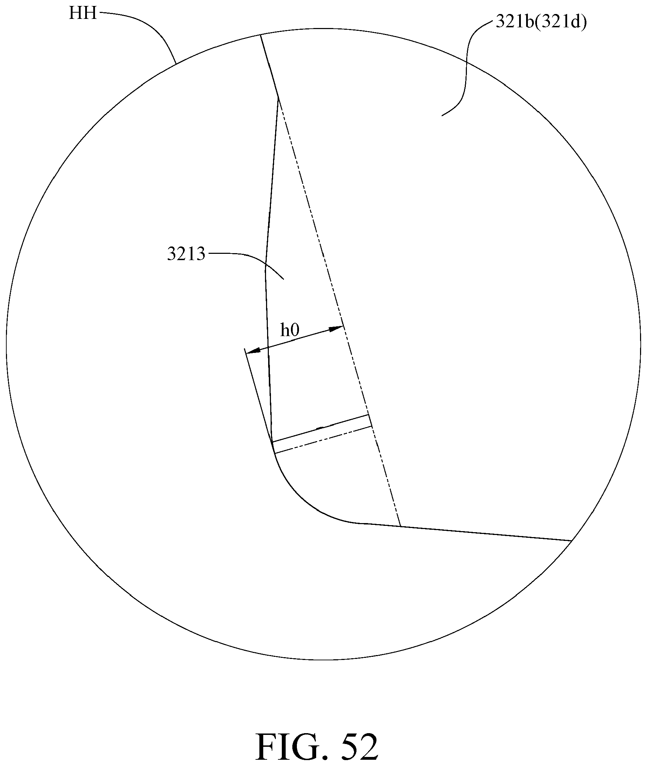

Fig. 50 and Fig. 51 are schematic views of a rotatable blade of an optical lens module according to the 8th embodiment of the present disclosure. Fig. 52 is an enlarged view of a region HH on the rotatable blade in Fig. 50. In the 8th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

In this embodiment, each rotatable blade 321 includes a protruding segment 3213, and the protruding segment 3213 extends and tapers toward the light passing aperture OP. The rotatable blade 321 includes a rotatable portion 321a and a light blocking portion 321b. The rotatable blade 321 includes an outer peripheral portion 321c and an inner peripheral portion 321d. The outer peripheral portion 321c includes a part of the rotatable portion 321a and a part of the light blocking portion 321b, and the inner peripheral portion 321d includes another part of the rotatable portion 321a and another part of the light blocking portion 321b. The inner peripheral portion 321d includes the protruding segment 3213 of the rotatable blade 321. The protruding segment 3213 is formed on the light blocking portion 321b.

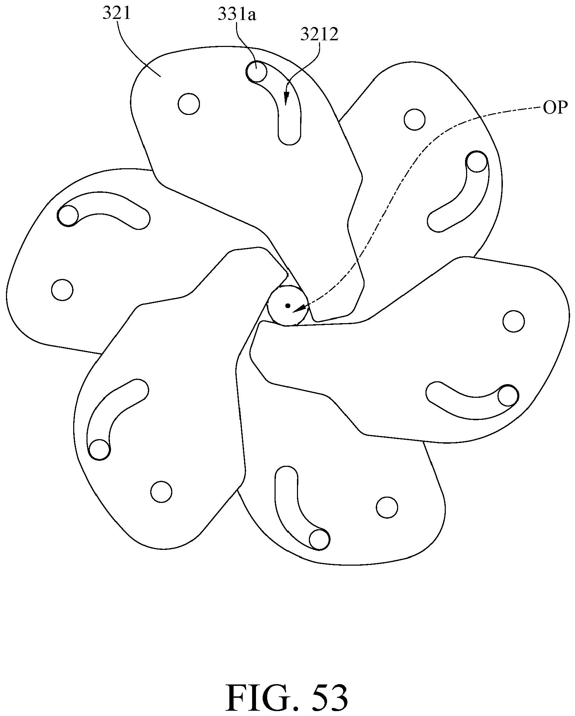

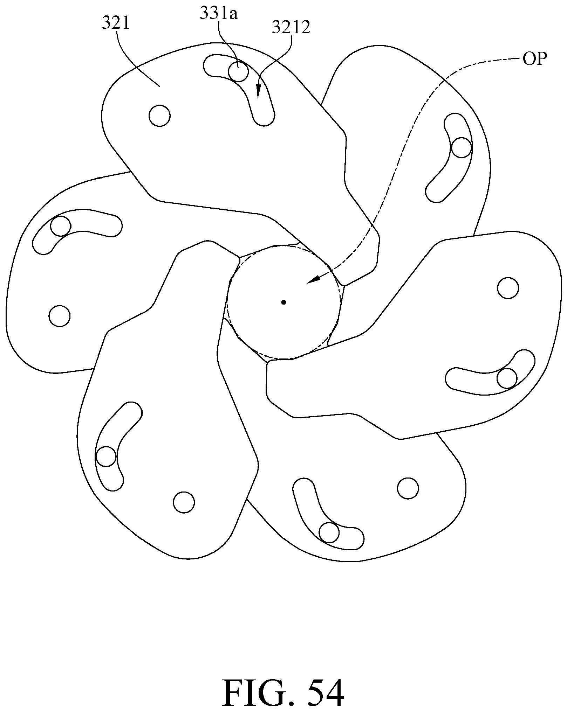

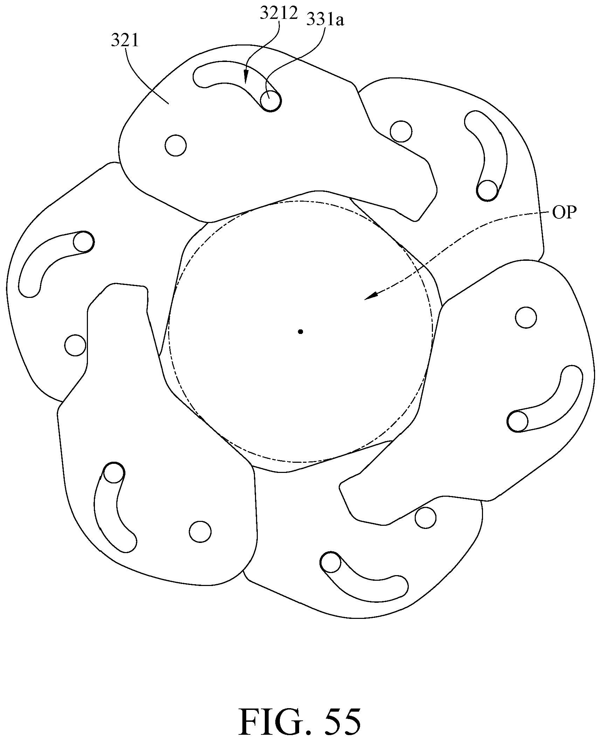

The rotatable structure 331a of the rotatable element of the optical lens module is disposed corresponding to the dynamic hole 3212 of the rotatable blade 321 so as to rotate the rotatable blade 321 to thereby vary the size of the light passing aperture OP. Fig. 53 is a schematic view of a blade assembly including the rotatable blades in Fig. 50 forming a small light passing aperture. Fig. 54 is a schematic view of the blade assembly including the rotatable blades in Fig. 50 forming a middle light passing aperture. Fig. 55 is a schematic view of the blade assembly including the rotatable blades in Fig. 50 forming a large light passing aperture.

When a maximum height of the protruding segment 3213 is h0, the following condition is satisfied: h0 = 0.122 mm.

### 9th Embodiment

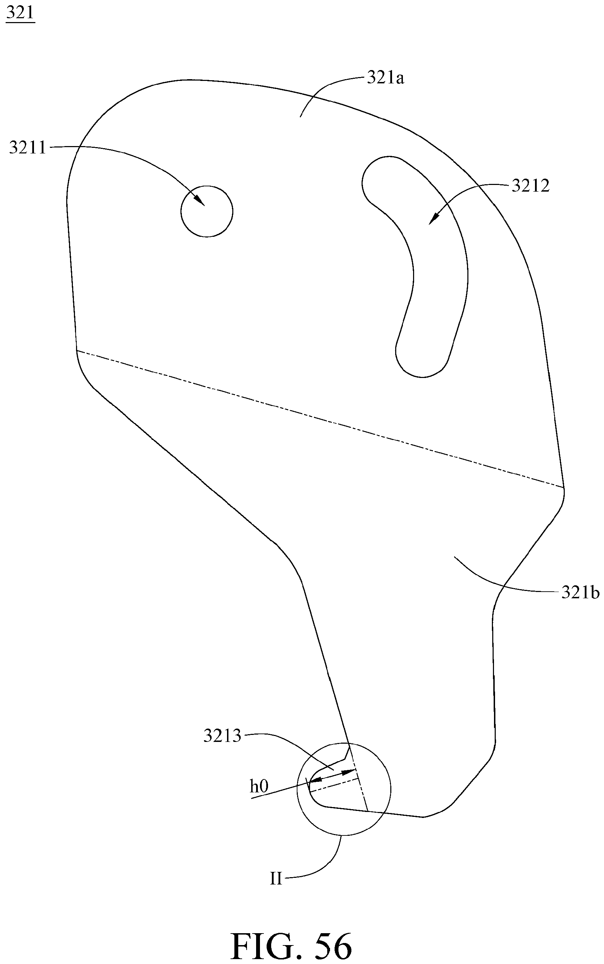

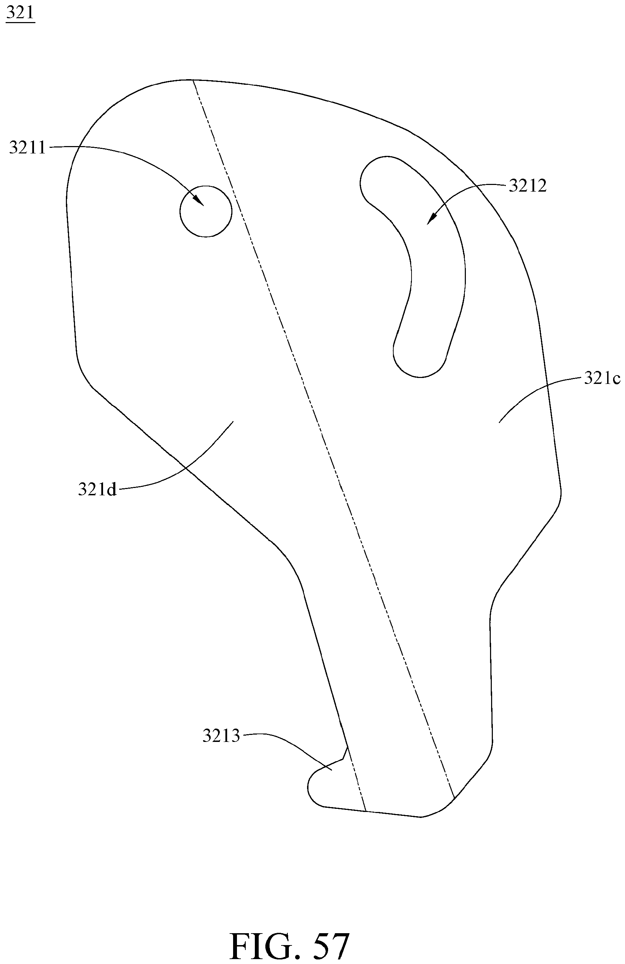

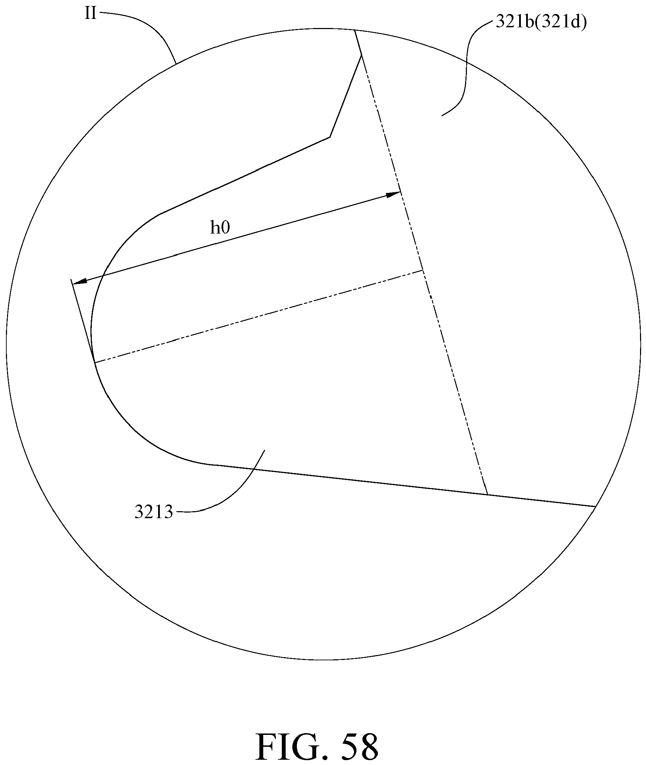

Fig. 56 and Fig. 57 are schematic views of a rotatable blade of an optical lens module according to the 9th embodiment of the present disclosure. Fig. 58 is an enlarged view of a region II on the rotatable blade in Fig. 56. In the 9th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

In this embodiment, each rotatable blade 321 includes a protruding segment 3213, and the protruding segment 3213 extends and tapers toward the light passing aperture OP. The rotatable blade 321 includes a rotatable portion 321a and a light blocking portion 321b. The rotatable blade 321 includes an outer peripheral portion 321c and an inner peripheral portion 321d. The outer peripheral portion 321c includes a part of the rotatable portion 321a and a part of the light blocking portion 321b, and the inner peripheral portion 321d includes another part of the rotatable portion 321a and another part of the light blocking portion 321b. The inner peripheral portion 321d includes the protruding segment 3213 of the rotatable blade 321. The protruding segment 3213 is formed on the light blocking portion 321b.

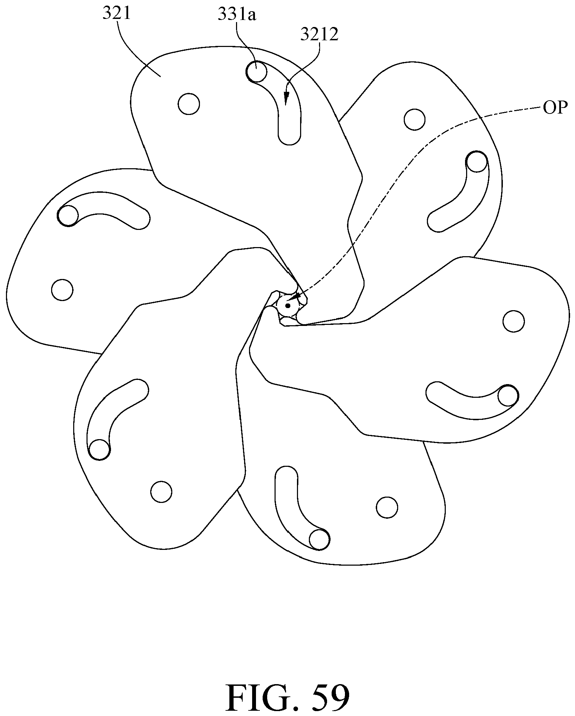

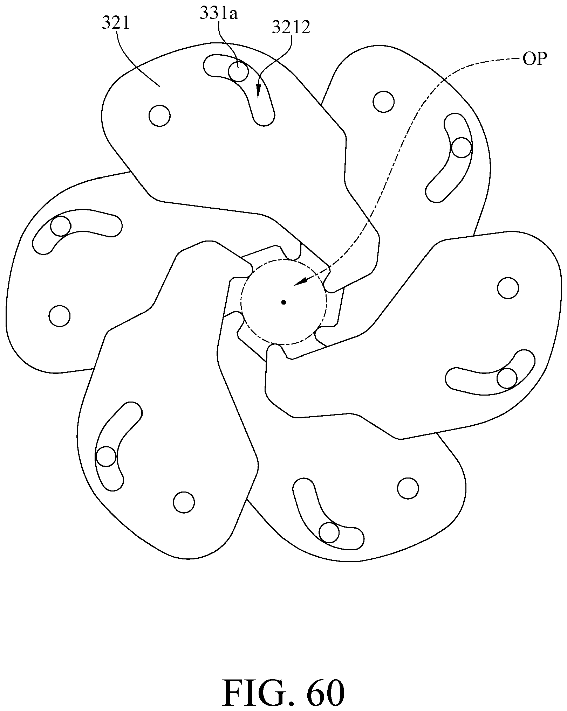

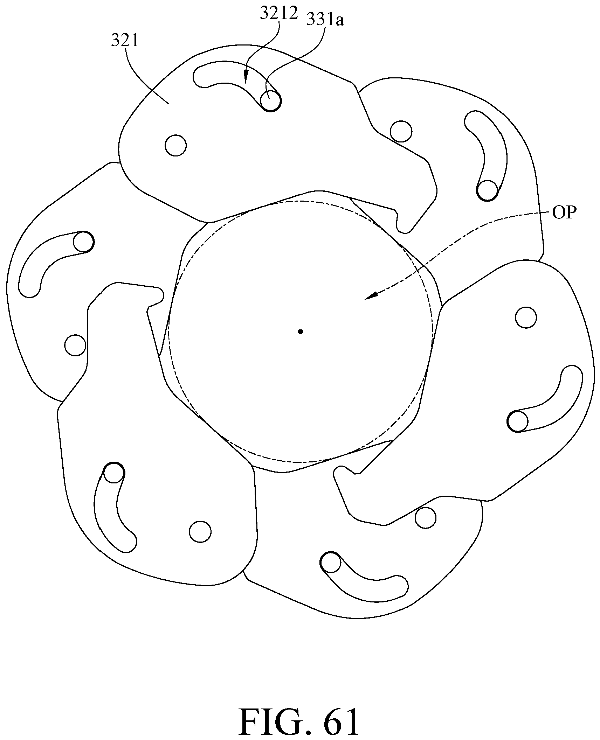

The rotatable structure 331a of the rotatable element of the optical lens module is disposed corresponding to the dynamic hole 3212 of the rotatable blade 321 so as to rotate the rotatable blade 321 to thereby vary the size of the light passing aperture OP. Fig. 59 is a schematic view of a blade assembly including the rotatable blades in Fig. 56 forming a small light passing aperture. Fig. 60 is a schematic view of the blade assembly including the rotatable blades in Fig. 56 forming a middle light passing aperture. Fig. 61 is a schematic view of the blade assembly including the rotatable blades in Fig. 56 forming a large light passing aperture.

When a maximum height of the protruding segment 3213 is h0, the following condition is satisfied: h0 = 0.409 mm.

### 10th Embodiment

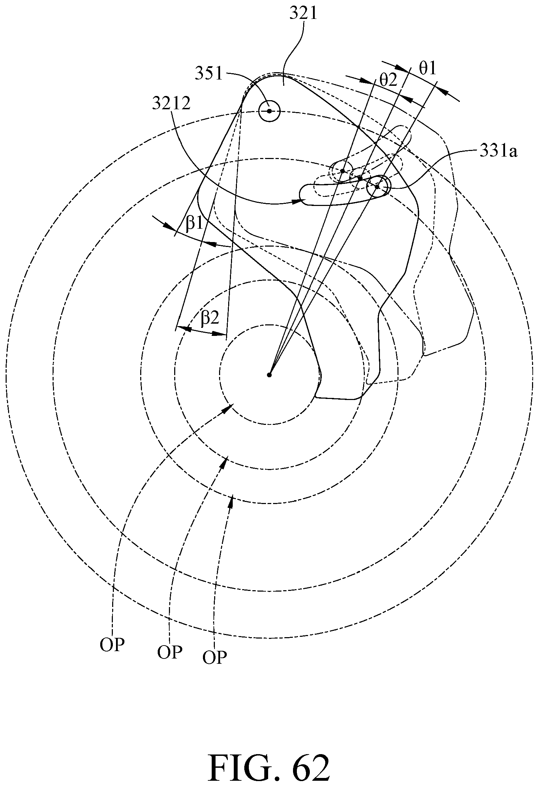

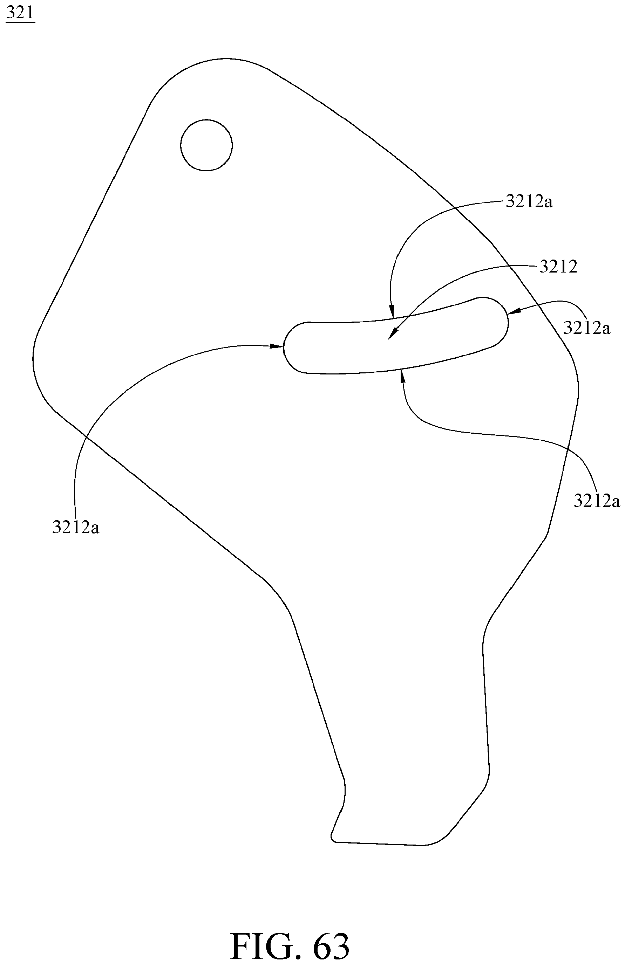

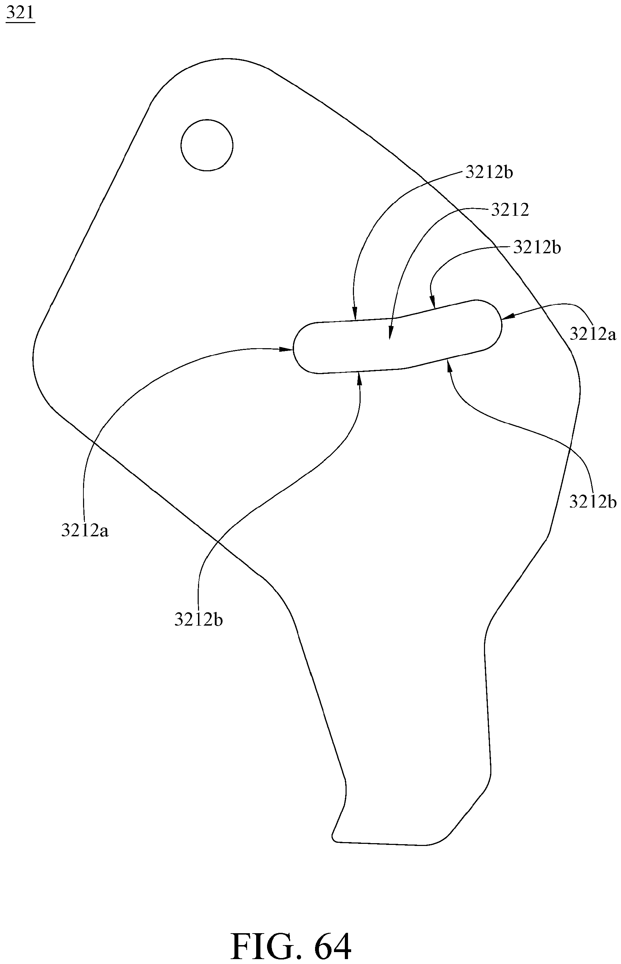

Fig. 62 is a schematic view of rotation of a blade assembly of an optical lens module according to the 10th embodiment of the present disclosure. Fig. 63 is a schematic view of a rotatable blade in Fig. 62. Fig. 64 is a schematic view of another implementation of the rotatable blade in Fig. 62. In the 10th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

The rotatable blade 321 of the optical lens module can be rotated by a rotatable element of a driving component with a corresponding positioning structure 351 of a positioning element as a rotation axis. The rotatable element 331 rotates to change the position of the rotatable structure 331a in a corresponding dynamic hole 3212.

The dynamic hole 3212 extends in a minor axial direction of the rotatable blade 321 and has a concave side facing toward the positioning structure 351. Based on different positions of the rotatable structure 331a in the corresponding dynamic hole 3212, the light passing aperture OP formed by the rotatable blades 321 can have different sizes. The rotatable structures 331a can rotate counterclockwise, such that the rotatable blades 321 can encircle to form a light passing aperture OP with the maximum size. The rotatable structures 331a can rotate clockwise, such that the rotatable blades 321 can encircle to form a light passing aperture OP with the minimum size.

When the light passing aperture OP has the minimum size, the rotatable blade 321 is at a first position. When the light passing aperture OP has a middle size, the rotatable blade 321 is at a third position. When the light passing aperture OP has the maximum size, the rotatable blade 321 is at a second position.

Since the rotatable element 331 rotates by an angle $\Theta 1$ about a center of the light passing aperture OP, the rotatable blade 321 moves from the first position to the third position, and the rotatable blade 321 rotates by an angle $\beta 1$ with respect to the positioning structure 351. Herein, the angle $\theta 1$ is 5.0 degrees, and the angle $\beta 1$ is 10.5 degrees.

Since the rotatable element 331 rotates by an angle $\theta 2$ about the center of the light passing aperture OP, the rotatable blade 321 moves from the third position to the second positon, and the rotatable blade 321 rotates by an angle $\beta 2$ with respect to the positioning structure 351. Herein, the angle $\theta 2$ is 5.0 degrees, and the angle $\beta 2$ is 12.7 degrees.

Fig. 63 exemplarily depicts that the dynamic hole 3212 of the rotatable blade 321 has an edge including variable speed rail design consisting of arc lines 3212a, while the dynamic hole 3212 of the rotatable blade 321 can have a different shape. Fig. 64 exemplarily depicts that the dynamic hole 3212 has an edge including variable speed rail design consisting of arc lines 3212a and straight lines 3212b. Therefore, the rotation of the rotatable structure 331a can be controlled by determining the shape of the dynamic hole 3212 so as to change the rotational speed of the rotatable blade 321. In this embodiment, the dynamic hole 3212 results in approximately equal rotational speed for both the counterclockwise rotation as well as the clockwise rotation of the rotatable structure 331a, such that a speed for forming a small light passing aperture OP is approximately equal to that for forming a large light passing aperture OP.

**11th Embodiment**

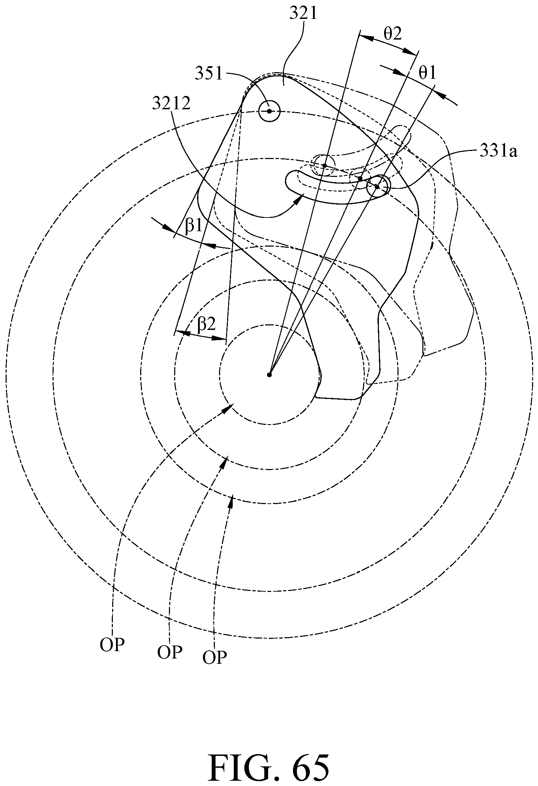

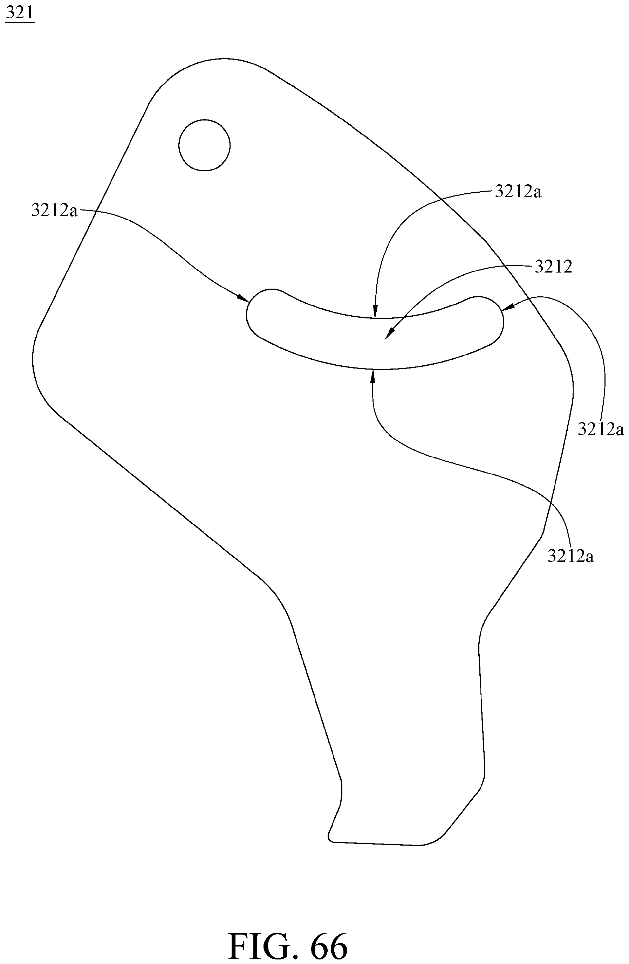

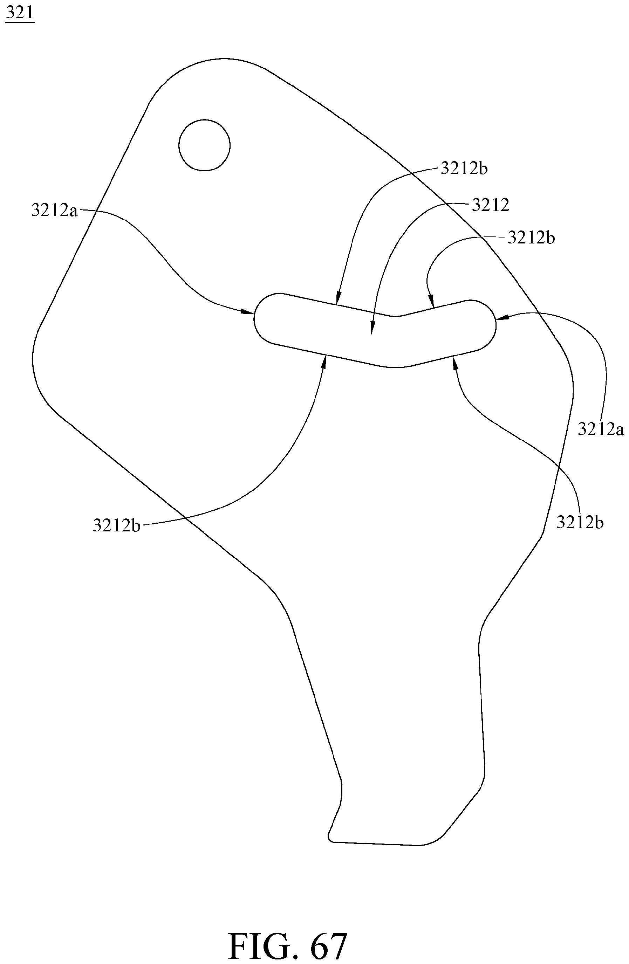

Fig. 65 is a schematic view of rotation of a blade assembly of an optical lens module according to the 11th embodiment of the present disclosure. Fig. 66 is a schematic view of a rotatable blade in Fig. 65. Fig. 67 is a schematic view of another implementation of the rotatable blade in Fig. 65 In the 11th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

The rotatable blade 321 of the optical lens module can be rotated by a rotatable element of a driving component with a corresponding positioning structure 351 of a positioning element as a rotation axis. The rotatable element 331 rotates to change the position of the rotatable structure 331a in a corresponding dynamic hole 3212.

The dynamic hole 3212 extends in a minor axial direction of the rotatable blade 321 and has a concave side facing toward the positioning structure 351. Based on different positions of the rotatable structure 331a in the corresponding dynamic hole 3212, the light passing aperture OP formed by the rotatable blades 321 can have different sizes. The rotatable structures 331a can rotate counterclockwise, such that the rotatable blades 321 can encircle to form a light passing aperture OP with the maximum size. The rotatable structures 331a can rotate clockwise, such that the rotatable blades 321 can encircle to form a light passing aperture OP with the minimum size.

When the light passing aperture OP has the minimum size, the rotatable blade 321 is at a first position. When the light passing aperture OP has a middle size, the rotatable blade 321 is at a third position. When the light passing aperture OP has the maximum size, the rotatable blade 321 is at a second position.

Since the rotatable element 331 rotates by an angle $\Theta 1$ about a center of the light passing aperture OP, the rotatable blade 321 moves from the first position to the third position, and the rotatable blade 321 rotates by an angle $\beta 1$ with respect to the positioning structure 351. Herein, the angle $\Theta 1$ is 5.0 degrees, and the angle $\beta 1$ is 10.5 degrees.

Since the rotatable element 331 rotates by an angle θ2 about the center of the light passing aperture OP, the rotatable blade 321 moves from the third position to the second positon, and the rotatable blade 321 rotates by an angle β2 with respect to the positioning structure 351. Herein, the angle θ2 is 10.0 degrees, and the angle β2 is 12.7 degrees.

Fig. 66 exemplarily depicts that the dynamic hole 3212 of the rotatable blade 321 has an edge including variable speed rail design consisting of arc lines 3212a, while the dynamic hole 3212 of the rotatable blade 321 can have a different shape. Fig. 67 exemplarily depicts that the dynamic hole 3212 has an edge including variable speed rail design consisting of arc lines 3212a and straight lines 3212b. Therefore, the rotation of the rotatable structure 331a can be controlled by determining the shape of the dynamic hole 3212 so as to change the rotational speed of the rotatable blade 321. In this embodiment, the dynamic hole 3212 results in a slower counterclockwise rotation of the rotatable structure 331a than the clockwise rotation thereof, such that a speed for forming a small light passing aperture OP is larger than that for forming a large light passing aperture OP.

## 12th Embodiment

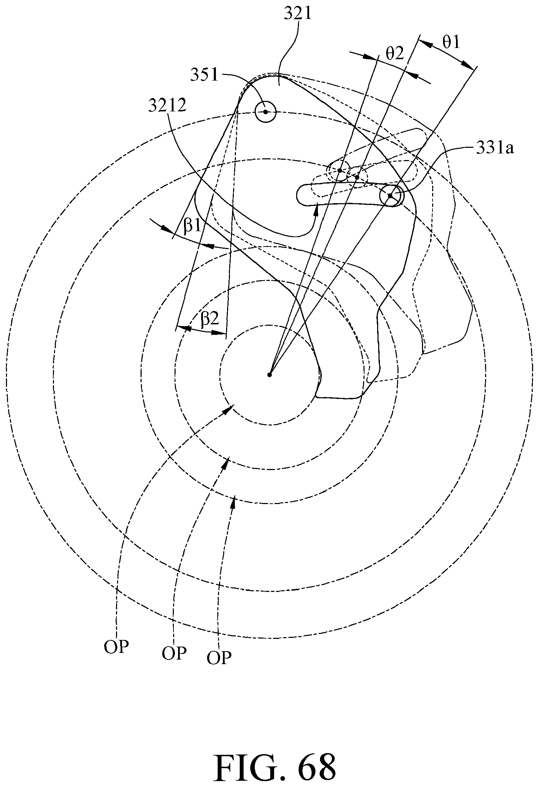

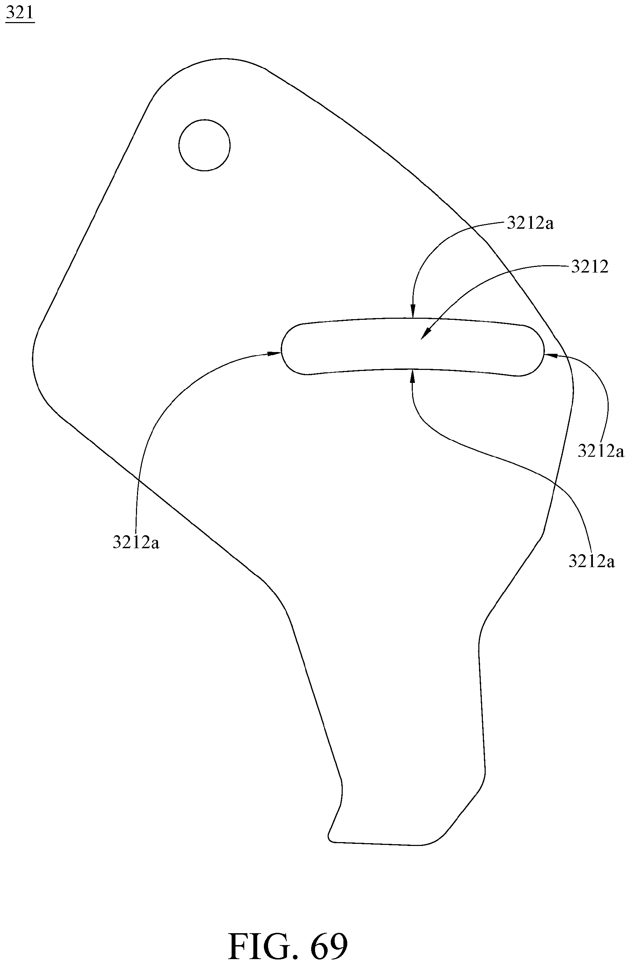

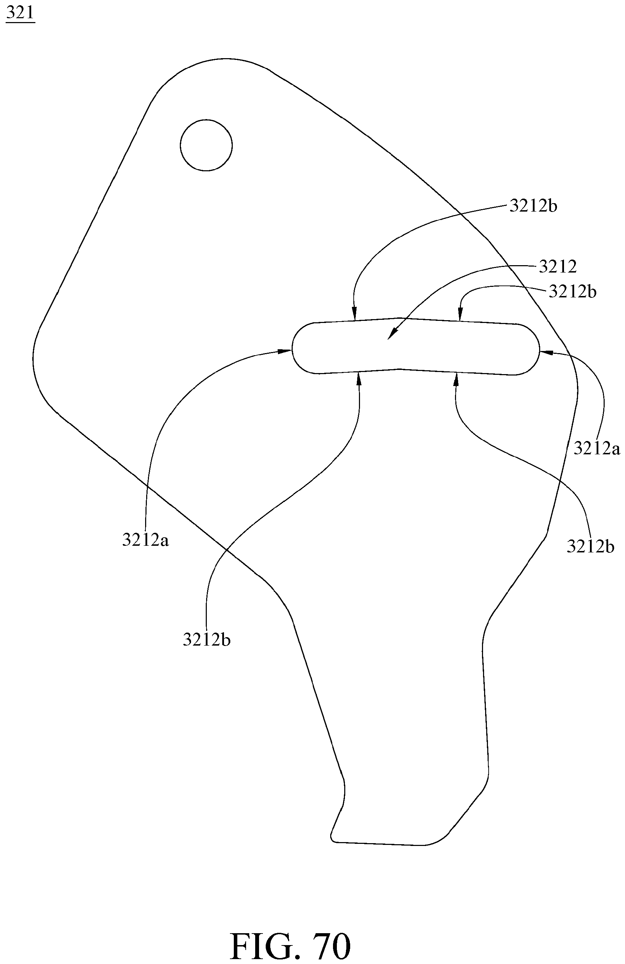

Fig. 68 is a schematic view of rotation of a blade assembly of an optical lens module according to the 12th embodiment of the present disclosure. Fig. 69 is a schematic view of a rotatable blade in Fig. 68. Fig. 70 is a schematic view of another implementation of the rotatable blade in Fig. 68. In the 12th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

The rotatable blade 321 of the optical lens module can be rotated by a rotatable element of a driving component with a corresponding positioning structure 351 of a positioning element as a rotation axis. The rotatable element rotates to change the position of the rotatable structure 331a in a corresponding dynamic hole 3212.

The dynamic hole 3212 extends in a minor axial direction of the rotatable blade 321 and has a concave side opposite to the positioning structure 351. Based on different positions of the rotatable structure 331a in the corresponding dynamic hole 3212, the light passing aperture OP formed by the rotatable blades 321 can have different sizes. The rotatable structures 331a can rotate counterclockwise, such that the rotatable blades 321 can encircle to form a light passing aperture OP with the maximum size. The rotatable structures 331a can rotate clockwise, such that the rotatable blades 321 can encircle to form a light passing aperture OP with the minimum size.

When the light passing aperture OP has the minimum size, the rotatable blade 321 is at a first position. When the light passing aperture OP has a middle size, the rotatable blade 321 is at a third position. When the light passing aperture OP has the maximum size, the rotatable blade 321 is at a second position.

Since the rotatable element 331 rotates by an angle θ1 about a center of the light passing aperture OP, the rotatable blade 321 moves from the first position to the third position, and the rotatable blade 321 rotates by an angle β1 with respect to the positioning structure 351. Herein, the angle θ1 is 10.0 degrees, and the angle β1 is 10.5 degrees.

Since the rotatable element 331 rotates by an angle θ2 about the center of the light passing aperture OP, the rotatable blade 321 moves from the third position to the second positon, and the rotatable blade 321 rotates by an angle β2 with respect to the positioning structure 351. Herein, the angle θ2 is 5.0 degrees, and the angle β2 is 12.7 degrees.

Fig. 69 exemplarily depicts that the dynamic hole 3212 of the rotatable blade 321 has an edge including variable speed rail design consisting of arc lines 3212a, while the dynamic hole 3212 of the rotatable blade 321 can have a different shape. Fig. 70 exemplarily depicts that the dynamic hole 3212 has an edge including variable speed rail design consisting of arc lines 3212a and straight lines 3212b. Therefore, the rotation of the rotatable structure 331a can be controlled by determining the shape of the dynamic hole 3212 so as to change the rotational speed of the rotatable blade 321. In this embodiment, the dynamic hole 3212 results in a faster counterclockwise rotation of the rotatable structure 331a than the clockwise rotation thereof, such that a speed for forming a small light passing aperture OP is smaller than that for forming a large light passing aperture OP.

## 13th Embodiment

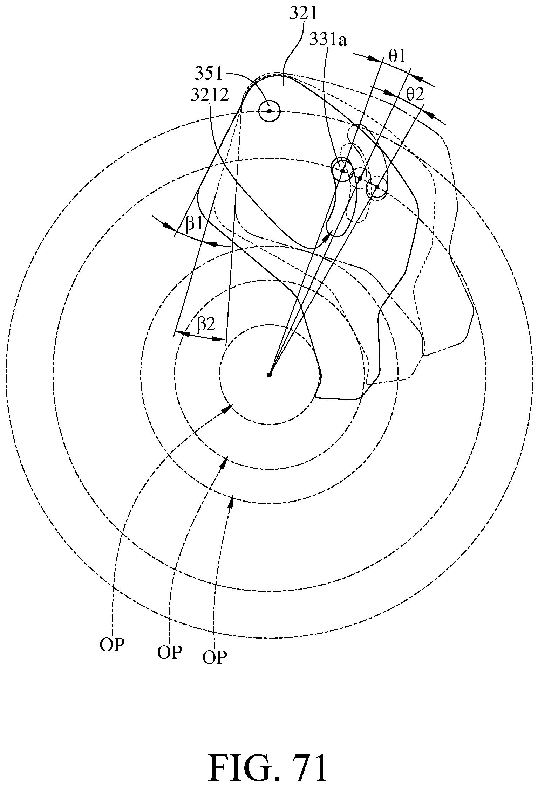

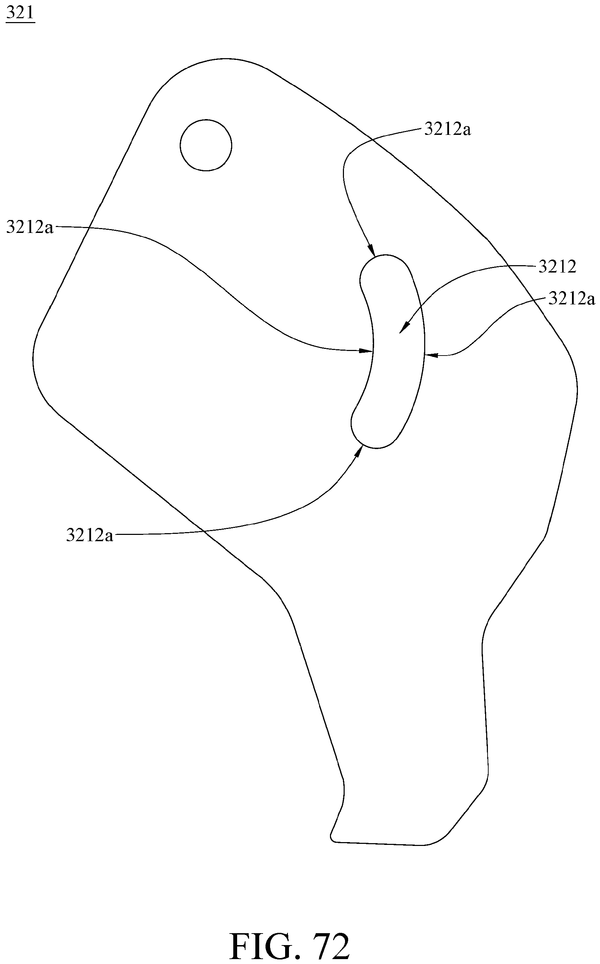

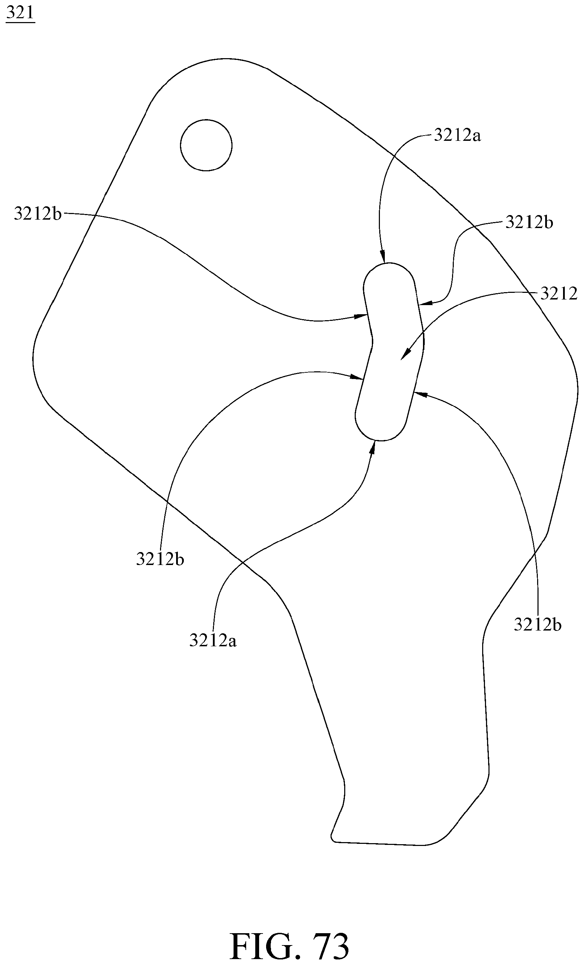

Fig. 71 is a schematic view of rotation of a blade assembly of an optical lens module according to the 13th embodiment of the present disclosure. Fig. 72 is a schematic view of a rotatable blade in Fig. 71. Fig. 73 is a schematic view of another implementation of the rotatable blade in Fig. 71. In the 13th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

The rotatable blade 321 of the optical lens module can be rotated by a rotatable element of a driving component with a corresponding positioning structure 351 of a positioning element as a rotation axis. The rotatable element rotates to change the position of the rotatable structure 331a in a corresponding dynamic hole 3212.

The dynamic hole 3212 extends in a major axial direction of the rotatable blade 321 and has a concave side facing toward the positioning structure 351. Based on different positions of the rotatable structure 331a in the corresponding dynamic hole 3212, the light passing aperture OP formed by the rotatable blades 321 can have different sizes. The rotatable structures 331a can rotate clockwise, such that the rotatable blades 321 can encircle to form a light passing aperture OP with the maximum size. The rotatable structures 331a can rotate counterclockwise, such that the rotatable blades 321 can encircle to form a light passing aperture OP with the minimum size.

When the light passing aperture OP has the minimum size, the rotatable blade 321 is at a first position. When the light passing aperture OP has a middle size, the rotatable blade 321 is at a third position. When the light passing aperture OP has the maximum size, the rotatable blade 321 is at a second position.

Since the rotatable element 331 rotates by an angle $\theta1$ about a center of the light passing aperture OP, the rotatable blade 321 moves from the first position to the third position, and the rotatable blade 321 rotates by an angle $\beta1$ with respect to the positioning structure 351. Herein, the angle $\theta1$ is 5.0 degrees, and the angle $\beta1$ is 10.5 degrees.

Since the rotatable element 331 rotates by an angle $\theta2$ about the center of the light passing aperture OP, the rotatable blade 321 moves from the third position to the second positon, and the rotatable blade 321 rotates by an angle $\beta2$ with respect to the positioning structure 351. Herein, the angle $\theta2$ is 5.0 degrees, and the angle $\beta2$ is 12.7 degrees.

Fig. 72 exemplarily depicts that the dynamic hole 3212 of the rotatable blade 321 has an edge including variable speed rail design consisting of arc lines 3212a, while the dynamic hole 3212 of the rotatable blade 321 can have a different shape. Fig. 73 exemplarily depicts that the dynamic hole 3212 has an edge including variable speed rail design consisting of arc lines 3212a and straight lines 3212b. Therefore, the rotation of the rotatable structure 331a can be controlled by determining the shape of the dynamic hole 3212 so as to change the rotational speed of the rotatable blade 321. In this embodiment, the dynamic hole 3212 results in approximately equal rotational speed for both the counterclockwise rotation as well as the clockwise rotation of the rotatable structure 331a, such that a speed for forming a small light passing aperture OP is approximately equal to that for forming a large light passing aperture OP.

## 14th Embodiment

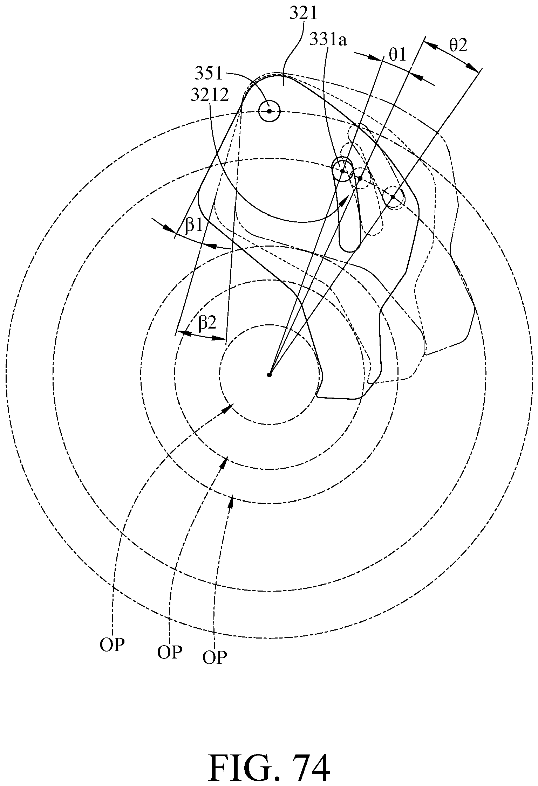

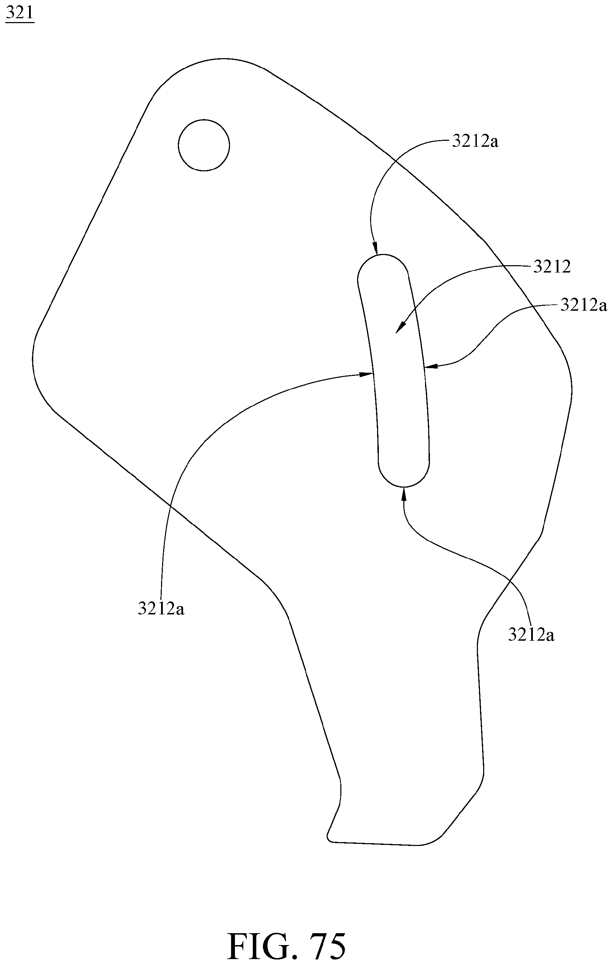

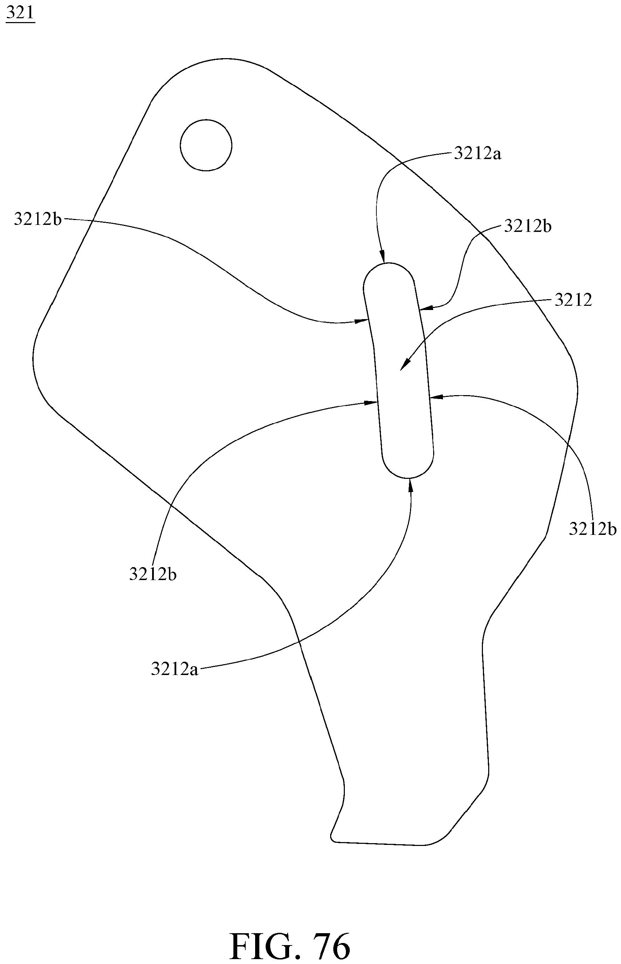

Fig. 74 is a schematic view of rotation of a blade assembly of an optical lens module according to the 14th embodiment of the present disclosure. Fig. 75 is a schematic view of a rotatable blade in Fig. 74. Fig. 76 is a schematic view of another implementation of the rotatable blade in Fig. 74. In the 14th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

The rotatable blade 321 of the optical lens module can be rotated by a rotatable element of a driving component with a corresponding positioning structure 351 of a positioning element as a rotation axis. The rotatable element rotates to change the position of the rotatable structure 331a in a corresponding dynamic hole 3212.

The dynamic hole 3212 extends in a major axial direction of the rotatable blade 321 and has a concave side facing toward the positioning structure 351. Based on different positions of the rotatable structure 331a in the corresponding dynamic hole 3212, the light passing aperture OP formed by the rotatable blades 321 can have different sizes. The rotatable structures 331a can rotate clockwise, such that the rotatable blades 321 can encircle to form a light passing aperture OP with the maximum size. The rotatable structures 331a can rotate counterclockwise, such that the rotatable blades 321 can encircle to form a light passing aperture OP with the minimum size.

When the light passing aperture OP has the minimum size, the rotatable blade 321 is at a first position. When the light passing aperture OP has a middle size, the rotatable blade 321 is at a third position. When the light passing aperture OP has the maximum size, the rotatable blade 321 is at a second position.

Since the rotatable element 331 rotates by an angle $\theta1$ about a center of the light passing aperture OP, the rotatable blade 321 moves from the first position to the third position, and the rotatable blade 321 rotates by an angle $\beta1$ with respect to the positioning structure 351. Herein, the angle $\theta1$ is 5.0 degrees, and the angle $\beta1$ is 10.5 degrees.

Since the rotatable element 331 rotates by an angle $\theta2$ about the center of the light passing aperture OP, the rotatable blade 321 moves from the third position to the second positon, and the rotatable blade 321 rotates by an angle $\beta2$ with respect to the positioning structure 351. Herein, the angle $\theta2$ is 10.0 degrees, and the angle $\beta2$ is 12.7 degrees.

Fig. 75 exemplarily depicts that the dynamic hole 3212 of the rotatable blade 321 has an edge including variable speed rail design consisting of arc lines 3212a, while the dynamic hole 3212 of the rotatable blade 321 can have a different shape. Fig. 76 exemplarily depicts that the dynamic hole 3212 has an edge including variable speed rail design consisting of arc lines 3212a and straight lines 3212b. Therefore, the rotation of the rotatable structure 331a can be controlled by determining the shape of the dynamic hole 3212 so as to change the rotational speed of the rotatable blade 321. In this embodiment, the dynamic hole 3212 results in a faster counterclockwise rotation of the rotatable structure 331a than the clockwise rotation thereof, such that a speed for forming a small light passing aperture OP is larger than that for forming a large light passing aperture OP.

## 15th Embodiment

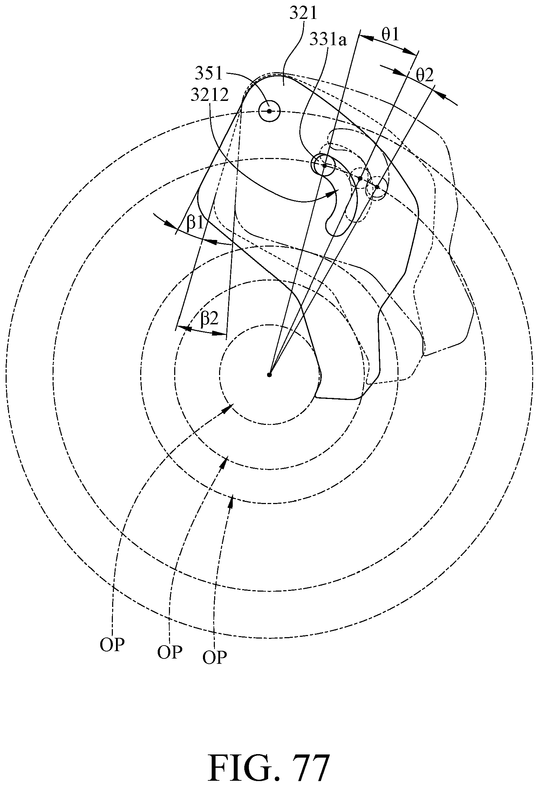

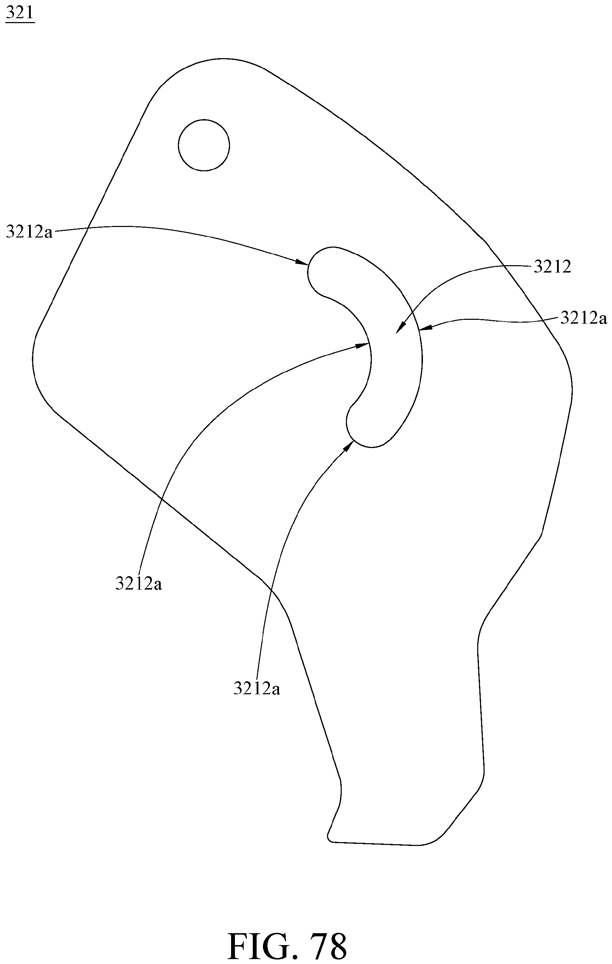

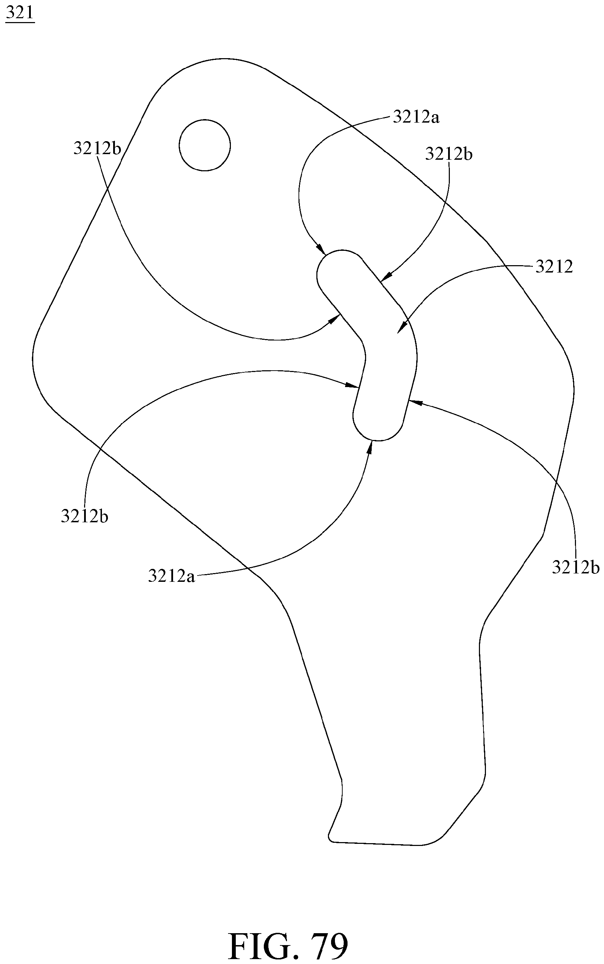

Fig. 77 is a schematic view of rotation of a blade assembly of an optical lens module according to the 15th embodiment of the present disclosure. Fig. 78 is a schematic view of a rotatable blade in Fig. 77. Fig. 79 is a schematic view of another implementation of the rotatable blade in Fig. 77. In the 15th embodiment, an optical lens module is provided, and the optical lens module is similar to the optical lens module 1 in the 1st embodiment. Accordingly, only the differences therebetween are described hereafter, and the following descriptions may be incorporated with some other components for easy understanding.

The rotatable blade 321 of the optical lens module can be rotated by a rotatable element of a driving component with a corresponding positioning structure 351 of a positioning element as a rotation axis. The rotatable element rotates to change the position of the rotatable structure 331a in a corresponding dynamic hole 3212.

The dynamic hole 3212 extends in a major axial direction of the rotatable blade 321 and has a concave side opposite to the positioning structure 351. Based on different positions of the rotatable structure 331a in the corresponding dynamic hole 3212, the light passing aperture OP formed by the rotatable blades 321 can have different sizes. The rotatable structures 331a can rotate clockwise, such that the rotatable blades 321 can encircle to form a light passing aperture OP with the maximum size. The rotatable structures 331a can rotate counterclockwise, such that the rotatable blades 321 can encircle to form a light passing aperture OP with the minimum size.

When the light passing aperture OP has the minimum size, the rotatable blade 321 is at a first position. When the light passing aperture OP has a middle size, the rotatable blade 321 is at a third position. When the light passing aperture OP has the maximum size, the rotatable blade 321 is at a second position.

Since the rotatable element 331 rotates by an angle $\theta 1$ about a center of the light passing aperture OP, the rotatable blade 321 moves from the first position to the third position, and the rotatable blade 321 rotates by an angle $\beta 1$ with respect to the positioning structure 351. Herein, the angle $\theta 1$ is 10.0 degrees, and the angle $\beta 1$ is 10.5 degrees.

Since the rotatable element 331 rotates by an angle $\theta 2$ about the center of the light passing aperture OP, the rotatable blade 321 moves from the third position to the second positon, and the rotatable blade 321 rotates by an angle $\beta 2$ with respect to the positioning structure 351. Herein, the angle $\theta 2$ is 5.0 degrees, and the angle $\beta 2$ is 12.7 degrees.

Fig. 78 exemplarily depicts that the dynamic hole 3212 of the rotatable blade 321 has an edge including variable speed rail design consisting of arc lines 3212a, while the dynamic hole 3212 of the rotatable blade 321 can have a different shape. Fig. 79 exemplarily depicts that the dynamic hole 3212 has an edge including variable speed rail design consisting of arc lines 3212a and straight lines 3212b. Therefore, the rotation of the rotatable structure 331a can be controlled by determining the shape of the dynamic hole 3212 so as to change the rotational speed of the rotatable blade 321. In this embodiment, the dynamic hole 3212 results in a slower counterclockwise rotation of the rotatable structure 331a than the clockwise rotation thereof, such that a speed for forming a small light passing aperture OP is smaller than that for forming a large light passing aperture OP.

## 16th Embodiment

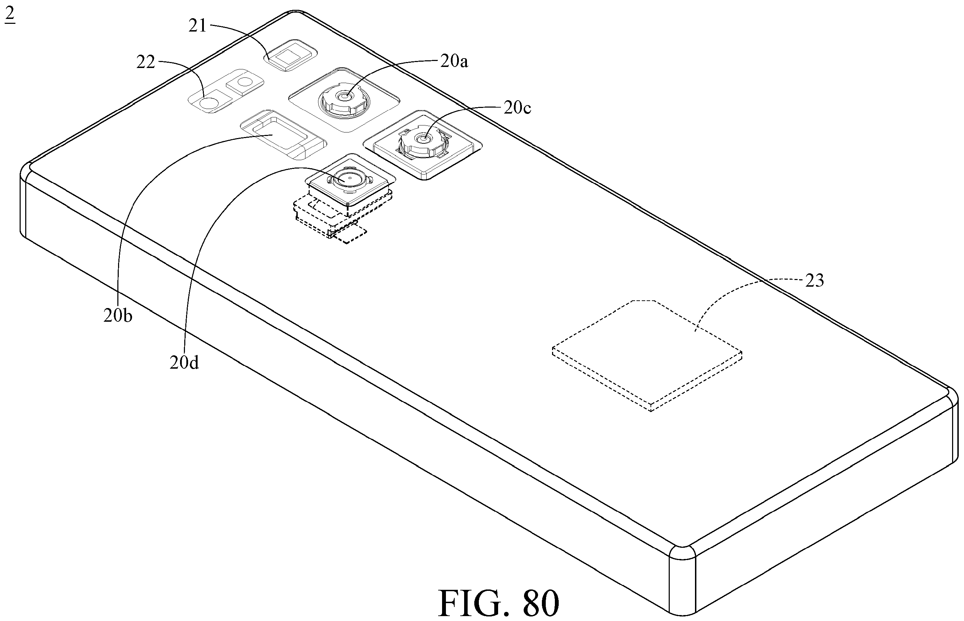

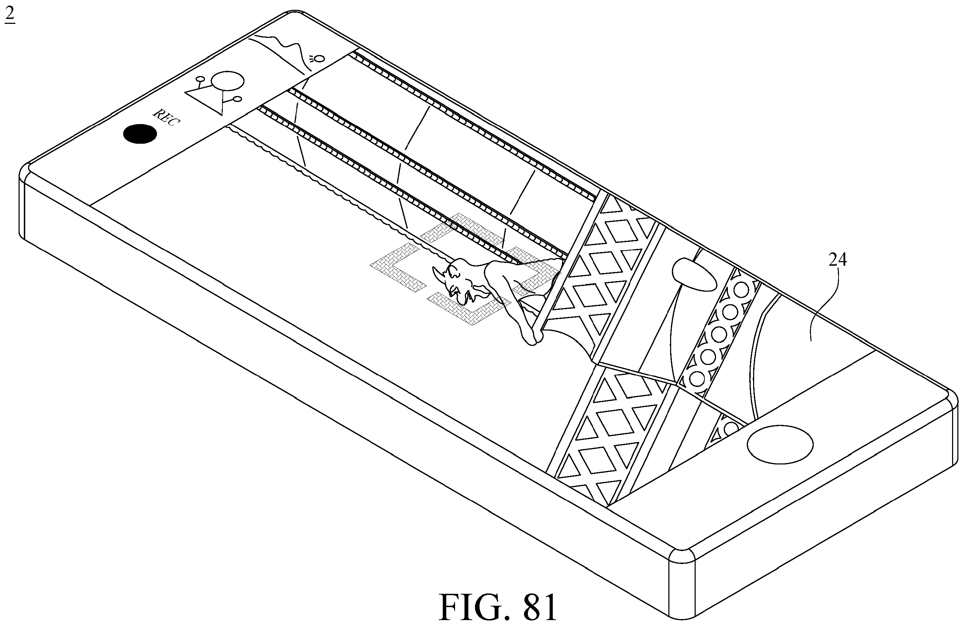

Please refer to Fig. 80 and Fig. 81. Fig. 80 is one perspective view of an electronic device according to the 16th embodiment of the present disclosure, and Fig. 81 is another perspective view of the electronic device in Fig. 80.

In this embodiment, an electronic device 2 is a mobile device such as a computer, a smartphone, a smart wearable device, a camera drone, a driving recorder and displayer, and the present disclosure is not limited thereto. The electronic device 2 includes a plurality of camera modules, a flash module 21, a focus assist module 22, an image signal processor 23, a display module 24 and an image software processor (not shown).

The camera modules include a high pixel camera module 20a, a telephoto camera module 20b, an ultra-wide-angle camera module 20c and a telephoto camera module 20d. The high pixel camera module 20a includes the optical lens module 1 disclosed in the 1st embodiment. According to different aperture stops (sizes of the light passing aperture) provided by the adjustable aperture module of the optical lens module 1, the high pixel camera module 20a has an ultra-wide-angle mode (also called shooting mode) with large aperture, a high-resolution mode with middle aperture, and a telephoto mode (also called ambient light mode) with small aperture. The present disclosure is not limited to the arrangement of modes and sizes of the aperture stop.

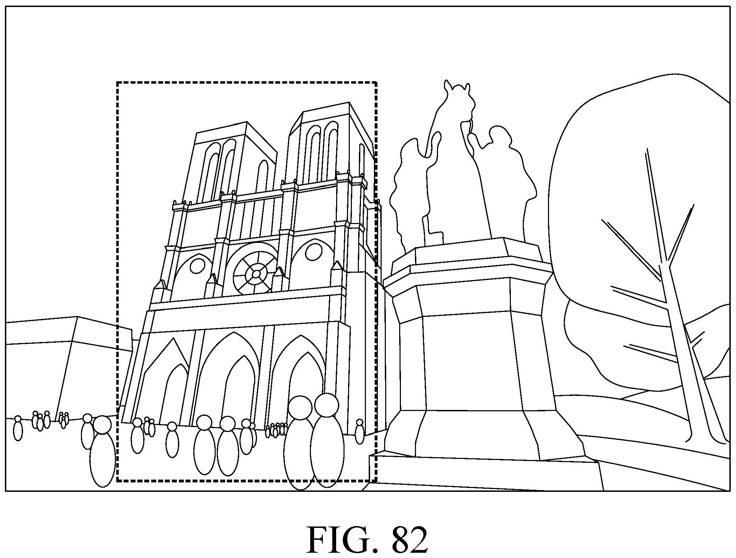

The high pixel camera module 20a at the ultra-wide-angle mode as well as the ultra-wide-angle camera module 20c can capture an image enjoying a feature of multiple imaged objects. Fig. 82 is a schematic view of capturing an image in an ultra-wide-angle mode.

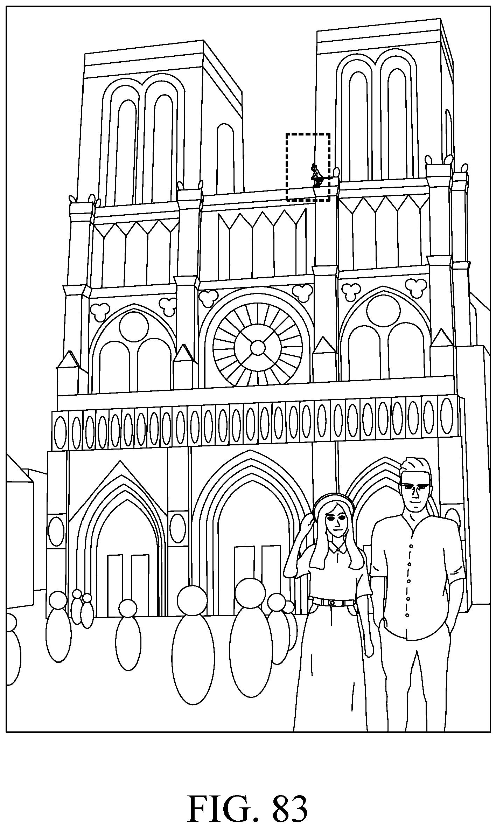

The high pixel camera module 20a at the high-resolution mode can capture an image enjoying a feature of high resolution and less distortion, and the high pixel camera module 20a can capture part of the image in Fig. 82. Fig. 83 is a schematic view of capturing an image in a high-resolution mode.

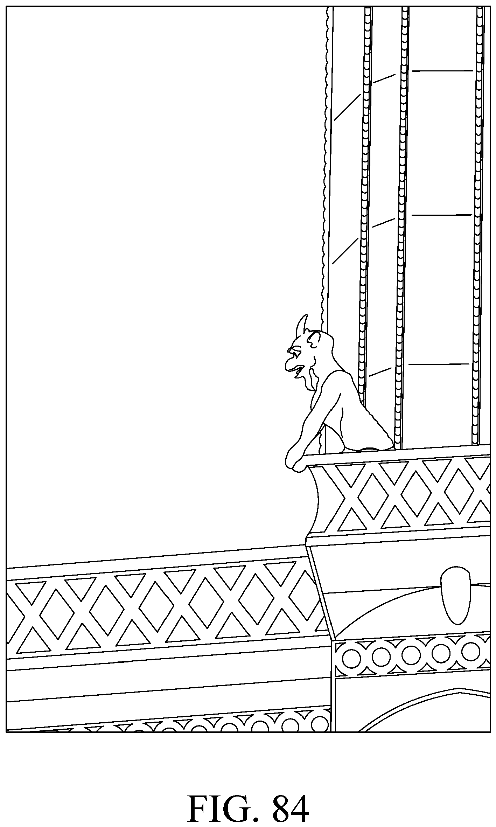

The high pixel camera module 20a at the telephoto mode as well as the telephoto camera modules 20b, 20d can capture an image enjoying a feature of high optical magnification, and the high pixel camera module 20a as well as the telephoto camera modules 20b, 20d can capture part of the image in FIG. 83. Fig. 84 is a schematic view of capturing an image in a telephoto mode.

When a user captures images of an object, the light rays converge in the high pixel camera module 20a, the telephoto camera module 20b, the ultra-wide-angle camera module 20c or the telephoto camera module 20d to generate images, and the flash module 21 is activated for light supplement. The focus assist module 22 detects the object distance of the imaged object to achieve fast auto focusing. The image signal processor 23 is configured to optimize the captured image to improve image quality and provided zooming function. The focus assist module 22 can emit infrared light or laser to achieve fast auto focusing. The display module 24 can include a touch screen, and the user is able to interact with the display module 24 to adjust the angle of view and switch between different camera modules, and the image software processor having multiple functions to capture images and complete image processing. Alternatively, the user may capture images via a physical button. The image processed by the image software processor can be displayed on the display module 24.

### 17th embodiment

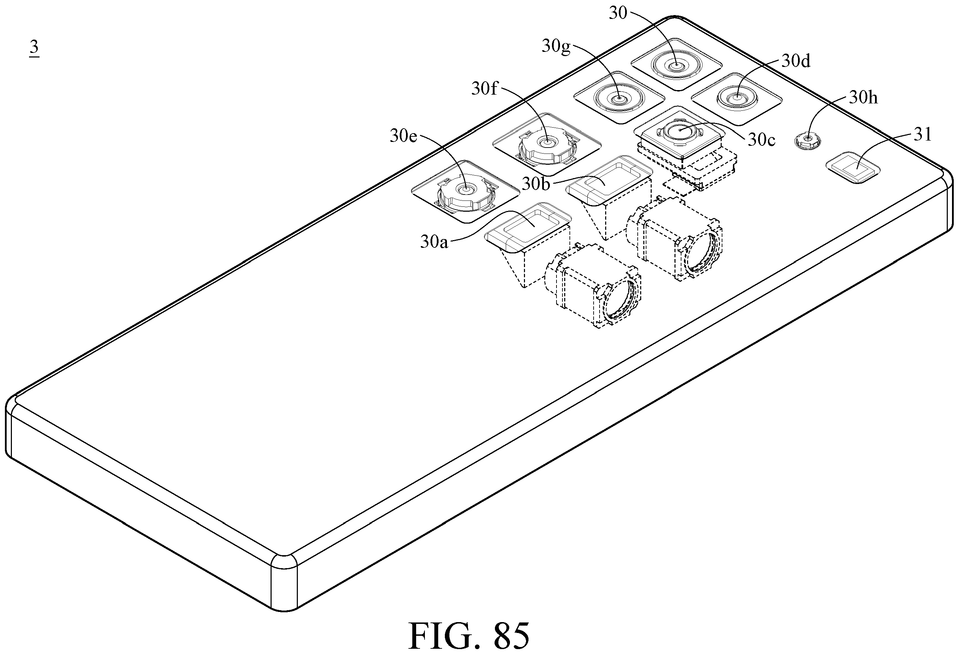

Please refer to Fig. 85, which is one perspective view of an electronic device according to the 17th embodiment of the present disclosure.

In this embodiment, an electronic device 3 is a smartphone including a camera module 30, a camera module 30a, a camera module 30b, a camera module 30c, a camera module 30d, a camera module 30e, a camera module 30f, a camera module 30g, a camera module 30h, a flash module 31, an image signal processor, a display module and an image software processor (not shown). The camera modules 30, 30a, 30b, 30c, 30d, 30e, 30f, 30g and 30h are disposed on the same side of the electronic device 3, while the display module is disposed on the opposite side of the electronic device 3. The camera module 30 is an ultra-wide-angle camera module, the camera module 30a is a telephoto camera module, the camera module 30b is a telephoto camera module, the camera module 30c is a telephoto camera module, the camera module 30d is a telephoto camera module, the camera module 30e is a wide-angle camera module, the camera module 30f is an ultra-wide-angle camera module, the camera module 30g is an ultra-wide-angle camera module, and the camera module 30h is a ToF (time of flight) camera module. In this embodiment, the camera modules 30, 30a, 30b, 30c, 30d, 30e, 30f and 30g have different fields of view, such that the electronic device 3 can have various magnification ratios so as to meet the requirement of optical zoom functionality. In addition, the camera modules 30a and 30b are telephoto cameras having a light-folding element configuration. In addition, the camera module 30h can determine depth information of the imaged object. In this embodiment, the electronic device 3 includes a plurality of camera modules 30, 30a, 30b, 30c, 30d, 30e, 30f, 30g and 30h, but the present disclosure is not limited to the number and arrangement of camera modules. When a user captures images of an object, the light rays converge in the camera modules 30, 30a, 30b, 30c, 30d, 30e, 30f, 30g or 30h to generate an image(s), and the flash module 31 is activated for light supplement. Further, the subsequent processes are performed in a manner similar to the abovementioned embodiments, so the details in this regard will not be provided again.

### 18th embodiment

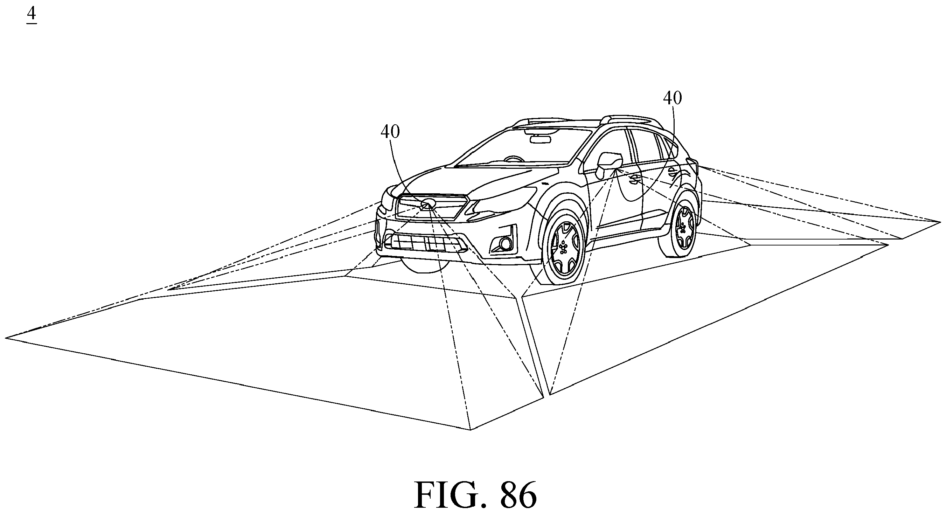

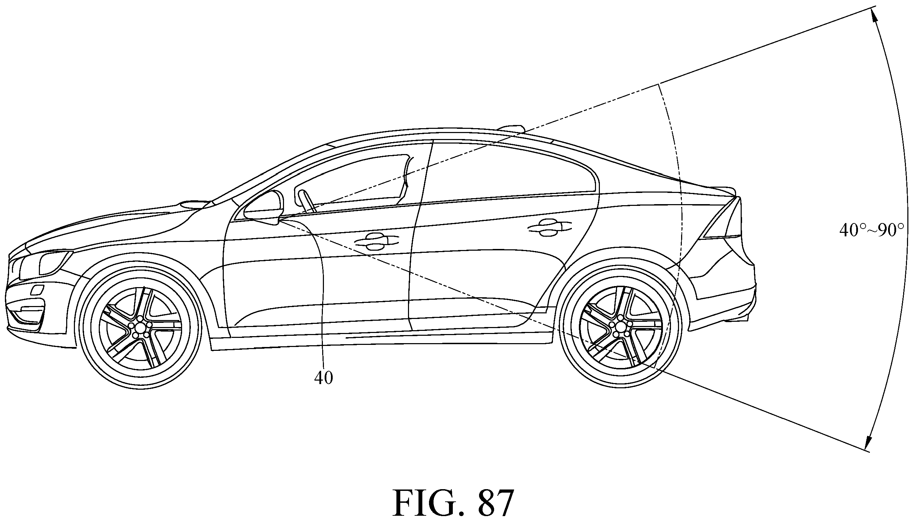

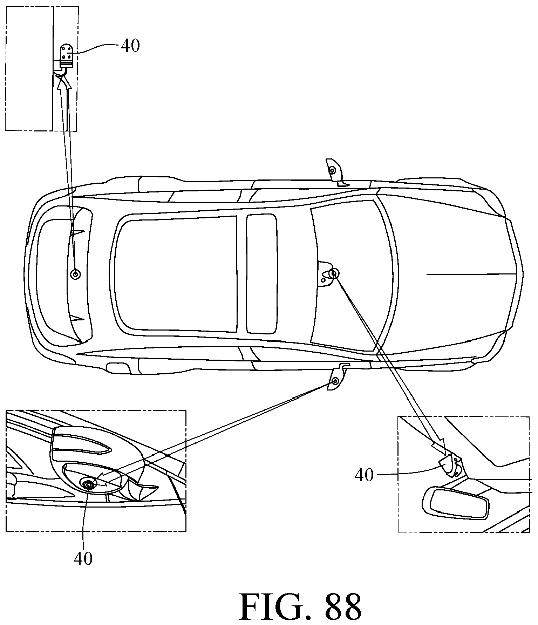

Please refer to Fig. 86 through Fig. 88. Fig. 86 is a perspective view of an electronic device according to the 18th embodiment of the present disclosure, Fig. 87 is a side view of the electronic device in Fig. 86, and Fig. 88 is a top view of the electronic device in Fig. 86.

In this embodiment, the electronic device 4 is an automobile. The electronic device 4 includes a plurality of automotive camera modules 40, and the camera modules 40, for example, each includes the optical lens module 1 disclosed in the 1st embodiment. The camera modules 40 can be served as, for example, panoramic view car cameras, dashboard cameras and vehicle backup cameras.

As shown in Fig. 86, the camera modules 40 are, for example, respectively disposed on different sides of the automobile to capture peripheral images of the automobile. The camera module 40 is favorable for recognizing road conditions outside the automobile so as to enable advanced driver assistance. Moreover, the camera module 40 can provide an image of a driver's blind spots by combining images into a panoramic view using an image software processor. The panoramic view is for the driver's checking every corner surrounding the automobile, thereby favorable for parking and driving.

As shown in Fig. 87, the camera modules 40 are, for example, respectively disposed on the lower portions of the left and right side mirrors. A maximum field of view of the camera module 40 can be 40 degrees to 90 degrees for capturing images in regions on left and right lanes.

As shown in Fig. 88, the camera modules 40 can also be, for example, respectively disposed inside the left, right side mirrors and the front and rear windshields for providing external information to the driver, and also providing more viewing angles so as to reduce blind spots, thereby improving driving safety.

The smartphone, the panoramic view car camera, the dashboard camera and the vehicle backup camera in these embodiments are only exemplary for showing the optical lens module of the present disclosure installed in an electronic device, and the present disclosure is not limited thereto. The optical lens module can be optionally applied to optical systems with a movable focus. Furthermore, the optical lens module features good capability in aberration corrections and high image quality, and can be applied to 3D (three-dimensional) image capturing applications, in products such as digital cameras, mobile devices, digital tablets, smart televisions, network surveillance devices, multi-camera devices, image recognition systems, motion sensing input devices, wearable devices and other electronic imaging devices.

The foregoing description, for the purpose of explanation, has been described with reference to specific embodiments. It is to be noted that the present disclosure shows different data of the different embodiments; however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

## Claims

1. An optical lens module (1), comprising:

    at least one lens element (20) having an optical axis (OA); and
    an adjustable aperture module (30) disposed at an object side of the at least one lens element (20), and the adjustable aperture module (30) comprising:

        a blade assembly (320) comprising a plurality of rotatable blades (321), wherein the plurality of rotatable blades (321) are rotatably disposed around the optical axis (OA) so as to form a light passing aperture (OP), each of the plurality of rotatable blades (321) comprises a rotatable portion (321a) and a light blocking portion (321b), the rotatable portion (321a) is adjacent to the light blocking portion (321b), the light blocking portion (321b) extends and tapers in a direction away from the rotatable portion (321a), the rotatable portion (321a) has a positioning hole (3211) and a dynamic hole (3212), the positioning hole (3211) enables rotation of the corresponding rotatable blade (321) with respect to the positioning hole (3211), and the dynamic hole (3212) is disposed close to the positioning hole (3211); and
        a driving component (330) comprising a rotatable element (331), wherein the rotatable element (331) is disposed corresponding to the dynamic holes (3212) of the plurality of rotatable blades (321) so as to rotate the plurality of rotatable blades (321) to thereby vary a size of the light passing aperture (OP);

    wherein, the light blocking portion (321b) of each of the plurality of rotatable blades (321) comprises a protruding segment (3213), the protruding segment (3213) extends and tapers toward the light passing aperture (OP), a maximum height of the protruding segment (3213) is h0, and the following condition is satisfied:

$$0.08 \text{ mm} < h0 \leq 0.50 \text{ mm}.$$

2. The optical lens module (1) of claim 1, wherein each of the plurality of rotatable blades (321) comprises:

    an outer peripheral portion (321c), comprising a part of the rotatable portion (321a) and a part of the light blocking portion (321b); and
    an inner peripheral portion (321d), comprising another part of the rotatable portion (321a) and another part of the light blocking portion (321b), wherein the inner peripheral portion (321d) is closer to the optical axis (OA) than the outer peripheral portion (321c), and the inner peripheral portion (321d) comprises the protruding segment (3213) of the light blocking portion (321b).

3. The optical lens module (1) of claim 2, wherein the inner peripheral portion (321d) comprises a light blocking structure (3214), the light blocking structure (3214) comprises a plurality of protrusions (S), an average maximum height of the light blocking structure (3214) is h1, and the following condition is satisfied:

$$0.001 \text{ mm} \leq h1 \leq 0.050 \text{ mm}.$$

4. The optical lens module (1) of claim 3, wherein the protruding segment (3213) comprises the light blocking structure (3214).

5. The optical lens module (1) of claim 3, wherein the light blocking structure (3214) is integrally included in the corresponding rotatable blade (321).

**6.** The optical lens module (1) of claim 1, wherein the light blocking portion (321b) of each of the plurality of rotatable blades (321) comprises a plurality of protruding segments (3213), a number of the plurality of protruding segments (3213) is N, and the following condition is satisfied:

$$3 \leq N \leq 25.$$

**7.** The optical lens module (1) of claim 6, wherein the number of the plurality of protruding segments (3213) is N, and the following condition is satisfied:

$$3 \leq N \leq 15.$$

**8.** The optical lens module (1) of claim 1, wherein the rotatable element (331) of the driving component (330) comprises a plurality of rotatable structures (331a), the plurality of rotatable structures (331a) are respectively disposed corresponding to the plurality of rotatable blades (321), each of the plurality of rotatable structures (331a) is movable in the dynamic hole (3212) of the corresponding rotatable blade (321) so as to vary the size of the light passing aperture (OP).

**9.** The optical lens module (1) of claim 8, wherein the adjustable aperture module (30) further comprises: a positioning element (350) comprising a plurality of positioning structures (351), wherein the plurality of positioning structures (351) are respectively disposed corresponding to the positioning holes (3211) of the plurality of rotatable blades (321) so as to position the plurality of rotatable blades (321).

**10.** The optical lens module (1) of claim 9, wherein the driving component (330) further comprises:

a magnet (332); and
a coil (333) disposed corresponding to the magnet (332), and one of the magnet (332) and the coil (333) is disposed on the positioning element (350).

**11.** The optical lens module (1) of claim 10, wherein the driving component (330) further comprises: at least two bearing elements (334), disposed between the rotatable element (331) and the positioning element (350) in a direction parallel to the optical axis (OA).

**12.** The optical lens module (1) of claim 1, wherein a maximum field of view of the optical lens module (1) is FOV, and the following condition is satisfied:

$$50 \text{ degrees} \leq FOV \leq 105 \text{ degrees.}$$

**13.** An optical lens module (1), comprising:

at least one lens element (20) having an optical axis (OA); and
an adjustable aperture module (30) disposed at an object side of the at least one lens element (20), and the adjustable aperture module (30) comprising:

a blade assembly (320) comprising a plurality of rotatable blades (321), wherein the plurality of rotatable blades (321) are rotatably disposed around the optical axis (OA) so as to form a light passing aperture (OP), each of the plurality of rotatable blades (321) comprises a rotatable portion (321a) and a light blocking portion (321b), the rotatable portion (321a) is adjacent to the light blocking portion (321b), the light blocking portion (321b) extends and tapers in a direction away from the rotatable portion (321a), the rotatable portion (321a) has a positioning hole (3211) and a dynamic hole (3212), the positioning hole (3211) enables rotation of the corresponding rotatable blade (321) with respect to the positioning hole (3211), and the dynamic hole (3212) is disposed close to the positioning hole (3211);
a driving component (330) comprising a rotatable element (331), wherein the rotatable element (331) is disposed corresponding to the dynamic holes (3212) of the plurality of rotatable blades (321) so as to rotate the plurality of rotatable blades (321) to thereby vary a size of the light passing aperture (OP); and
a fixed aperture element (340) having a fixed aperture (341), wherein the fixed aperture element (340) is disposed corresponding to the plurality of rotatable blades (321), and the fixed aperture element (340) is disposed close to the blade assembly (320) and coaxial with the blade assembly (320);

wherein, the light blocking portion (321b) of each of the plurality of rotatable blades (321) comprises a protruding segment (3213), the protruding segment (3213) extends and tapers toward the light passing aperture (OP), a maximum height of the protruding segment (3213) is h0, and the following condition is satisfied:

$$0.08 \text{ mm} < h0 \leq 0.50 \text{ mm.}$$

**14.** The optical lens module (1) of claim 13, wherein a distance between the fixed aperture element (340) and the blade assembly (320) is h, and the following condition is satisfied:

$$0.002 \text{ mm} \leq h \leq 0.600 \text{ mm.}$$

**15.** The optical lens module (1) of claim 14, wherein the distance between the fixed aperture element (340) and the blade assembly (320) is h, and the following condition is satisfied:

$$0.002 \text{ mm} \leq h \leq 0.060 \text{ mm.}$$

**16.** The optical lens module (1) of claim 14, wherein each of the plurality of rotatable blades (321) comprises:

an outer peripheral portion (321c), comprising a part of the rotatable portion (321a) and a part of the light blocking portion (321b); and
an inner peripheral portion (321d), comprising another part of the rotatable portion (321a) and another part of the light blocking portion (321b), wherein the inner peripheral portion (321d) is closer to the optical axis (OA) than the outer peripheral portion (321c), and the inner peripheral portion (321d) comprises the protruding segment (3213) of the light blocking portion (321b).

**17.** The optical lens module (1) of claim 16, wherein the inner peripheral portion (321d) comprises a light blocking structure (3214), the light blocking structure (3214) comprises a plurality of protrusions (S), an average maximum height of the light blocking structure (3214) is h1, and the following condition is satisfied:

$$0.001 \text{ mm} \leq h1 \leq 0.050 \text{ mm.}$$

**18.** The optical lens module (1) of claim 17, wherein the protruding segment (3213) comprises the light blocking structure (3214).

**19.** The optical lens module (1) of claim 13, wherein the light blocking portion (321b) of each of the plurality of rotatable blades (321) comprises a plurality of protruding segments (3213), a number of the plurality of protruding segments (3213) is N, and the following condition is satisfied:

$$3 \leq N \leq 25.$$

**20.** The optical lens module (1) of claim 19, wherein the number of the plurality of protruding segments (3213) is N, and the following condition is satisfied:

$$3 \leq N \leq 15.$$

**21.** An optical lens module (1), comprising:

at least one lens element (20) having an optical axis (OA); and
an adjustable aperture module (30) disposed at an object side of the at least one lens element (20), and the adjustable aperture module (30) comprising:

a blade assembly (320) comprising a plurality of rotatable blades (321), wherein the plurality of rotatable blades (321) are rotatably disposed around the optical axis (OA) so as to form a light passing aperture (OP), each of the plurality of rotatable blades (321) comprises a rotatable portion (321a) and a light blocking portion (321b), the rotatable portion (321a) is adjacent to the light blocking portion (321b), the light blocking portion (321b) extends and tapers in a direction away from the rotatable portion (321a), the rotatable portion (321a) has a positioning hole (3211) and a dynamic hole (3212), the positioning hole (3211) enables rotation of the corresponding rotatable blade (321) with respect to the positioning hole (3211), and the dynamic hole (3212) is disposed close to the positioning hole (3211);
a driving component (330) comprising a rotatable element (331), wherein the rotatable element (331) is disposed corresponding to the dynamic holes (3212) of the plurality of rotatable blades (321) so as to rotate the plurality of rotatable blades (321) to thereby vary a size of the light passing aperture (OP); and
a fixed aperture element (340) having a fixed aperture (341), wherein the fixed aperture element (340) is disposed corresponding to the plurality of rotatable blades (321), and the fixed aperture element (340) is disposed close to the blade assembly (320) and coaxial with the blade assembly (320);

wherein, the light blocking portion (321b) of each of the plurality of rotatable blades (321) comprises at least three protruding segments (3213), each of the at least three protruding segments (3213) extends and tapers toward the light passing aperture (OP), an average maximum height of the at least three protruding segments (3213) of each of the plurality of rotatable blades (321) is h0, and the following condition is satisfied:

$$0.08 \text{ mm} < h0 \leq 0.50 \text{ mm}.$$

22. The optical lens module (1) of claim 21, wherein each of the plurality of rotatable blades (321) comprises:

an outer peripheral portion (321c), comprising a part of the rotatable portion (321a) and a part of the light blocking portion (321b); and an inner peripheral portion (321d), comprising another part of the rotatable portion (321a) and another part of the light blocking portion (321b), wherein the inner peripheral portion (321d) is closer to the optical axis (OA) than the outer peripheral portion (321c), and the inner peripheral portion (321d) comprises the at least three protruding segments (3213) of the light blocking portion (321b).

23. The optical lens module (1) of claim 22, wherein the inner peripheral portion (321d) comprises a light blocking structure (3214), the light blocking structure (3214) comprises a plurality of protrusions (S), an average maximum height of the light blocking structure (3214) is h1, and the following condition is satisfied:

$$0.001 \text{ mm} \leq h1 \leq 0.050 \text{ mm}.$$

24. The optical lens module (1) of claim 23, wherein the at least three protruding segments (3213) comprise the light blocking structure (3214).

25. The optical lens module (1) of claim 23, wherein the light blocking structure (3214) is integrally included in the corresponding rotatable blade (321).

26. The optical lens module (1) of claim 21, wherein a distance between the fixed aperture element (340) and the blade assembly (320) is h, and the following condition is satisfied:

$$0.002 \text{ mm} \leq h \leq 0.600 \text{ mm}.$$

27. The optical lens module (1) of claim 26, wherein the distance between the fixed aperture element (340) and the blade assembly (320) is h, and the following condition is satisfied:

$$0.002 \text{ mm} \leq h \leq 0.060 \text{ mm}.$$

28. The optical lens module (1) of claim 21, wherein a number of the at least three protruding segments (3213) of each of the plurality of rotatable blades (321) is N, and the following condition is satisfied:

$$3 \leq N \leq 25.$$

29. The optical lens module (1) of claim 21, wherein the number of the at least three protruding segments (3213) of each of the plurality of rotatable blades (321) is N, and the following condition is satisfied:

$$3 \leq N \leq 15.$$

30. The optical lens module (1) of claim 21, wherein an f-number of the optical lens module (1) is FNO, and the following condition is satisfied:

$$0.9 \leq FNO \leq 5.6.$$

31. An optical lens module (1), comprising:

at least one lens element (20) having an optical axis (OA); and an adjustable aperture module (30) disposed at an object side of the at least one lens element (20), and the adjustable aperture module (30) comprising: a blade assembly (320) comprising a plurality of rotatable blades (321), wherein the plurality of rotatable blades (321) are rotatably disposed around the optical axis (OA) so as to form a light passing aperture (OP), each of the plurality of rotatable blades (321) comprises a rotatable portion (321a) and a light blocking portion (321b), the rotatable portion (321a) is adjacent to the light blocking portion (321b), the light blocking portion (321b) extends and tapers in a direction away from the rotatable portion (321a), the rotatable portion (321a) has a positioning hole (3211) and a dynamic hole (3212), the positioning hole (3211) enables rotation of the corresponding rotatable blade (321) with respect to the positioning hole (3211), and the dynamic hole (3212) is disposed close to the positioning hole (3211); and a driving component (330) comprising a rotatable element (331), wherein the rotatable element (331) is disposed corresponding to the dynamic holes (3212) of the plurality of rotatable blades (321) so as to rotate the plurality of rotatable blades (321) to thereby vary a size of the light passing aperture (OP); and wherein, the light blocking portion (321b) of each of the plurality of rotatable blades (321) comprises at least three protruding segments (3213), each of the at least three protruding segments (3213) extends and tapers toward the light passing aperture (OP), an average maximum height of the at least three protruding segments (3213) of each of the plurality of rotatable blades (321) is h0, and the following condition is satisfied:

$$0.08 \text{ mm} < h0 \leq 0.50 \text{ mm.}$$

32. The optical lens module (1) of claim 31, wherein each of the plurality of rotatable blades (321) comprises:

an outer peripheral portion (321c), comprising a part of the rotatable portion (321a) and a part of the light blocking portion (321b); and
an inner peripheral portion (321d), comprising another part of the rotatable portion (321a) and another part of the light blocking portion (321b), wherein the inner peripheral portion (321d) is closer to the optical axis (OA) than the outer peripheral portion (321c), and the inner peripheral portion (321d) comprises the at least three protruding segments (3213) of the light blocking portion (321b).

33. The optical lens module (1) of claim 32, wherein the inner peripheral portion (321d) comprises a light blocking structure (3214), the light blocking structure (3214) comprises a plurality of protrusions (S), an average maximum height of the light blocking structure (3214) is h1, and the following condition is satisfied:

$$0.001 \text{ mm} \leq h1 \leq 0.050 \text{ mm.}$$

34. The optical lens module (1) of claim 32, wherein the at least three protruding segments (3213) comprise the light blocking structure (3214).

35. The optical lens module (1) of claim 31, wherein a number of the at least three protruding segments (3213) of each of the plurality of rotatable blades (321) is N, and the following condition is satisfied:

$$3 \leq N \leq 25.$$

36. The optical lens module (1) of claim 35, wherein the number of the at least three protruding segments (3213) of each of the plurality of rotatable blades (321) is N, and the following condition is satisfied:

$$3 \leq N \leq 15.$$

37. An electronic device, comprising:
the optical lens module (1) of claim 1.

FIG. 1

EP 4 455 779 A1

FIG. 2

FIG. 3

EP 4 455 779 A1

FIG. 4

FIG. 5

321

FIG. 6

321

FIG. 7

AA

321b(321d)

3213

h0

FIG. 8

FIG. 9

321 331a 3212 OP

FIG. 10

FIG. 11

FIG. 12

321

3212

FIG. 13

321

FIG. 14

<u>321</u>

FIG. 15

FIG. 16

FIG. 17

FIG. 18

FIG. 19

321

FIG. 20

321

FIG. 21

FIG. 22

321      331a
              3212

OP

FIG. 23

FIG. 24

FIG. 25

321

3211

321a

3212

3213

h0

321b

DD

FIG. 26

321

FIG. 27

FIG. 28

321    331a
3212

OP

FIG. 29

FIG. 30

FIG. 31

321

321a

3211

3212

321b

3213

h0

EE

FIG. 32

321

FIG. 33

FIG. 34

321    331a
       3212

OP

FIG. 35

321   331a   3212                    OP

# FIG. 36

FIG. 37

321

FIG. 38

321

FIG. 39

FF

321b(321d)

3213

h0

3213

FIG. 40

EP 4 455 779 A1

FIG. 41

62

FIG. 42

FIG. 43

321

FIG. 44

321

3211

3212

321c

321d

3213
3213

FIG. 45

FIG. 46

321    331a    3212    OP

FIG. 47

FIG. 48

FIG. 49

FIG. 50

321

FIG. 51

FIG. 52

321   331a   3212   OP

FIG. 53

FIG. 54

FIG. 55

321

FIG. 56

321

FIG. 57

FIG. 58

FIG. 59

FIG. 60

FIG. 61

FIG. 62

321

FIG. 63

321

FIG. 64

FIG. 65

321

FIG. 66

321

FIG. 67

FIG. 68

321

3212a

3212

3212a

3212a

3212a

FIG. 69

321

FIG. 70

FIG. 71

321

3212a

3212a

3212

3212a

3212a

FIG. 72

321

3212a

3212b

3212b

3212

3212b

3212a

3212b

FIG. 73

FIG. 74

321

3212a

3212

3212a

3212a

3212a

FIG. 75

321

FIG. 76

FIG. 77

321

FIG. 78

<u>321</u>

3212b

3212a

3212b

3212

3212b

3212a

3212b

# FIG. 79

FIG. 80

EP 4 455 779 A1

FIG. 81

EP 4 455 779 A1

FIG. 82

FIG. 83

FIG. 84

FIG. 85

EP 4 455 779 A1

4

40

40

FIG. 86

40°~90°

40

FIG. 87

FIG. 88

Europäisches
Patentamt

European
Patent Office

Office européen
des brevets

# EUROPEAN SEARCH REPORT

**Application Number**

EP 24 15 6326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 407 578 A (NINGBO SUNNY OPTICAL TECH CO) 29 November 2022 (2022-11-29) | 1,2,8-12 | INV. G03B9/02 |
| Y | * abstract *<br>* figures 1, 4, 5, 6, 8 *<br>* paragraph [0061] * | 3-7,16,<br>22,32,37 | G02B5/00<br>G03B9/06 |
| X | US 2005/238348 A1 (OH EUI-KUEN [KR]) 27 October 2005 (2005-10-27)<br>* abstract *<br>* figures 1, 2, 4 *<br>* paragraphs [0062] - [0099] * | 1 | |
| X | CN 115 877 633 A (NINGBO SUNNY OPTICAL TECH CO) 31 March 2023 (2023-03-31) | 1,13-15,<br>30 | |
| Y | * abstract *<br>* figures 1-8 *<br>* paragraphs [0020] - [0080] * | 16-29,<br>31,33-37 | |
| Y | US 3 675 562 A (SANADA NORIAKI ET AL) 11 July 1972 (1972-07-11) | 3-7,<br>17-21,<br>23-29,<br>31-36 | |
| | * figure 3 *<br>* column 1 * | | TECHNICAL FIELDS SEARCHED (IPC)<br><br>G03B<br>G02B |
| Y | US 2007/154207 A1 (SAITO YASUNORI [JP] ET AL) 5 July 2007 (2007-07-05)<br>* figure 2 *<br>* paragraph [0044] * | 21,31 | |

- / - -

The present search report has been drawn up for all claims

| Place of search | Date of completion of the search | Examiner |
|---|---|---|
| Munich | 23 July 2024 | Seifter, Achim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 15 6326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GEORGE NICHOLAS ET AL: "Diffraction by serrated apertures", JOURNAL OF THE OPTICAL SOCIETY OF AMERICA, vol. 70, no. 1, 1 January 1980 (1980-01-01), page 6, XP093187068, US ISSN: 0030-3941, DOI: 10.1364/JOSA.70.000006 * the whole document * | 1-35 | |

TECHNICAL FIELDS
SEARCHED      (IPC)

The present search report has been drawn up for all claims

| Place of search | Date of completion of the search | Examiner |
|---|---|---|
| Munich | 23 July 2024 | Seifter, Achim |

EPO FORM 1503 03.82 (P04C01)

page 2 of 2

## ANNEX TO THE EUROPEAN SEARCH REPORT
## ON EUROPEAN PATENT APPLICATION NO.

EP 24 15 6326

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2024

| Patent document cited in search report | | Publication date | Patent family member(s) | | Publication date |
|---|---|---|---|---|---|
| CN 115407578 | A | 29-11-2022 | NONE | | |
| US 2005238348 | A1 | 27-10-2005 | CN | 1690830 A | 02-11-2005 |
| | | | EP | 1589371 A1 | 26-10-2005 |
| | | | JP | 4279267 B2 | 17-06-2009 |
| | | | JP | 2005309444 A | 04-11-2005 |
| | | | KR | 20050102842 A | 27-10-2005 |
| | | | US | 2005238348 A1 | 27-10-2005 |
| CN 115877633 | A | 31-03-2023 | NONE | | |
| US 3675562 | A | 11-07-1972 | NONE | | |
| US 2007154207 | A1 | 05-07-2007 | CN | 101008763 A | 01-08-2007 |
| | | | JP | 4818721 B2 | 16-11-2011 |
| | | | JP | 2007178823 A | 12-07-2007 |
| | | | US | 2007154207 A1 | 05-07-2007 |

EPO FORM P0459

For more details about this annex : see Official Journal of the European Patent Office, No. 12/82